# EUROPEAN PATENT APPLICATION

(11) **EP 0 378 899 A2**
(43) Date of publication of application: **25.07.1990**
(21) Application number: 89310832.4
(22) Date of filing: 20.10.1989
(51) Int. Cl.: G06F 9/46, G06F 9/44

(54) **Operating environment for software using different data structures**

(30) Priority: 21.10.1988 US 260889; 21.10.1988 US 260946; 21.10.1988 US 260983; 06.02.1989 US 307313
(71) Applicant: A.C. Nielsen Company, Northbrook Illinois 60062 (US)
(72) Inventor: Hetherington, Alan, Lakewood California 90712 (US); Addison, Tim, Irving Texas 75063 (US)
(74) Representative: Beresford, Keith Denis Lewis

(57) **Abstract**

An Operating Environment at a level of software between the operating system level and the applications program level controls a user's interface with one or more concurrently executing applications programs. By forming a common data structure, the Operating Environment allows functions within the various applications programs to execute independently of the nature of the particular user interface. The common data structure, part of an aggregate applications program, arranges data so as to be concurrently accessible to the functions originating in the various applications programs. Conversely, the user interface remains substantially of the same character, regardless of the particular nature of the applications programs. Independence of the applications programs from particular input and output devices and batch data devices and formats is also enabled. High-level Batch Data System software modules are flexibly interconnectible with low-level, device-specific, format-specific modules. The flexible interconnectibility shields the user from the specifics of data storage formats, and easily accommodates new formats without changing high-level software. The Operating Environment supports means for defining and using a sophisticated family of macros, flexible display and data modification capabilities in either a text or a video simulation mode, and a flexible and useful system of formulas for defining object fields.

## Description

### BACKGROUND OF THE INVENTION

### 1. Field of the Invention

This invention relates to software systems operating at a level higher than operating systems, but at a level lower than applications programs. More specifically, the invention relates to Operating Environments in which a variety of applications programs of mutually differing data structures may be developed or concurrently be executed, and in which a variety of batch data devices may be employed or added. The invention further relates to a space management system advantageously utilizing the features of an Operating Environment.

### 2. Related Art

Computer programs and software systems of various levels are known in the art.

For example, programs such as spreadsheet programs are high-level programs. In addition to their high- level capabilities, they are capable of performing some of the lower-level functions commonly associated with software systems further from the applications level, such as the use of macros and automatically executed formulas. However, applications programs such as this are very specific to the application, and adaptation of the applications program to different I/O devices or different computers demanded extensive revision of the applications program code.

Individual application development systems such as DATAFLEX (from Data Access Corporation) allow flexibility at a lower level than the applications program level. DATAFLEX has a data structure which is flexible. That is, an "object" may have differing numbers and types of "fields" describing it, and the means by which different objects are linked may also be changed. However, DATAFLEX does not comprise a plurality of independently-developed applications programs. Furthermore, there is no graphical representation.

Other software systems, such as AUTOCAD (from Autodesk Corporation), are specifically designed for Computer-Aided Design applications. While specifically suited for presenting a visual display of a physical object, the specificity of its application prevents its flexibility in dealing with complex data structures or I/O devices.

Certain known systems provide for execution of plural applications programs in a nonconcurrent manner. One form of nonconcurrent program execution is referred to as "program swapping." Program swapping involves the alternating loading and execution of plural programs in sequence. Program swapping suffers the defect that no direct data link between the two programs is present, so that communication of data between the two programs is hindered. It therefore costs development time to coordinate the data transfers, as well as costing execution time during operation. Also, the user interface is usually different between programs.

Another means of executing plural applications programs is to execute them separately but pass information between the two programs by means of a process called Dynamic Data Exchange (from Microsoft, Inc., as part of its "WINDOWS" package). Dynamic Data Exchange suffers from the defect that the plurality of programs which communicate data from one to the other must be cognizant of the structure of the data which the recipient applications program must accept. The lack of flexibility which would be inherent in a common data structure causes development costs of additional applications programs to rise above the costs which would be expected if a common data structure were adopted. Even if a common data structure were adopted before the writing of any of the applications programs, this adoption of a given data structure would lead to a potentially crippling inflexibility as new requirements arose at a future time.

It is therefore desirable to have a software "platform" which various applications programs having mutually differing data structures may be executed concurrently without the necessity of adapting lower-level software to the different data structures.

Many software programs known in the art involve the transfer of blocks of information between CPU memory and disks. The format of information on the disks varied with the particular applications program. For example, spreadsheet files, database files, or ASCII files might be found on one or more disks.

Information from these differing files had to be accessed by batch data transfer software. Unfortunately, if a new device was added to the system, or if a new data format on an existing physical device were added, then the software module including both low-level and high-level specifications as to the transfer had to be modified. This necessity of modifying the batch data transfer software renders known systems inefficient and resistant to expansion.

The inflexibility and resistance to expansion is perhaps caused by the fact that the writers of the high-level code worked on the same software products for the same vendors as the writer of the low-level code. In addition, the applications which were envisioned by these software writers were thought to be limited in scope, so that the ability to easily add new external devices or formats was not designed in. Unfortunately, if a variety of applications programs were desired to access a growing variety of devices and formats, then the limitations inherent in known systems would impede the addition of improvements to existing features.

It is therefore desirable to have a batch data transfer scheme in which the addition of a new device or new external data format does not require the substantial revision of substantial segments of code.

"Space management" denotes a field in which (among other things) placement of objects in space is strategized in accordance with predetermined criteria. One specific example of space management is the optimum placement of an optimum quantity of chosen consumer items on supermarket shelves so as to ultimately maximize profit for the supermarket. The optimization of space utilization within a supermarket depends not only on the physical dimensions of the space within the supermarket, its floor plan, and physical fixture elements, but also on complicating factors such as differing delivery schedules for various products and differing demand for different products.

Computerized space management systems are known. For example, SPACEMAN II is a space management applications program from LOGISTICS DATA SYSTEMS, INC., of Irving, Texas. SPACEMAN II has been licensed to certain companies under conditions of strict confidentiality. It is representative of known applications programs that are written in computer coding (for example, the C programming language) and that are not readily adapted for customization or other changes. Usually, any customizations of the computer code require the potentially costly skills of a computer programmer. This added cost and inflexibility is undesirable, from a user's point of view.

It is desirable to have individuals knowledgeable in such areas as merchandising, distribution, marketing, retailing, floor planning and fixturing be able to work on the same space management system so that their expertise can be integrated. By working on the same system, without necessarily having to directly communicate with one another in their respective technical "languages", they can contribute their respective expertise to optimize the overall space management system.

Known applications programs generally deal with data files internal to the program. These may be separate ASCII readable data files for each set to be displayed on the screen. However, typically there is much common information among the data files. For example, the products may be the same.

There is a need for a single data base that could store all product information, for example, originating from the separate data files. A single data base makes it easier to change or update product information without having to modify each separate data set, as was a limitation in known systems. There is a need to be able to read in, update, merge and save data from different places with different logical rules and be selective about which fields to deal with.

In the field of space management systems, it is desirable to be able to facilitate development, modification, and/or integration of new features implemented in software modules originating from a variety of individuals in a variety of respective fields without requiring computer programming skills. It is further desirable to be able to customize and otherwise change the features of space management systems without having to employ individuals with the level of skill of a computer programmer.

### SUMMARY OF THE INVENTION

According to the present invention, an Operating Environment serves as a software platform on which applications programs of mutually differing data structures may be developed or concurrently executed, and independently of the particular I/O devices employed.

Another aspect of the present invention is its ability to flexibly display a variety of data structures (and particular data filling those structures) in a variety of selectable chart and graphic formats. Preferably, the particular data, and the data structures themselves, may be modified by the end user interactively, using either a "chart" or a "model" (graphic) display mode.

The present invention allows applications programs which may be separately developed to be concurrently executed, using a common data structure which is formed by an aggregation of the data structures of the individual applications programs. The aggregation process comprises a detection of any conflicts between the fields of the different applications programs. A subsequent conflict resolution forms common data structure so as to allow execution of an aggregate applications program. The aggregation may be performed either at the time the individual applications programs are loaded, or at run-time, or a combination of the two times.

This aggregate applications program executes more efficiently than the methods known in the art, which do not possess a common data structure whose data is concurrently accessible by functions from the various individual applications programs.

The present invention envisions a broad range of techniques of resolving conflict. The resolution of the conflicts allows the aggregation of fields in a variety of the features of the preferred embodiment. For instance, the common data structure resulting from the aggregation of individual data structures allows effective aggregation of chart and model displays; menus; keystroke definition, modification, and function; timed event lists; macros; input and output device capabilities; and batch data system functioning.

Conflicts between structures (or their respective fields) may be resolved in a wide variety of ways, for each of these features. For example, a conflict between two data structures may be resolved by choosing one over the other, or by modifying one slightly in accordance with the characteristics of the other. Alternatively, both of the conflicting portions of the data may survive the conflict resolution, with each being modified according to the characteristics of the other. Also, a new manifestation of the conflicting data structures may be formed, which is substantially different from the character of either of the two conflicting structures. Of course, the present invention envisions the ability to flag the conflict, suspend the aggregation process, and interact with a user so as to allow a chosen means of conflict resolution to be performed.

Another aspect of the present invention envisions the calling by plural applications programs of functions within the Operating Environment. The Operating Environment according to the present invention allows this function calling without the separate memory allocation for duplicate functions which is conventional in the art.

Still another aspect of the present invention envisions a Batch Data System in which a variety of high-level Batch Data Source ("BDS") software modules may be defined and modified independently of lower-level, device-specific Batch Data Type ("BDT") software modules. Any of a variety of the high-level BDS software modules define which data is to be transferred, and they communicate this data-filtering information to any of a variety of the low-level, device-specific BDT software modules. The flexible interconnectibility of any BDS to any BDT enables a broad variety of data transfers to and from a broad variety of external data stores. Thus, as new external devices are added to the system, the creation of a single BDT module averts the necessity of modifying the high-level module.

Still another aspect of the present invention envisions a software system in which the Batch Data System, which is capable of carrying out a variety of data transfers, may itself perform the loading, aggregation, and conflict-resolution process on a variety of mutually differing data structures from respective applications programs to form an aggregate data structure within an aggregate applications program.

Thus, various aspects of the present invention may be characterized as follows.

The invention contemplates a method for concurrently executing one or more applications programs, the applications programs having a variety of different data structures, the method comprising the steps of detecting the presence or absence of field conflicts between fields defined in data structures defined in the applications programs; resolving the conflicts in the event of their detected presence; aggregating the data structures defined in the various applications programs into a common data structure; and executing an aggregate applications program comprising the plurality of applications programs, the aggregate applications program using the common data structure so that data formed within the common data structure is concurrently accessible by functions from the one or more applications programs.

The invention also contemplates a system for concurrently executing one or more applications programs, the applications programs having a variety of different data structures, the system comprising a detector for detecting the presence or absence of field conflicts between fields defined in data structures defined in the applications programs; a resolver for resolving the conflicts in the event of their detected presence; an aggregator for aggregating the data structures defined in the various applications programs into a common data structure; and a processor for executing an aggregate applications program comprising the plurality of applications programs, the aggregate applications program using the common data structure so that data formed within the common data structure is concurrently accessible by functions from the one or more applications programs.

The invention also contemplates a method of loading a structure file defining objects, fields and links, using an activated one of a set of high-level BDS software modules flexibly interconnected with an activated one of a set of device-specific BDT software modules for interfacing with a chosen data store, the method comprising the steps of initializing a channel between the activated BDT software module and the chosen data store, the initialization performed substantially within the activated BDT software module; transferring the structure file from the chosen data store and CPU memory, in which control is passed iteratively between the activated BDS software module and the activated BDT software module; and closing the data channel between the BDT software module and the data store.

The invention also contemplates a system for loading a structure file from a data store defining objects, fields and links, the system comprising an activated one of a set of high-level BDS software modules flexibly interconnected with an activated one of a set of device-specific BDT software modules for interfacing with a chosen data store; an initializing module located substantially within the activated BDT software module for initializing a channel between the activated BDT software module and the chosen data store; transferring modules for transferring the structure file from the chosen data store and CPU memory, in which control is passed iteratively between the activated BDS software module and the activated BDT software module; and a closing module for closing the data channel between the BDT software module and the data store.

The invention also contemplates a system for transferring blocks of information to and from a variety of data stores of varying structure, the system comprising one or more high-level BDS software modules for specifying transfer characteristics; and one or more device-specific BDT software modules, each flexibly interconnectible with any of the BDS software modules, for interfacing to respective ones of the data stores.

The invention also contemplates a method of transferring a block of data using an activated one of a set of high-level BDS software modules flexibly interconnected with an activated one of a set of device-specific BDT software modules for interfacing with a chosen data store, the method comprising the steps of determining a transfer type; choosing which among the data stores is to be involved in the transfer; initializing a channel between the activated BDT software module and the chosen data store, the initialization performed substantially within the activated BDT software module; determining, based on specifications from the activated BDS software module, which objects and fields to transfer; transferring the data between the chosen data store and CPU memory, in which control is passed iteratively between the activated BDS software module and the activated BDT software module; and closing the data channel between the BDT software module and the data store.

Another aspect of the present invention is to provide an improved space management system. In accordance with a feature of the present invention, the space management system comprises an applications program and the Operating Environment. The applications program includes support files and a functions file. The Operating Environment includes features described elsewhere in this Summary of the Invention. In accordance with the invention, the space management system provides flexibility in terms of addition of new features, modification of existing features, and translation of known functions from other space management systems. This flexibility allows substantially independent development of a variety of software modules by individuals generally unfamiliar with computer programming. The space management system of the invention enables concurrent execution of a variety of other applications programs with the space management system.

### BRIEF DESCRIPTION OF THE DRAWINGS

The following detailed description may be better understood when read in conjunction with the accompanying drawings, in which like reference numerals refer to like elements throughout, and in which:
**FIG. 1** shows in very schematic form a diagram of an aggregate Applications Program formed by the Operating Environment according to the present invention in relation to other software systems of various levels, and with the I/O devices with which it communicates.
**FIG. 2** shows an exemplary data structure according to the preferred embodiment, including objects and the links therebetween.
**FIG. 3** shows in very schematic form a diagram of the means by which data structures from two or more applications programs are aggregated into an aggregate structure.
**FIG. 4A** shows a list chart typical of those produced by applications programs aggregated by the preferred embodiment of the present invention.
**FIG. 4B** shows a full-screen chart typical of those produced by applications programs aggregated by the preferred embodiment of the present invention.
**FIG. 4C** shows a menus defining list chart as may be enabled by the present invention.
**FIG. 4D** shows an exemplary list chart showing available output devices on an output device list.
**FIG. 5** shows a high level flow chart of the application loading process leading up to the parsing loop in an interactive session.
**FIG. 5A** is a flow chart detailing the structure loading process shown in **FIG. 5** as block **512**.
**FIG. 5B** is a flow chart detailing the input and output device driver loading process shown in **FIG. 5** as block **16**.
**FIG. 5C** is a flow chart detailing the BDT driver loading process indicated in **FIG. 5** as block **520**.
**FIG. 5D** is a flow chart detailing the viewer loading process shown in **FIG. 5** as block **524**.
**FIG. 5E** is a flow chart which shows the preferred embodiment's process of loading menus, keystroke lists, macros, and event lists shown in **FIG. 5** as block **528**.
**FIG. 5F** is a flow chart detailing the BDS loading process shown in **FIG. 5** as block **532**.
**FIG. 5G** shows the main parsing loop which is entered after the applications program loading process is complete and an interactive user session is begun.
**FIG. 6** shows a Keystroke List typical of those encountered in an aggregate applications program according to the preferred embodiment.
**FIG. 7** shows the relationships of the BDS's and BDT's of the batch data system with respect to CPU memory and external data sources.
**FIG. 8** shows an exemplary list chart detailing data sources in a BDS system for a typical applications program.
**FIG. 9** is a high-level flow chart showing the data transfers of the batch data system according to the preferred embodiment.
**FIG. 10** is a chart indicating the values of three flags for each of five transfer types useful in explaining the data transfers in the batch data system.
**FIG. 11** shows the batch data system data transfer in greater detail than **FIG. 9**.
**FIG. 11A** is a flow chart illustrating the "DATA WRITE" routine indicated as block **1156** in **FIG. 11**, according to the preferred embodiment.
**FIG. 11B** is a flow chart illustrating the "DATA READ" routine shown as block **1154** in **FIG. 11**, according to the preferred embodiment.

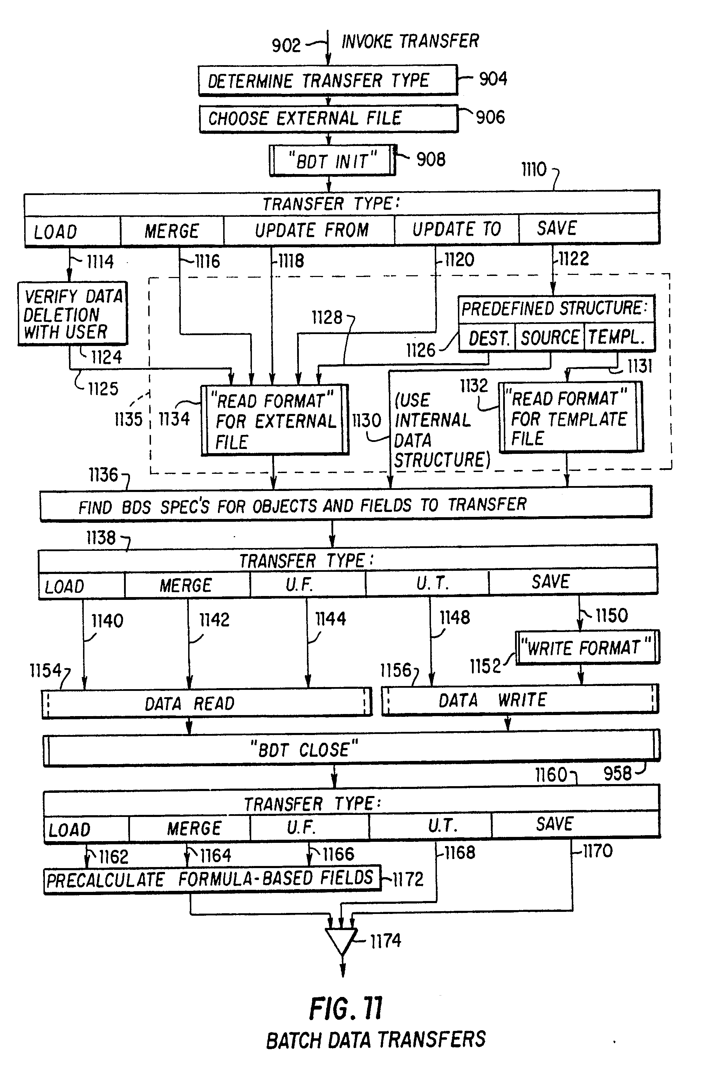

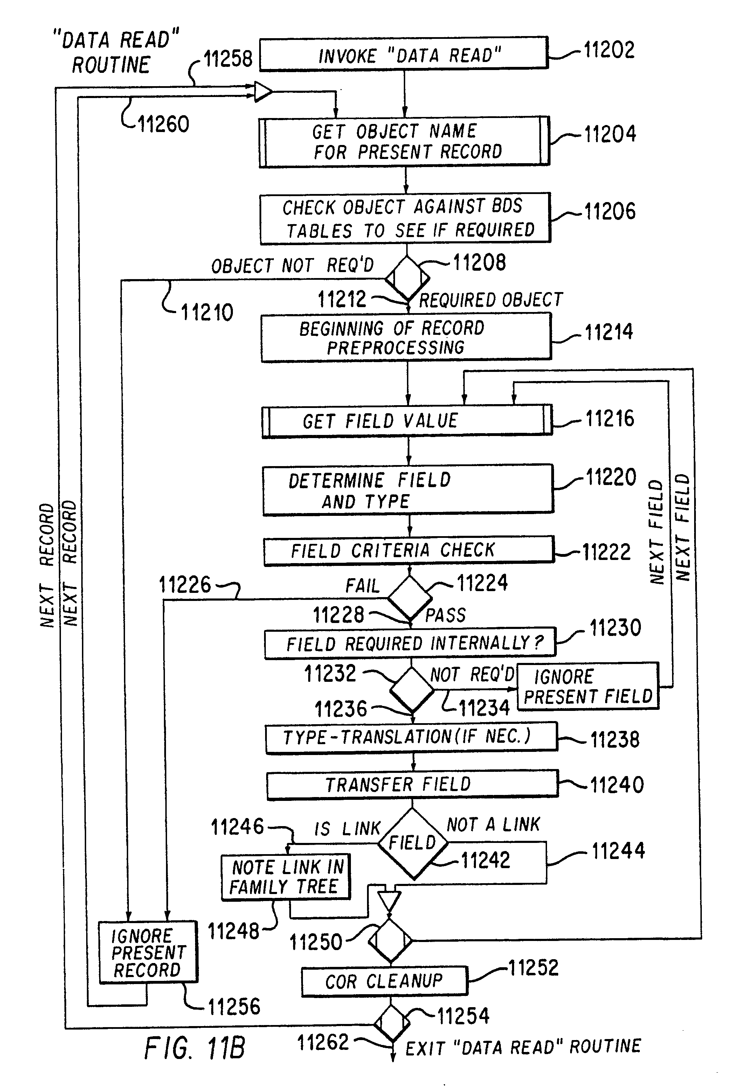

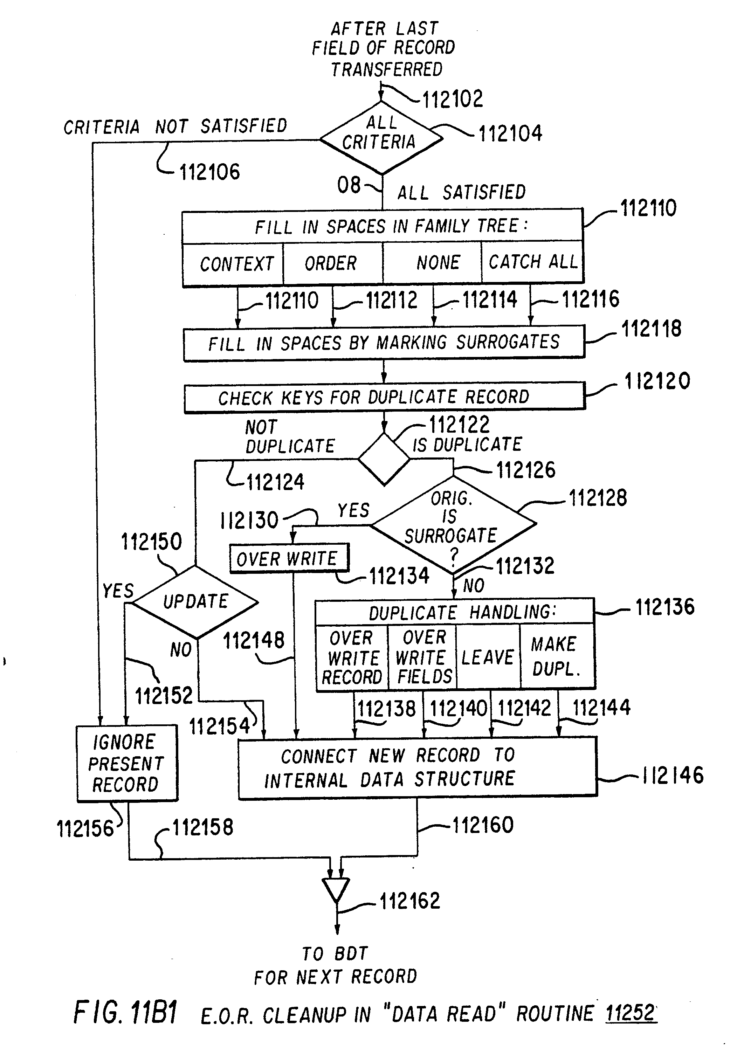

**FIG. 11B1** is a flow chart illustrating the end-of-record cleanup routine illustrated as block **11252** in **FIG. 11B** (BDS READ) according to the preferred embodiment.

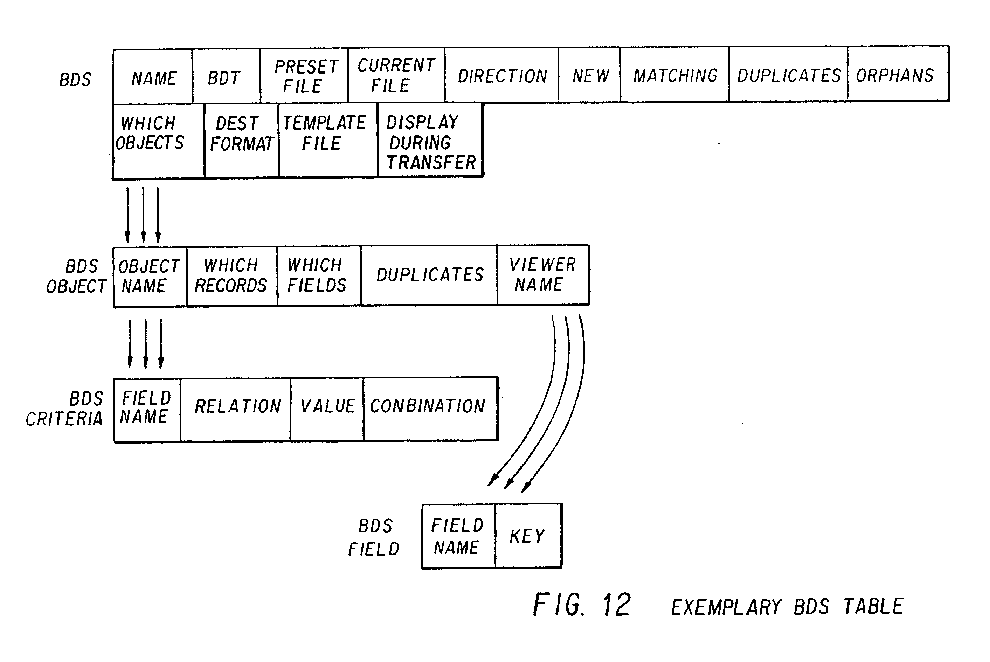

**FIG. 12** is a chart illustrating in schematic form the arrangement of a BDS Table of a type advantageously employed in the Batch Data System according to the preferred embodiment.

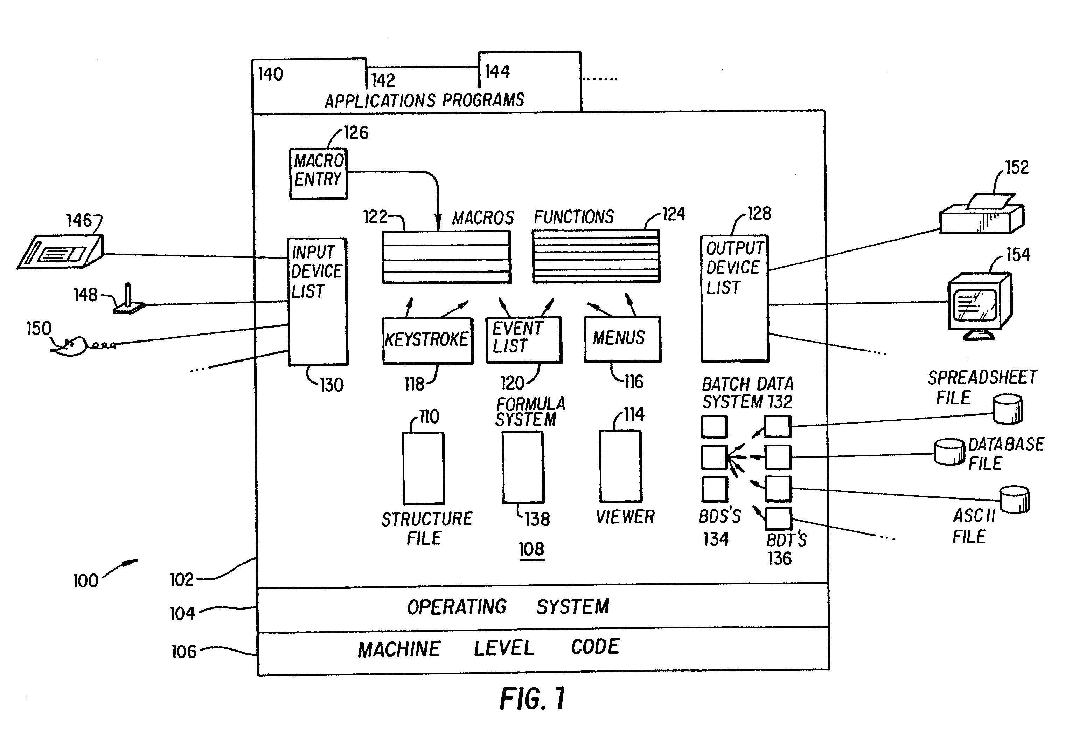

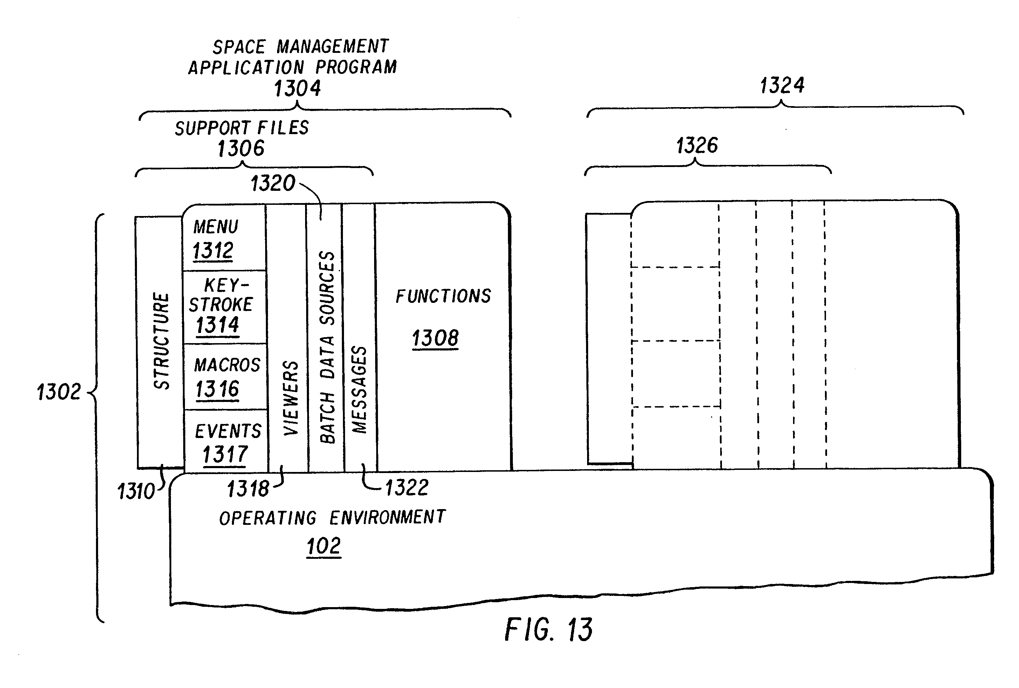

**FIG. 13** illustrates in very schematic form a preferred space management system **1302**, comprising a preferred space management applications program and the Operating Environment of **FIG. 1**, together with an additional applications program **1324** which may execute concurrently with the preferred space management system.

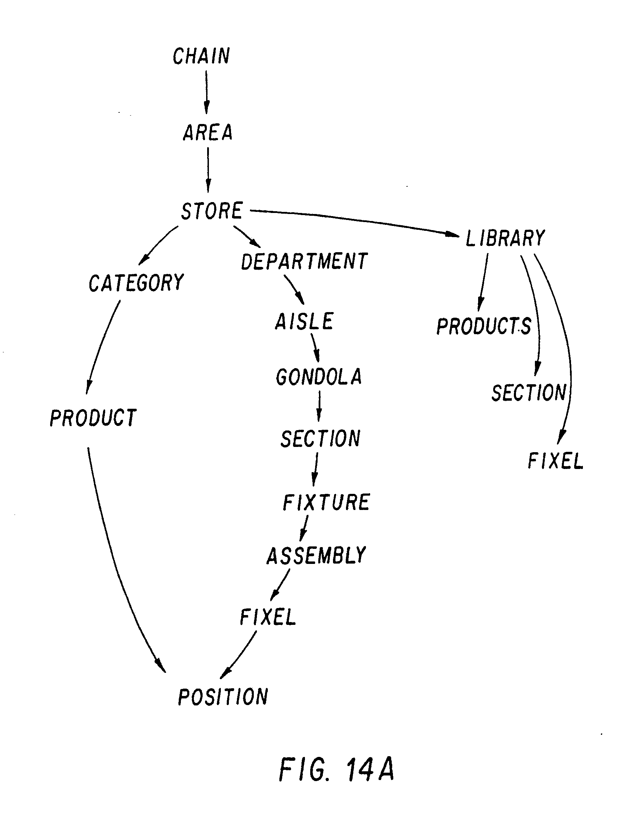

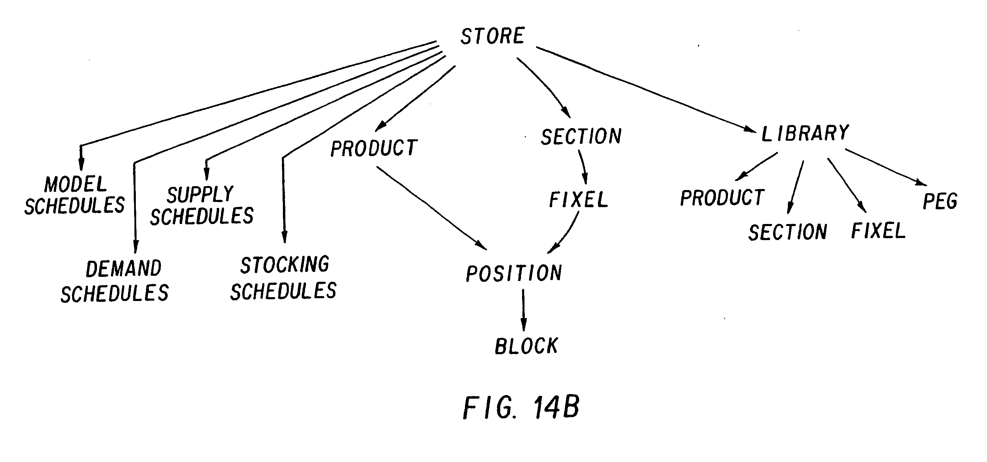

**FIGS. 14A** and **14B** illustrate, respectively, a more complex and a relatively simple data structure for the preferred space management system according to the present invention.

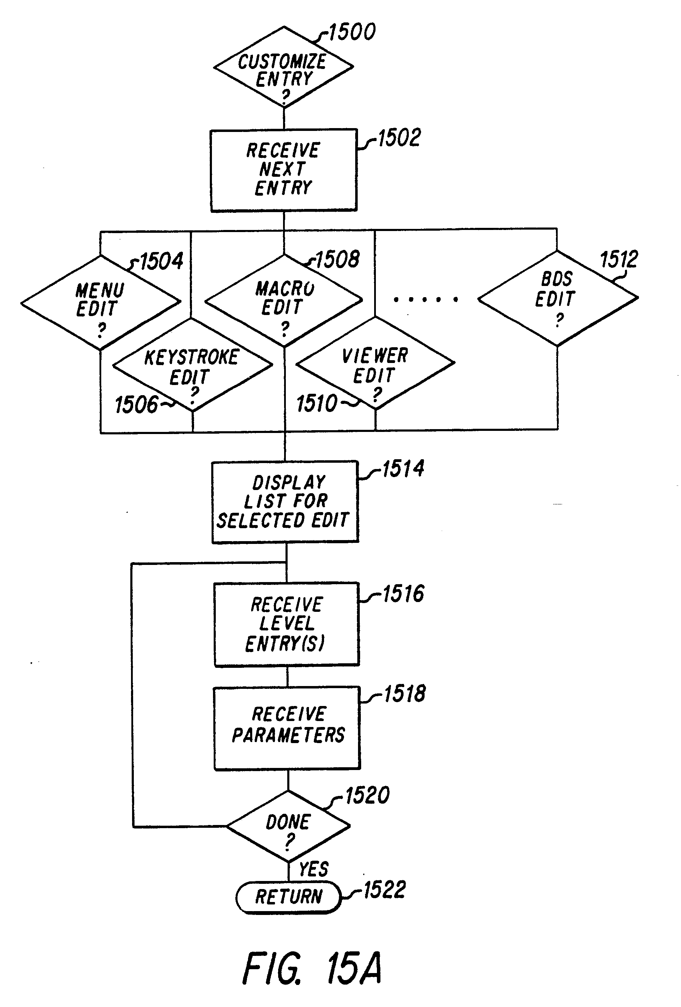

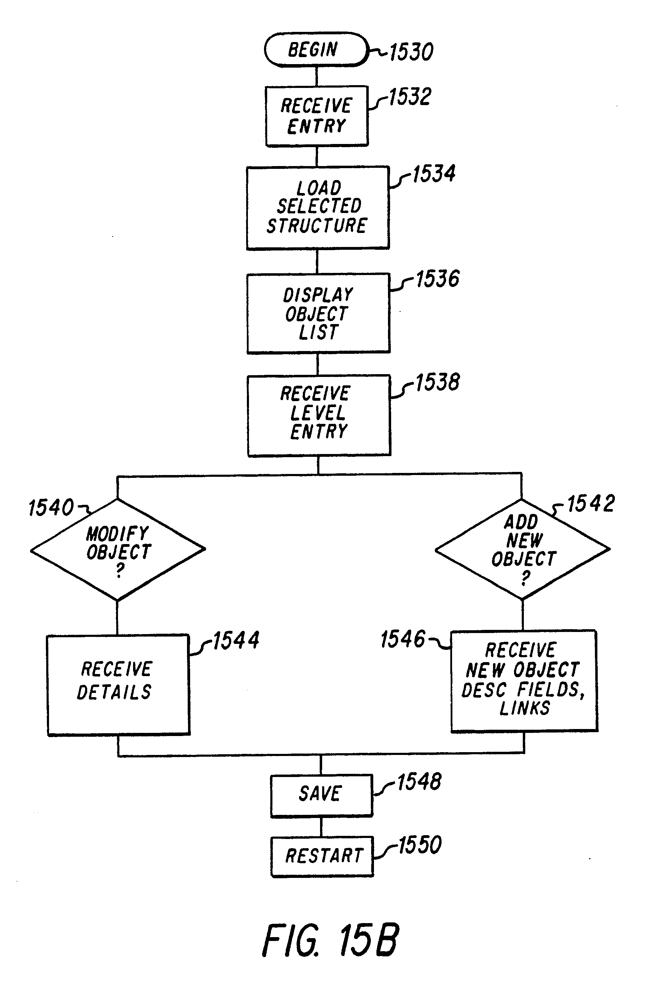

**FIGS. 15A** and **15B** are flow charts illustrating logical steps performed by the preferred space management system for customization operations.

### DETAILED DESCRIPTION OF THE PREFERRED EMBODIMENTS

### I. Introduction

The teachings of the present invention will be described with particular reference to presently preferred embodiments. These teachings are advantageously applied to the particular problem of a space management system for consumer products on supermarket shelves. However, it should be understood that this embodiment is only one example of the many advantageous uses of the innovative teachings herein.

In general, statements made in this specification do not necessarily delimit any of the various claimed inventions. Moreover, some statements may apply to some inventive features, but not to others.

As will be recognized by those skilled in the art, the innovative concepts described in the present application may be modified and varied over a wide range of applications. Thus, the scope of the invention is not limited except by the appended claims.

The preferred embodiment of the present invention involves a computer program written in the "C" programming language originally developed at Bell Laboratories. The Operating Environment according to the preferred embodiment operates atop the MS-DOS Operating System. The Operating Environment according to the preferred embodiment finds special utility in aggregating and allowing execution of applications programs such as those in the SPACEMAN family of space management programs, available from Logistics Data Systems, Inc., of Irving, Texas. Such preferred applications programs may be executed on an IBM PS/2 Model 80 computer with 70 megabytes storage on one disk drive. However, consonant with the dictates of the particular applications programs or pre-existing computer systems, the teachings of the present invention may be advantageously applied, regardless of the hardware or software environment.

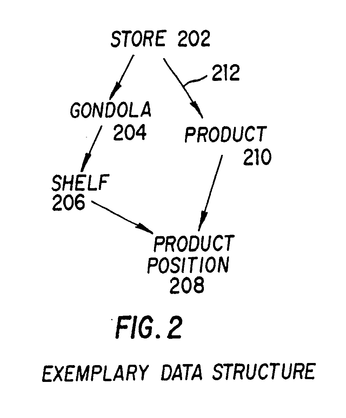

As used in the present specification, the term "structure" applies to any model of a hierarchical data system. Such a model includes "objects" connected to one another in a hierarchical fashion, with one or more "fields" associated with the object, for example, to define or describe the object. A particular non-limiting example of a data structure is found in **FIG. 2. FIG. 2** is described and referred to throughout this specification as an exemplary structure.

As used in the present specification, the term "structure file" implies any arrangement of data which defines a "structure." One non-limiting example of a structure file (used in a space management application) may be found in Appendix A. It is one aspect of the present invention that a structure file may be handled in much the same was as a data file corresponding to any other "feature" of an applications program.

A "record" refers to an actual individual occurrence of an object. For instance, when an applications program has an object "shelf", there may be a very large number of individual records which have the identifier "shelf." Thus, in some ways, the objects, the links defining the relationship between objects, and the fields defining or describing the objects, are in general abstract. However "records" refer to particular occurrences of an object. As described with special reference to the "structure file", objects, lengths, and fields may in some instances be treated as if they were simply another data file comprising records. In fact, such unitary treatment comprises one of the main advantages of the present invention.

As used in the present specification, the term "features" refers to any one of a number of capabilities of applications programs. "Features" which find special utilities in space management systems include viewers, menus, keystroke lists, event lists, macros, output device lists, input device lists, Batch Data System modules, and formula-based fields. Generally, although not necessarily exclusively, the term "features" refers to an attribute of an applications program which is of less central concern than that of "structures."

As used in the present specification, the term "applications program" (or, occasionally, "individual applications program") comprises one or more of the following elements:
(1) a definition of a "structure," as described above;
(2) The object code of functions capable of being executed on the computing apparatus; and
(3) files containing one or more of the following "features": viewers, menus, keystroke list, event list, macros, output device lists, input device lists, Batch Data System software, and formula-based fields.

As used in the present specification, the term "aggregate applications program" refers to the loaded and aggregated structures and features of individual applications programs. For instance, three mutually differing structures from three separately developed individual applications programs may be loaded and aggregated to form an "aggregate structure" within the aggregate applications program. Similarly, three mutually different menu systems from the three individual applications programs are loaded and aggregated into an aggregate menu system within the aggregate applications program. Of course, the interaction of the structures, functions and features originating from various individual applications programs ensures that the aggregate applications program is not a mere aggregation of elements from the various individual applications programs.

As used within the present specification, the term "concurrently executing" applies to the interleaved execution of functions which originated from more than one individual applications program. Once aggregated, the object code from the various individual applications programs can be thought of as functions of the aggregate applications program. As far as the user is concerned, however, the functions from the various individual applications programs are all immediately available, so that the sequential execution of functions from various individual applications programs appears to the user to be concurrent execution due to the potentially complex interaction of different functions.

### II. Overview of the Features of the Preferred Embodiments

Referring to **FIG. 1**, the Operating Environment according to the present invention produces aggregate application program features (preferably within CPU memory) in block **102**. The Operating Environment may be considered to be a software "platform" on which applications programs **140, 142, 144,** etc., may be developed, or concurrently be executed. The Operating Environment in turn sits upon a standard operating system **104** which (perhaps through levels of software not explicitly shown in **FIG. 1**) operates down to the machine-level code **106**.

**FIG. 1** is very schematic in nature, and is intended to introduce the reader to the major concepts and features of the invention. It should be understood that the scope of the present invention should not be limited by the description contained herein, but rather should be defined only in accordance with the claims which follow it. For example, it is understood that there may be substantial conceptual variation as to when the operating system **104** ends and the Operating Environment or its resultant aggregate applications program **102** begins. However, one of skill in the art, upon a reading of the claims in light of the following detailed description of the preferred embodiments, will be able to understand and assess the scope of the present invention, and recognize that modifications may be made away from the particular embodiments described herein, but still remain within the spirit and scope of the invention.

Elements indicated as elements **110** through **138** are indicated in block diagram form. Connections which are important to the explanation of the functioning of the Operating Environment are indicated by arrows and graphical proximity in **FIG. 1**, but the software elements within the Operating Environment may interact in ways which, if not explicitly recited in this detailed description, would be understood by one of skill in the art in light of the existing description. The "background" functions which would thus be understood are indicated as area **108**.

The preferred embodiment of the present invention uses applications programs directed to the interactive display and modification of video representations of physical objects on a video screen. Even more specifically, the invention is intended to be used in an environment where consumer products are to be displayed and selectively manipulated in a physical space simulating supermarket store shelving. A family of such interactive simulation programs, SPACEMAN (SPACE MANager) may be obtained from Logistics Data Systems, Inc., Irving, Texas. Of course, it is to be understood that the breadth and scope of the present invention extends far beyond the uses embodied therein.

The following subsections present a description of the preferred embodiment of the various software features **110-138** shown within the portion of CPU memory indicated at **102** (**FIG. 1**). In a later section, Implementation of the Preferred Embodiment, a description will be presented of a preferred process by which the preferred embodiment accomplishes the loading, aggregation and conflict resolution which results in a smoothly running aggregate applications program such as that illustrated in **FIG. 1**.

### A. Flexibility of Data Structures

The Operating Environment according to the present invention provides the ability to work with applications programs utilizing a variety of data structures. Any hierarchical data structure can be modeled using the preferred Operating Environment. A "hierarchical" data structure is defined as a data structure in which objects are linked in a one-to-one or one-to-many arrangement.

A set of objects and links characteristic of an applications program designed to simulate, for example, placement of consumer products on store shelving may be as follows. Referring to **FIG. 2**, an object "store" **202** may be linked downward via an "owner link" to the object "gondola" **204** which may be linked via another owner link to the object "shelf" **206**, which finally may be linked to the object "product position" **208**. At the same time, the object "store" **202** may be linked via an owner link **212** to the object "product" **210**, which may also be linked to the object "product position" **208**.

In the preferred embodiment, each link **212** may link a single object to plural other objects. That is, many object "products" **210** may be linked by link **212** to an object "store" **202**.

The data structure from particular applications programs is read in by the Operating Environment. The reading in of data structures based on the particular application allows significant flexibility not present in known systems. The conventional approach to data structure formation is mentally to adopt a certain data structure, and then write the programming code around it. This known method obviously suffered the defect that, to adapt to a new data structure, software had to be modified and recompiled.

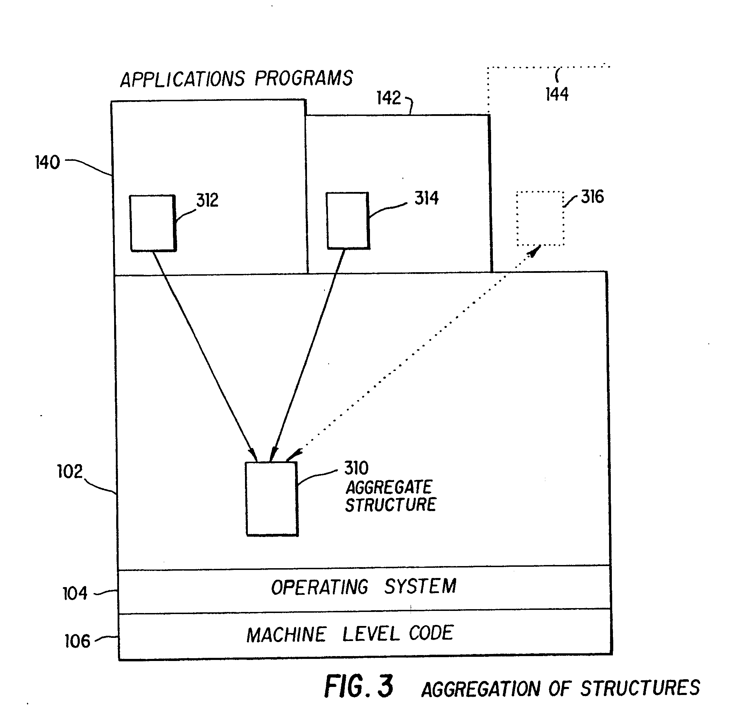

In the preferred embodiment, the data structure which the Operating Environment may use is found in structure files **312, 314, 316** and so forth (**FIG. 3**). The structure files contain only information relevant to the actual structures themselves (store, gondola, shelf, etc.), the nature of the attributes of each object (stored in "fields"), and the links which connect the objects.

The structure file is to be distinguished from a data file. A data file contains "records" of specific information relating to particular stores, gondolas, shelves, etc. The data in the records is advantageously arranged to be readily accessible in formats defined by the structure file.

According to the preferred embodiment, the data structures themselves (objects, fields, and links) such as that in **FIG. 2** may be conveniently modified by the end user, not merely the actual data within the records of the data file.

The data structures form the basis of other features of the invention, such as charts, models, and menus. The aggregation of the data structures of individual applications programs may be described as follows, with reference to **FIG. 3**.

In the preferred embodiment, let us first assume that applications program **140** has a first data structure (comprising definitions of objects, fields, and links) **312**, and that applications program **142** has a second data structure (comprising definitions of objects, fields, and links) **314**. The aggregate data structure would have objects, fields, and links indicated at **310**. During execution of the program which uses the aggregate data structure (within the "aggregate applications program" referred to in this specification), whenever features of the first applications program are invoked, the structures originating in **312** are used. Similarly, when the features of the second applications program are invoked, then the structures originating in **314** are employed. The invocation of **310**, reflecting the fields which are common to the two applications programs, demonstrates the ability for two independent applications programs to access and modify data in these locations in the common data structure.

The particular way in which the forming of the common data structure **110** is accomplished in the preferred embodiment is described in detail in the Program Flow section, below.

An advantage of the common (aggregate) data structure **110/310** is that applications programs which were independently designed and developed may be merged and executed as a single "aggregate applications program" utilizing the common data structure. At the abstract level of data structures (as opposed to features such as charts, models, and menus), the questions of the detection of "conflicts" of the fields of data structures from different applications programs is advantageously resolved in most circumstances by simply including any unduplicated fields from the individual applications programs' data structures into the aggregate data structure, and inserting a single data field for data fields which are duplicated between the individual applications programs.

More sophisticated tests for resolving conflicts of fields include, for example, the resolution of a conflict of an integer and a floating point field by choosing a float point field in the aggregate object.

For the purposes of this disclosure, it should be understood that the word "conflicts" should be construed broadly. The idea of a "conflict" encompasses not only the situation where two different applications programs desire conflicting operations to be performed. The term "conflicts" also encompasses those situations where, for example, one applications program assumed a second applications program would provide necessary information relating to data structure or data content, but the second applications program assumed that the first would provide that information. The lack of definition of necessary information by either applications program, or a specification of a structure or some data which is ambiguous due to omission of information from another applications program, should be understood to be encompassed by the word "conflict" as used in this specification, despite the fact that the applications programs may not actively be vying for control of some process.

The preferred embodiment's aggregation ability is related to other advantages. These other advantages include the fact that applications programs can be loaded without "linking", as commonly understood in known systems.

In known systems, the process for program development involves compiling various source code modules to form a set of respective object code modules. Thereafter, the various object code modules have to be linked into an executable program. In known systems, therefore, a change in only one source code module necessitated not only a compilation of that module, but also a link with all the other object code modules. Since, in any major program, the number of object code modules may be in the hundreds, the disadvantages of known systems are apparent.

In contrast, the Operating Environment according to the preferred embodiment allows other applications programs to be run without "linking" with all the Operating Environment object modules. The source code modules within one applications program must still be linked together, but the Operating Environment automatically combines the resulting executable applications program to present to the user a single program which incorporates the features of the Operating Environment and all applications programs.

Each applications programmer thus needs concern himself with the linking of object code modules within his own applications program. The executable object code of the Operating Environment **102**, previously linked without any intervention on the part of an applications programmer, is not changed. Linking between the application's executable code and the Operating Environment's executable code is not necessary.

The avoidance of linking has the advantage that the application developer need not deal at all with the Operating Environment's object modules, making his own linking stage faster and more independent. Also, the user can add and remove applications programs simply by adding and removing executable files; he need not perform the technical and time-consuming task of re-linking, which is of special advantage when the user is not highly trained.

### B. VIEWER: Display of Structures and Data

The information contained in the structure file provides the basis on which the data structure generally, and particular data regarding objects and their associated fields, may be displayed to the user. Two main modes of display are implemented by the preferred embodiment of the present invention: charts, and models.

The display modes allow not only viewing, but also modification, of the actual data and data structures. That is, the data or data structures may be changed interactively through use of menus or function keys. These menus and function keys will be described in greater detail below. At this point, however, the flexibility of modifying, as well as displaying, data and data structures in a variety of formats, both textual and graphic, should be noted.

The VIEWER feature of the preferred embodiment involves the display of information which may originate from more than one of the applications programs being concurrently executed. In the VIEWER features, whether they be in the form of charts or models, conflicts manifest as an attempt by more than one applications program to fill the same picture elements. The Operating Environment according to the present invention allows such conflicts to be resolved.

The conflicts are resolved in a variety of ways. As expressed in more abstract terms in the Summary of the Invention, one of the applications programs may have a simple priority over the other applications program, so that the first applications program effectively takes control of those picture elements. In a chart format, this implies that the text from the first applications program is displayed on the screen, rather than the text which otherwise would have been displayed on the screen by the second applications program.

There are other ways of resolving VIEWER conflicts than the either/or resolution described above. For instance, in a chart format, if two applications programs desired to place a portion of text at the same location on the screen, a first applications program might be given priority as to that particular location, but the text from the second applications program would simply be relocated to a different portion of the screen (rather than being completely overwritten). Also, if text from a given applications program had to be moved because of a conflict with text from another applications program, the relocated text may be flagged in some way to indicate its relocation. Such flagging may take the form of asterisks, arrows, or other suitable indicators.

Preferably, conflicts in models may be avoided altogether by not identically naming any two viewers. Also, since viewers simply represent objects whose conflicts should have been resolved at loading time in the preferred embodiment, then no conflicts should survive to be dealt with by the viewer system.

In the model format, resolution of conflicts may be displayed by, for example, placing the physical object from one applications program so as to appear to be physically "in front of" the object from the other applications program. The presence of the hidden, or partially hidden, physical object from the lower-priority applications program could cause a special marking to appear on the screen so as to indicate its presence. For example, a dotted outline, shadowing, and so forth may alert the user to the fact that there was a conflict as to the particular location involved.

Depending on the particular applications program involved, special provisions may be made, either within the operating environment itself or through "training" the system interactively, to implement higher-level logic functions, depending on the particular application. For example, if a physical object known to be transparent is in conflict with a physical object from a second applications program known to be opaque, then the transparent physical object could be made to appear "in front of" the opaque physical object. This higher-level, data-dependent, application-dependent resolution technique allows both physical objects to be displayed, while minimizing the amount by which one physical object deprives the other of viewability by the user.

This conflict resolution capability which is adoptable by a user after all the applications programs and the Operating Environment have been written, indicates the extent to which the Operating Environment can be thought of as a software development system in and of itself. The ability of a user to effectively "program" the means of interaction and conflict resolution of different applications programs has the advantage that none of the actual coding of the applications programs or Operating Environment needs to be changed.

Since the user can change the data structure as well as manipulate the location and manner in which objects and their associated fields are displayed, the user effectively has total control over the entire display process without having to resort to actual changes in software. This is but one more area in which the Operating Environment can be thought of as a software development system, and not merely as a means of aiding the execution of software.

It is to be emphasized that the means of modifying the data structure and the means of modifying other features of the present invention (such as the VIEWER functions) may all be performed using substantially the same family of commands. Thus, the user-friendliness of the system is enhanced, since the user "learns the feel" of a variety of modification sequences as he learns a single sequence.

### 1. Charts

A chart is a text display describing one or more objects with associated fields in any one of a variety of predetermined or user-chosen formats.

### a. List Chart

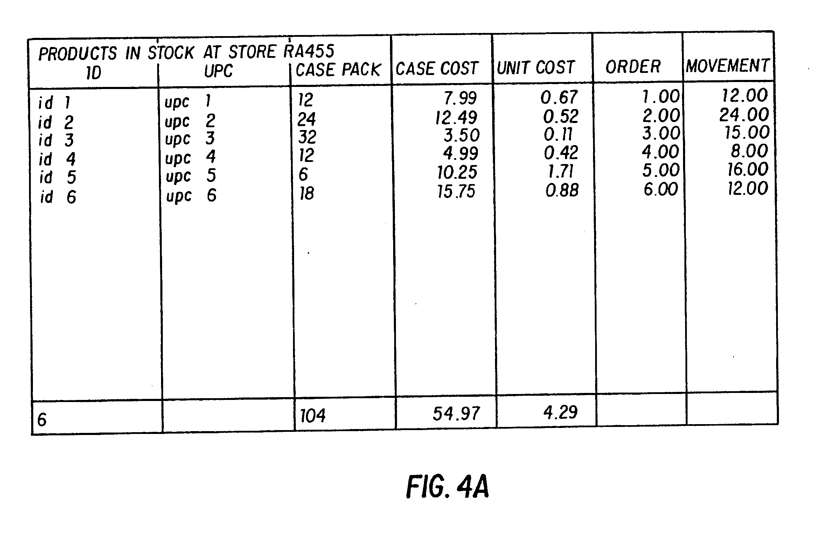

**FIG. 4A**, entitled PRODUCTS IN STOCK AT STORE RA**455**, shows a text display of six different objects (consumer products) with information associated with each object (field data such as UPC label, quantity per case, cost per case, unit cost, etc.).

Conflicts arising in a list chart are most likely to occur when the information associated with each object is different for different applications programs. For example, one applications program might have the UPC label and the unit cost, whereas another applications program might have ordering and movement information. The conflicting information takes the form of the labeled columns in the list chart. In the absence of other applications programs, the columns associated with each individual applications program would attempt to occupy the leftmost columns of the list chart. However, the Operating Environment according to the preferred embodiment resolves this conflict by placing the columns originating in the higher-priority applications program in the leftmost columns, and by placing the columns originating in the lower-priority applications programs in the columns to the right of them.

Fields which are duplicated, such as the product identification in the leftmost column, may simply be printed once, rather than twice.

As a user gains experience with the system and learns how more efficiently to arrange his list charts, then higher-level logical functions may be implemented which are more sophisticated than the simple rule that the higher-priority applications programs are allocated the leftmost columns. The allocation of data fields from the various applications programs to specific columns may be chosen as dependent on the priority of fields, based on the nature of the field. In this way, the actual data content of the different fields from the various applications programs may determine the ordering and placement of the columns in the list chart as it is finally displayed.

According to the preferred embodiment, various mathematical functions such as may be found in conventional spreadsheet programs, as well as functions not yet conceived or implemented, lie within the scope of the present invention. For example, the sum of numbers in a given column may be totaled, and the total may be displayed at the bottom of the column. Such mathematical functions are described below, in the section entitled "Formula System."

The user may choose to specify different data on the chart so that he can "zoom in" on certain areas of the chart.

### b. Full-Screen Chart

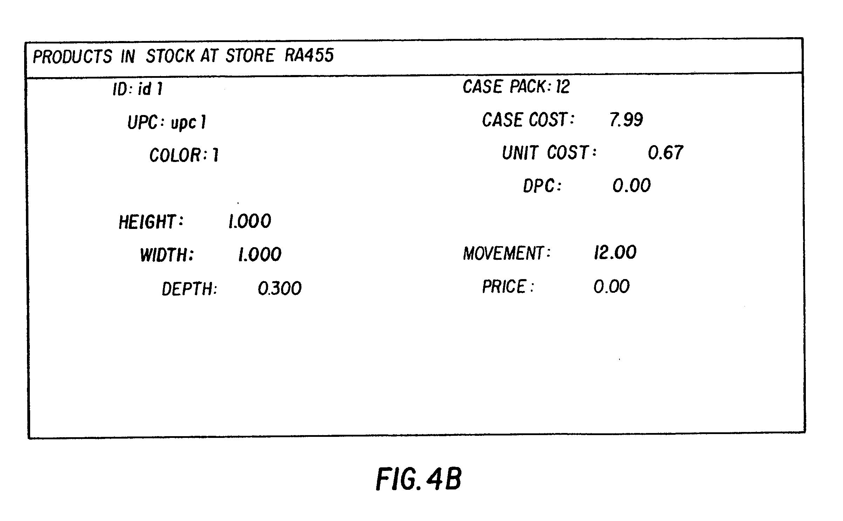

**FIG. 4B**, also entitled PRODUCTS IN STOCK AT STORE RA455, shows an exemplary full-screen chart. A full-screen chart is a chart in which a single record is shown with its associated data. As with the list chart, described above, the content and display format may also be changed by the end user in accordance with principals described below, with special reference to menus, keystrokes, and timed events.

As described more generally above, in the section entitled VIEWER: Display of Structures and Data, the present invention provides a broad variety of means of resolving conflicts arising when two applications programs desire to place text in the same zone of a full screen chart display. Relatively simple data conflict resolution techniques such as choosing one text and ignoring the other, or locating the lower priority text at a different place on the full screen chart display may be supplemented by more sophisticated conflict resolution techniques. More sophisticated conflict resolution techniques might include, for example, resolving a conflict between a blue object from one applications program and a yellow object from another applications program to be indicated on the full screen chart as being green in color.

Furthermore, it is within the ability of the end user to redefine the display locations of the different fields, allowing him "override" capability over any or all of the placements otherwise imposed by the individual applications programs.

### 2. Models

In the preferred embodiment, a model may be conceptualized as a graphical (pictorial) display of a data structure, plus all data structures linked below it. Preferably, the entire hierarchy of data structures (or the data itself) at all levels below a present chosen level may be displayed.

In the course of an interactive session, the highest level displayed may be changed by the user. Thus, for example, the user of a space management system would be able to "zoom" from a display of an entire gondola, to one shelf on the gondola, to a particular set of products on a portion of the shelf.

As described above in a more general manner, in the section entitled VIEWER: Display of Structures and Data, a physical object may be graphically displayed after either simple or more elegant conflict resolution techniques. For example, physical objects which two applications programs would otherwise place at the same part of the display screen may be resolved by one of the objects, making it appear as if one object were placed in front of the second object, causing a second object to appear "in phantom" behind the second object, and so forth. The same object, but with different attributes (such as color) could be resolved by, for example, causing a green object to be displayed when the two conflicting applications programs desired that the object appear as blue and yellow, respectively.

Conflicts between model VIEWERS can be avoided, as they are in the preferred embodiment, by naming VIEWERS uniquely.

### C. MENU Creation, Modification, and Function

Menus are one of the three main ways in which the functions and macros may be invoked according to the preferred embodiment. (The other two preferred means are by Keystroke Definition and the Events List.)

On the surface, menus according to the present invention may individually resemble menus known in the art. However, the enhanced flexibility which characterizes the present invention is evidenced in the fact that, in the preferred embodiment, menu items may refer to specific pre-programmed functions, macros (either pre-programmed or user-defined), or reference to other menus (submenus). The present invention envisions that menus may be of the horizontal, vertical, or tree type, or any combination of them. For example, a first menu might have five items listed horizontally across the top of the screen. If the user chooses the fourth of the five horizontally listed items, a vertically oriented list of submenu options appears beneath that fourth menu item.

The end user may customize his own menus, in terms of either content or display format. For example, the user may add or delete menu items, or create entire new menus. He may define his own macros and make them accessible from any given menu.

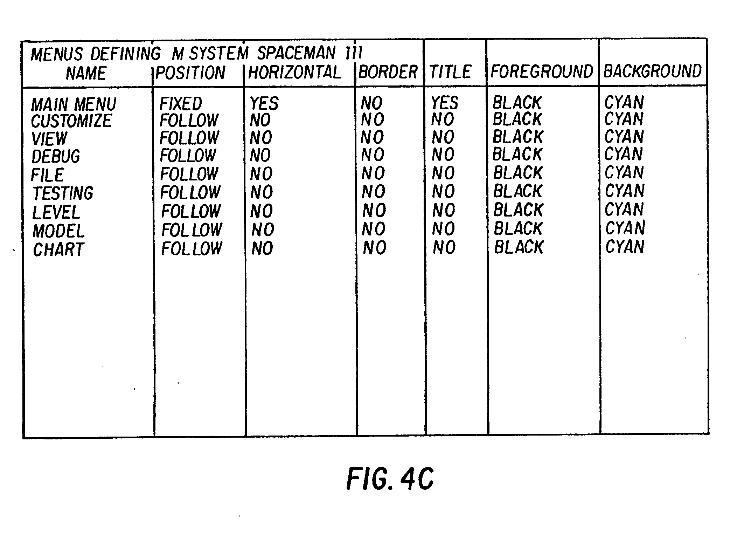

**FIG. 4C** shows an exemplary menus-defining system in which several different menus along with their associated characteristics are shown in spreadsheet format. User-definable and user-changeable display characteristics such as position (fixed or scrolling), horizontal or vertical orientation, presence or absence of a border, presence or absence of a title, and foreground and background colors are examples of items which are changeable by the user in the preferred embodiment.

Conflicts may arise between different applications programs when, for a given menu, each applications program has a different (perhaps overlapping) set of menu options. Perhaps the simplest means of resolving the conflict is to allow a higher-priority applications program to govern the placement of the topmost menu items. The lower-priority applications program would cause any menu entries not already present in the first applications program to be displayed below the menu entries originating in the first applications program. Of course, the user need not even appreciate that the various menu items originated in different individual applications programs; the aggregate list of menu options simply appears to him.

Likewise, when the user selects one of the menu options to be executed, he need not be concerned to which applications program control will have to be passed in order to execute the menu selection. Because the conflicts between the applications programs have been resolved prior to any selection, no delay is experienced by the user on account of the variety of applications programs which are concurrently executed. That is, the fact that separately developed applications programs are being concurrently executed does not negatively impact the user interface, due to the smooth conflict resolution facilitated by the Operating Environment according to the present invention. As will be seen below, with the appreciation to be gained from an understanding of the macros whose execution is enabled by the preferred embodiment, the sequenced, rapid execution of functions from different applications programs is facilitated without the time-consuming delays inherent in program-swapping and dynamic data exchange techniques known in the art.

### D. KEYSTROKE Definition, Modification, and Function

A second means by which the functions or macros may be invoked by the Operating Environment is by the programming of keystrokes.

The function of various specific keys on a keyboard (or, for example, pushbuttons on a mouse or joystick) can be defined and changed by the user. As is the case with many other of the features of the Operating Environment according to the preferred embodiment, the manner in which the keystrokes can be defined is substantially similar to the way any other feature may be defined. The actual definition, or modification of the definition, of a particular keystroke may be achieved, for example, by use of the menu system, or perhaps a series of predetermined or user-chosen keystrokes.

Functions which are performed in response to a particular predefined or user-chosen keystroke include the following. A menu may be called, or a function or macro may be executed. Although it is normally the keys labeled F1, F2, F3, and so forth, which most users will find useful in practical scenarios, it is to be understood that any key, or any set of keys, on the keyboard may be redefined, even to the point of causing an entire new keyboard to be defined.

Conflicts may arise between different applications programs which desire a specific keystroke to perform different functions. In the preferred embodiment, a "Keystroke List" is searched in a top-down manner. This list contains the programmed function or functions which are to be executed in the event of each key closure. The functions which each individual applications program would associate with a particular keystroke may sometimes conflict.

When there is a conflict, the Operating Environment resolves the conflict, either in advance or interactively. As is the case in many other conflict resolution techniques directed to other features of the preferred embodiment, a higher-priority applications program may override the function originating in a lower-priority applications program which would otherwise be associated with that keystroke. Alternatively, a keystroke which the lower-priority applications program desired to be associated with the function could be "relocated" to a different keystroke. In this event, the user may be alerted to the change in keystroke function.

In a preferred embodiment, a screen display is provided so that the user can view each specially-programmed keystroke with its accompanying function. Of course, the finally-resolved aggregate list of keystroke functions need not reflect to the user that the various keystroke functions did not originate from a single applications program. The user need not be concerned with the origin of the functions. Of course, the flexibility of the Operating Environment according to the preferred embodiment allows the user to define, or redefine (by overriding the applications programs) particular keystroke functions.

### E. Event List

In the preferred embodiment, an event list is advantageously included as a third means by which the functions or macros that are copied into the Operating Environment may be invoked. Briefly, a preferred event list may be a list of functions or macros which are to be executed at a given date and time, at a given time after a predetermined event, or repeatedly at fixed intervals.

This event list may be read into the Operating Environment from an applications program. Optionally, the event list may be modified interactively by the user in much the same manner as the other features of the Operating Environment may be modified (e.g., through use of menus or keystrokes or sequences thereof). Advantageously, the functions or macros specified on the event list may be executed a given number of times, possibly at predetermined regular or irregular intervals. One exemplary application of this feature would be to download consumer product changes from a mainframe computer at predetermined intervals, so that the database of the system is repeatedly updated.

Conflicts may arise when two different applications programs call for the execution of respectively different functions at the same time. This conflict may be resolved by allowing the higher-priority applications program to prevail. That is, the function which the higher-priority applications programs desires to be executed at that particular time will be executed, and the function desired to be performed by the lower-priority applications program may alternatively be delayed, ignored, or modified by a more sophisticated logical technique which is based on the actual nature of the two functions. An example of a more sophisticated, function-dependent resolution technique is that a function may "switch itself off" (indicate that it is inappropriate to be invoked), such as when a scheduled transfer has been temporarily disabled.

### F. Entry of Macros

As described above, a macro is a sequence of commands entered by the user which is stored for later execution in sequence. Advantageously, the macros available in the preferred embodiment form an extensive array. For example, labels and GOTO statements, IF statements, dynamic variables, FOR and WHILE loops, submacros (nested macros), automatic message display and prompting are all available. In the preferred embodiment, the macros may be compiled just as are the formulas (described below) for operating on object fields. Despite its flexibility and comprehensiveness, the macro language is designed for ease of use, following substantially the same syntax as object field formulas. As with other features of the Operating Environment, macro definition may proceed in a manner which is independent of the particular applications program being executed.

Macro definition, referencing, and execution may be accomplished as follows, in a preferred embodiment. Nomenclature of the particular macros from the various applications programs may be facilitated by including in the name of each function an applications program identifier, followed by a period (".") followed by a function index which uniquely specifies the particular function being referenced within the applications program. Thus, 1.7 would indicate the seventh function in applications program number 1, and 4.3 would indicate the third function in applications program number 4. A "function number" of 0 may advantageously be used to indicate macros within the Operating Environment itself. Thus, 0.5 indicates the fifth function provided within the Operating Environment itself.

Conflicts between macros of different applications programs may be resolved in a variety of ways. First, the macros may be simply flagged as incomplete, and therefore are never compiled. Alternatively, such a conflict may be resolved through branching to other functions, perhaps based on the actual content of the conflicting functions. Ideally, conflicts may be avoided through advance preparation and planning of the nomenclature, so that separate development of different applications programs does not yield macros which conflict. The macro nomenclature outlined above prevents such conflicts from arising in the first place.

### G. Output Device List

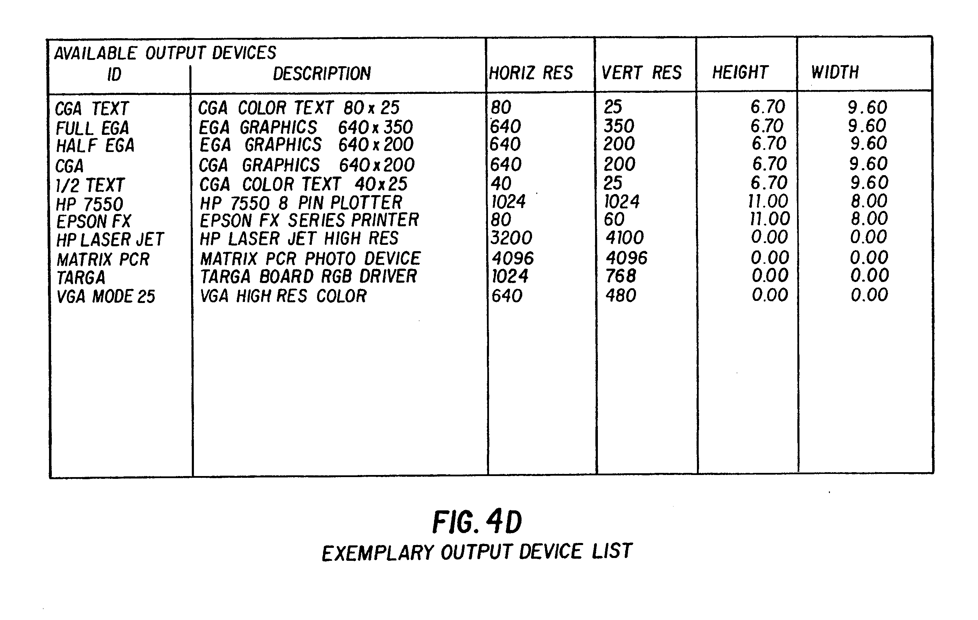

An output device list, according to the preferred embodiment of the present invention, comprises a list of output devices (such as printers, letters, and video displays) with associated specifications and capabilities. **FIG. 4D**, entitled AVAILABLE OUTPUT DEVICES, shows eleven exemplary output devices with corresponding pertinent characteristics, including horizontal and vertical resolution, and height and width of the display. Other relevant characteristics might include overwrite capability, specification as a serial or random access device, availability of different colors, specification of how to access the device (particular handshaking routines, for example), and so forth.

The independence of the Operating Environment executable code from modification due to changes in output devices is provided by the inclusion of this output device list. When a new output device is added to the system, only the specifications in the output device list must be changed; the Operating Environment software may properly be executed without change or subsequent compilation. Modification of the output device list may be effected independently of the particular applications programs whose execution is anticipated.

### H. Input Device List

According to the preferred embodiment, flexibility in adding new input devices such as keyboards, joysticks, or data communications boards from other computers may be accomplished in substantially the same manner as was accomplished for output devices, described above with reference to the output device list. An input device list, adapted for the purpose of allowing new input devices to be accommodated by the Operating Environment, is all that need be modified. The Operating Environment executable code remains unchanged, and the addition of a new input device may be accomplished independently of the applications programs which are to eventually use those input devices.

### I. Batch Data System

The batch data system according to the preferred embodiment allows transfer of larger amounts of data, usually not associated with the example of interactive data input specially suited for use by the Input and Output Device Lists.

The batch data system comprises two major components, one being at a higher level of isolation from the particular data type under consideration. The Batch Data Source (BDS) is the higher level software, dealing mainly with definition of the data channel. The Batch Data Type (BDT), on the other hand, is the set of device-specific software modules which deal less selectively with the raw data going to and from the batch data devices.

### 1. Batch Data Source

The Batch Data Source (BDS) is essentially a configuration with which the user may directly interact. The BDS essentially defines the data channel in the broad sense, describing which objects and which fields are to be transferred.

The BDS need never be modified merely for the addition of a new type of batch data software. This immunity from modification ensures that the user need not learn another whole instruction set or data structure every time new data software is added to those with which the Operating Environment must communicate.

Generally, the BDS encounters conflicts between different applications programs when the different applications programs desire that different objects and fields are to be transferred. Conflicts may also arise when different data referred to by the two applications programs is desired to be placed into the same location. The preferred embodiment of the present invention resolves such conflicts, as well as "conflicts" such as duplicate information.

Since the BDS must generally transfer a chosen set of objects and/or fields, conflict resolution involves the decision of which data is to be placed in a given location, or where to place a given structure in relation to preexisting structures, in the event the applications programs are silent or in disagreement. Also, should the applications programs be in disagreement as to the destination of the same data or relationship to preexisting data structures of the same new data structure, the Operating Environment resolves this conflict.

The preferred embodiment of the present invention also contemplates a range of options for dealing with conflicts which arise at the level of the linking relationship of the different object. (For purposes of understanding, this is to be contrasted with conflicts in the placement or location of incoming data, described above with respect to the duplicate handling systems options.)

It is conceivable that, during a transfer, a structure (in the form of a data record) which does not have a full hierarchical description may be transferred. For example, a shelf may be desired to be transferred without also transferring a gondola. This lack of definition of a particular link may be resolved through assignment of "surrogate parents" automatically, at least until such time that a more complete hierarchical structure becomes available. The hierarchical structure may be completed either later in the same data transfer, or it may be completed in a future data transfer. In the particular example of a shelf for which no gondola presently exists, a surrogate gondola is created automatically.

Another means of resolving conflicts is through the use of a CONTEXT option. The CONTEXT option embodies a presumption that records whose hierarchical data structure is undefined are placed under the current object (assuming that it is meaningful). For example, if the user is presently examining a given gondola in a store, a data record whose relationship in the hierarchy is ambiguous is placed (either tentatively or permanently) in the current data structure (such as a gondola).

Also, an ORDER option allows the ambiguous or unspecified structure links to be determined by the most recently transferred structure which can resolve the ambiguity or lack of specification. For example, if a shelf is transferred with a gondola link which is unspecified, then that link in the hierarchy is determined (permanently, or tentatively) by that gondola which was most recently transferred. Conversely, it lies within the contemplation of the present invention that the linking ambiguity may be resolved by those structures which follow (as opposed to precede) the present hierarchical structure in the order of transfer.

The question of the format into which the data is to be entered at an external destination in an outward transfer may also be resolved by the preferred embodiment of the present invention. First, if there is no predetermined destination format, the destination format may advantageously be created using the same structure as the source format. Effectively, this causes a duplication of both format and content of the data.

The DESTINATION feature allows the predetermined destination format to be used. When this option is selected, the data in the predetermined destination format is modified according to the conflict resolution techniques described above, in the description of the duplicate handling system. The data itself, and not the format, may be modified.

Alternatively, the destination format may be specified in a TEMPLATE which contains a determination of the destination format. The TEMPLATE file's destination format is relevant for SAVE operations.

A central feature of the BDS is to arbitrate which objects and which fields should be transferred. Which objects are transferred is determined in the preferred embodiment by which record types are to be transferred, since the record structures in commonly-known data files are specially suitable for the hierarchical data structure of the objects according to the preferred embodiment of the present invention.

### 2. Batch Data Type

The Batch Data Type (BDT) is essentially a low-level data driver, the particular operational details of which the user never experiences. Inherent within the BDT is a list of the actual functions which must be performed in order to successfully link to various batch data devices, such as databases local to the computer on which is resident the Operating Environment, files of different standardized spreadsheet programs, ASCII files, database files, or mainframe files.

Together, the BDS and the BDT adapt the Operating Environment to many types of batch data transfers without the necessity of modifying the Operating Environment software (at least at the BDS level), forcing the user to learn a new data format or set of commands, or altering any particular applications programs. The user may simply specify which objects and fields are of interest to him in a particular application, and the Operating Environment's batch data system delivers the specified information while insulating him from the particulars of the transfer. The user can see, or choose not to see, as much of the data as he deems desirable, the BDS software effectively screening the undesirable information.

In order to accommodate a new data type, only the BDT (data driver) must be added (or a previous BDT modified).

### J. Formula System

Any field of any object in the structure file may be associated with a formula which defines the contents of that data field. Definition of data fields by formula supplements the ability of the user or applications programmer to specifically define each field as a constant value.

Any of the functions which are present in conventional spreadsheet programs may be included in the Operating Environment. A particular field may be defined as a logical, mathematical, or statistical combination of elements from other fields which are predetermined or user-chosen constants. When fields are specified in a given formula, the fields may be chosen either from other fields within the same structure, or they may be fields from other structures.

Entries such as NA (not available) and ERR (error) may also be specifically entered by the user, or generated through operation of the program.

According to the preferred embodiment, if a particular field is encountered which has an NA entry resulting from a formula referencing other NA fields, the NA status of that field can be forcibly changed while maintaining the mutual consistency of the data. This change is accomplished through what is called a "backtracking" capability. When a particular value is entered into an NA field, the backtracking function works "backward" so as to supply any earlier NA fields on which the "forced" field depended. The earlier NA fields are replaced with whatever value is necessary to cause the "forced" field to assume its first value.

This backtracking feature allows the user the capability, for example, to determine what initial condition may be required to attain a certain result. For example, the pricing of one consumer product in a group of consumer products can be determined for a given profit margin, assuming that the price of the remaining products has already been established. The profit margin NA would simply be forced to the desired value, and the consumer product NA would automatically be ascertained through the automated backtracking procedure.

### K. Reference to Functions into and out of Operating Environment

According to the preferred embodiment, the Operating Environment may efficiently Invoke functions which are present in the applications programs. A reference to the applications program function advantageously comprises a reference to the application program itself (by name or by index, for example) as well as a function index within that particular application. The Operating Environment can invoke the functions of one or more applications programs which are executing concurrently, as allowed by the Operating Environment.

An advantage of this ability to invoke functions from more than one applications program lies in its enhanced speed of execution, inasmuch as the capability obviates the need to load and link separate applications programs in the middle of a user session. This flexibility is demonstrated by the ability to write, compile, and link additional applications programs without modifying the code of the Operating Environment itself.

The flexibility of the preferred embodiment of the Operating Environment is further demonstrated by the ability to call applications program functions which in turn call utility functions which are inherent in the Operating Environment itself. The ability to link back to Operating Environment functions is accomplished through use of a library (a list of functions which may be referred to a "hook table"). The hook table comprises a series of addresses within the Operating Environment code for transferring control when the applications program desires to execute the function. Inasmuch as no separate compilation is required due to the inherent interlinking capability, the user experiences no delay during a terminal session which would otherwise be caused by a less efficient linking procedure. Also, needless duplication of code is avoided.

Several particular important features of the preferred embodiment according to the present invention are described below.

A first important feature is the loading and aggregation process, including the resolution of any conflicts, with special application to the loading and aggregation of data structures from different applications programs.

A second important feature relates to the Batch Data System, comprising BDS's and BDT's (Batch Data Source and Batch Data Type processes) which flexibly interact.

Another important feature according to the preferred embodiment of the present invention is the use of a certain portion of the Batch Data System itself in the loading and aggregation process.

### III. Implementation of the Preferred Embodiment

### A. Loading and Aggregation of Applications Programs

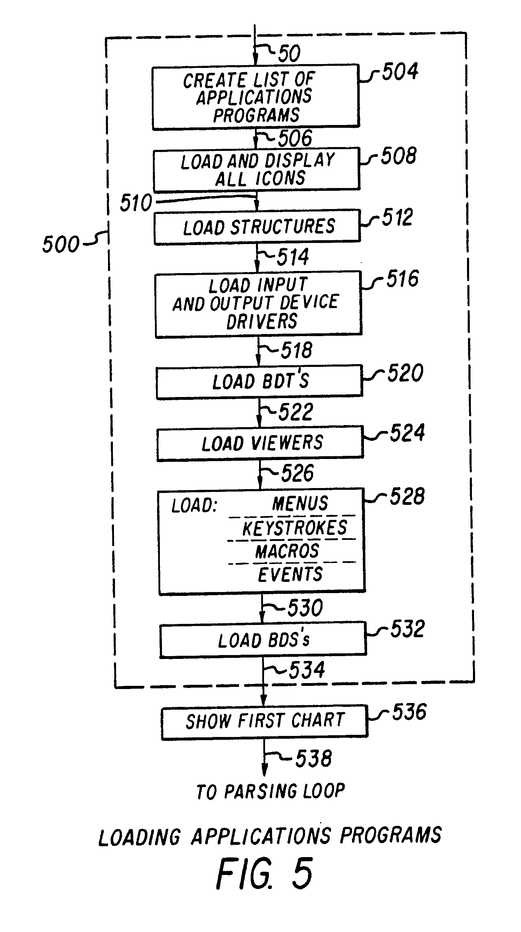

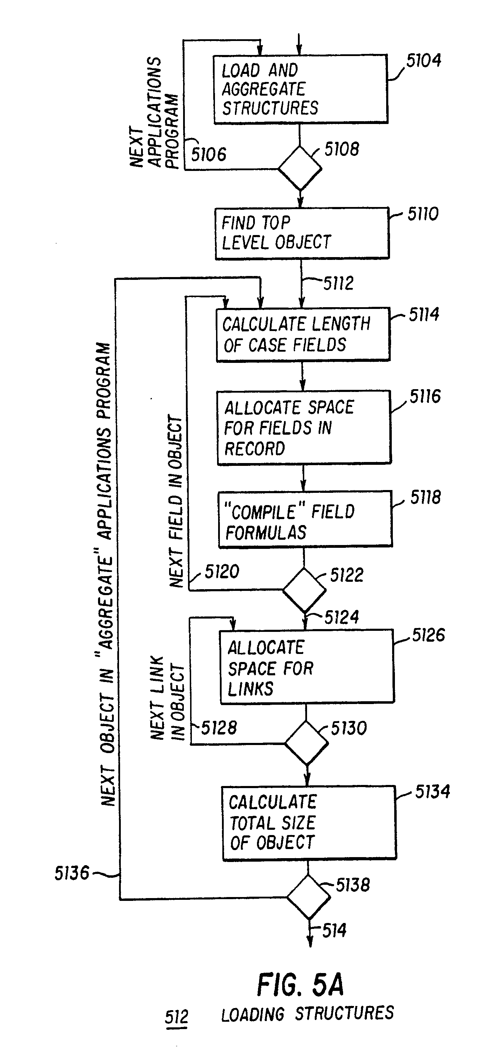

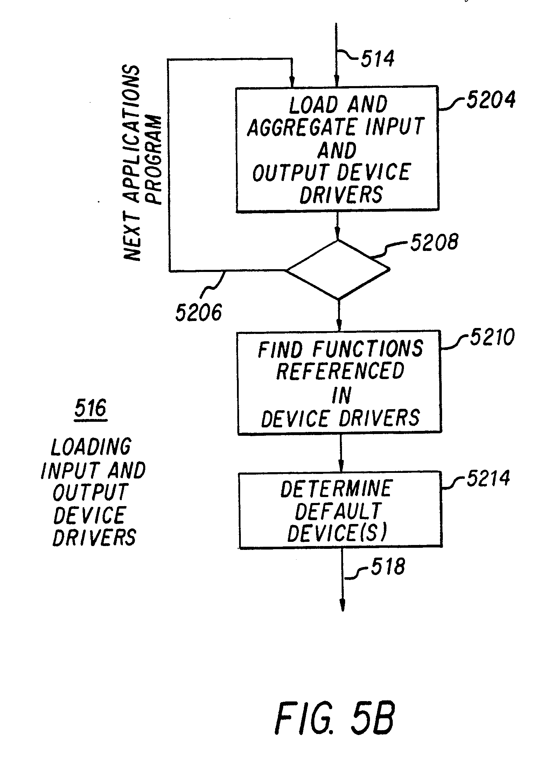

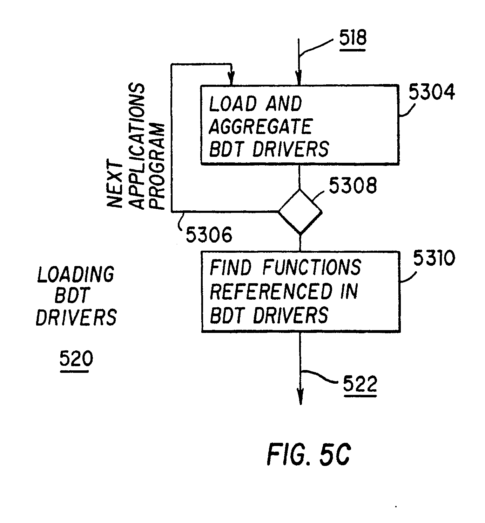

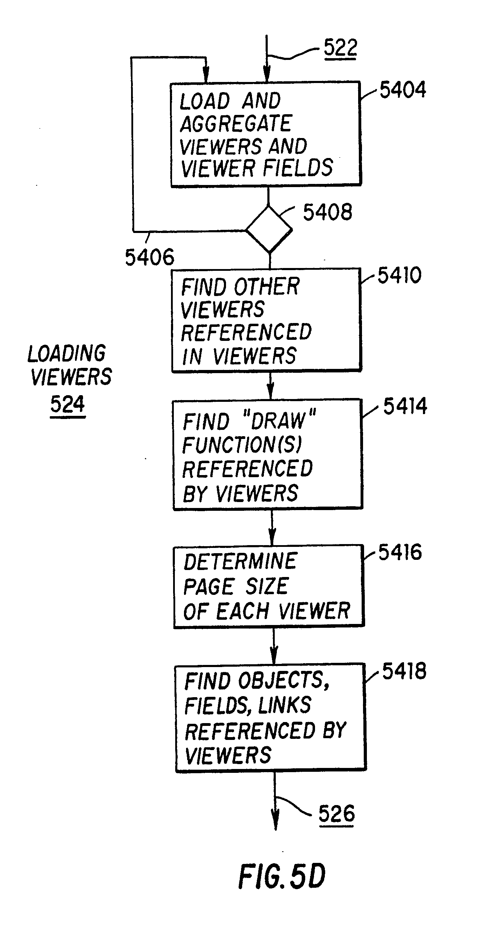

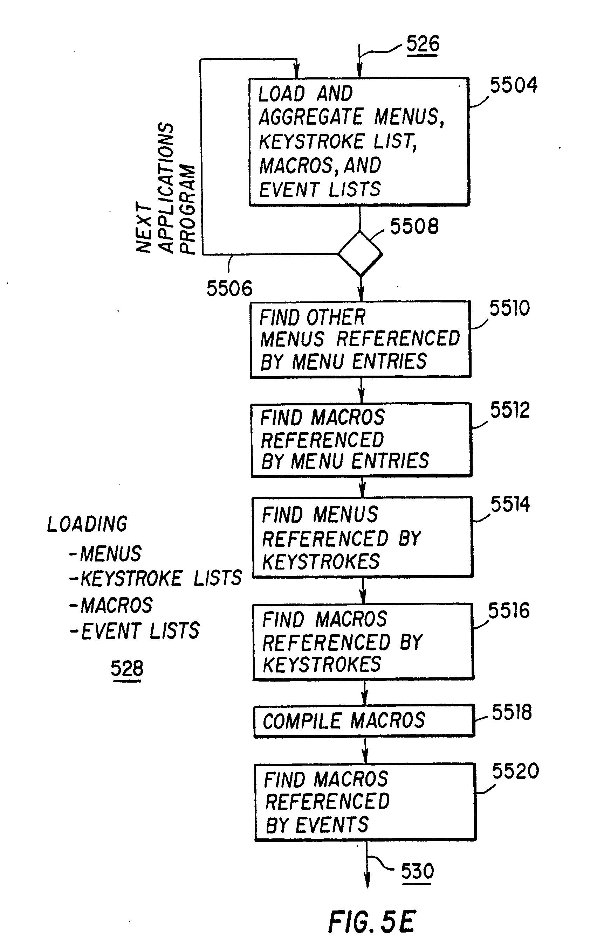

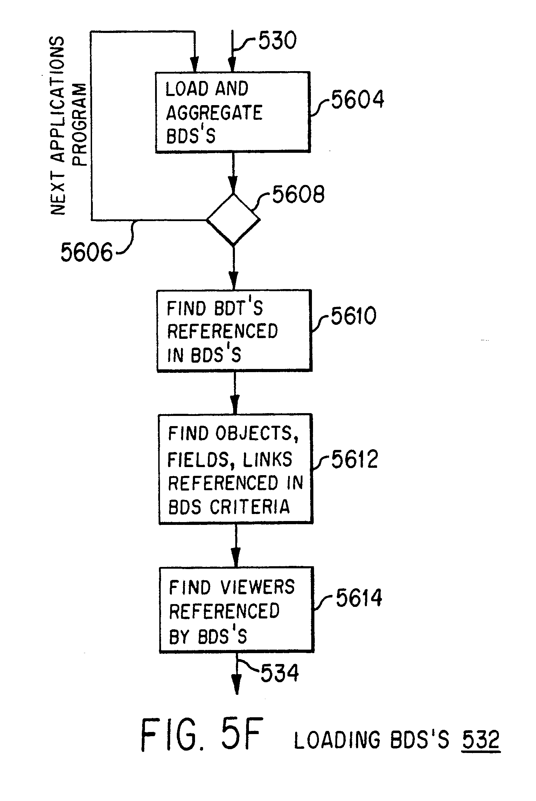

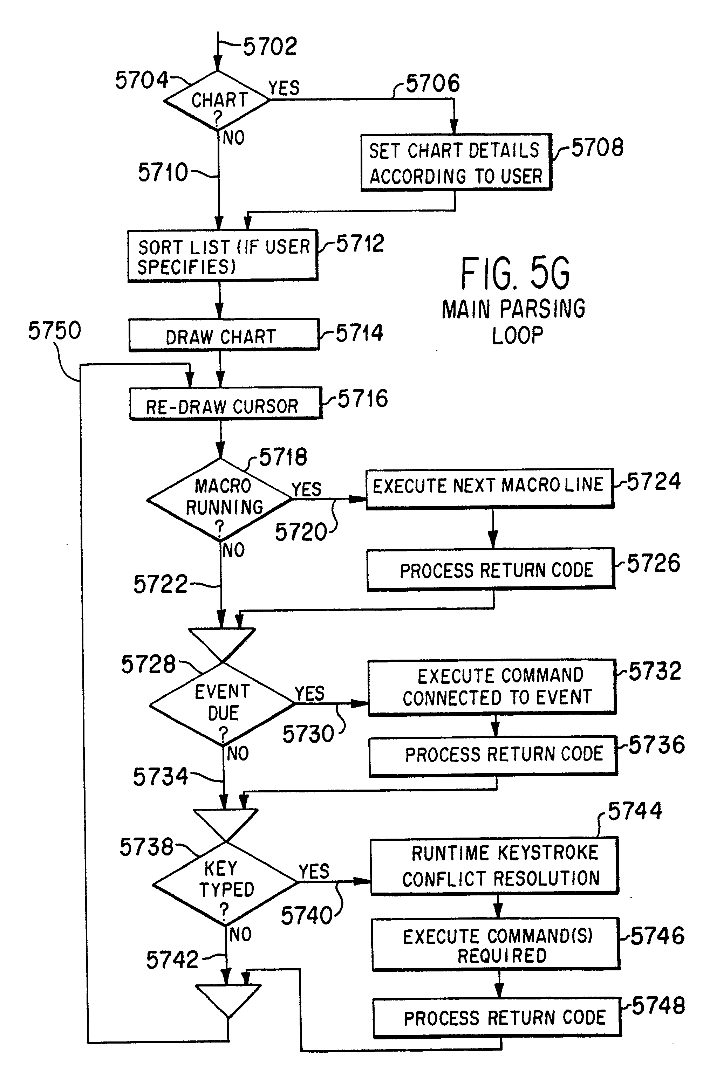

In **FIG. 5** is illustrated a high-level flow chart of the application program loading and aggregation process **500** leading up to the parsing loop in an interactive session.

After start-up, a list is compiled of all applications programs containing functions and structures to be loaded and aggregated into an aggregate applications program. This function is indicated generally as block **504** in **FIG. 5**. The creation of the list of applications programs lies within the ability of one skilled in the art.

Next, as indicated at block **508**, the preferred embodiment loads from each applications program an "icon." An icon may be a display representative of the applications program. Advantageously, it may simply indicate the name of the particular applications program, but may also possess a stylistic expression, perhaps related to the function and purpose of the particular applications program. All icons may then be displayed, so as to confirm to the user that all desired applications programs are indeed being loaded.

Block **512** indicates the structure loading process, and will be described in greater detail below, with respect to **FIG. 5A**. In this block **512**, the structures (one of which may resemble that shown in **FIG. 2**) are read from the various applications programs. In this block, any conflicts between structures are resolved. Furthermore, any applications programs having structures whose objects and/or lengths are related to the objects and/or lengths within the structures of other applications programs are combined to form an aggregate (common) structure.

Block **516** represents the process by which the output device drivers are loaded. This process is described in greater detail below, with respect to **FIG. 5B**.

Block **520** represents the process by which the BDT drivers are loaded. This process will be described in greater detail below, with respect to **FIG. 5C**.

Block **524** represents the process by which viewers may be loaded and aggregated. This process is described in greater detail below, with respect to **FIG. 5D**.

Block **528** represents the process by which menus, keystroke lists, macros, and event lists may be loaded and aggregated. This process will be described in greater detail below, with respect to **FIG. 5E**. The loading and aggregation of these four features has been combined in the preferred embodiment, but such a combination is not necessary to the practice of the invention. The reason that, in the preferred embodiment, the loading and aggregation of these four features is combined into what may be conceived of as a single process is because the xxx.MEN file according to the preferred embodiment contains information related to these four features. Its loading and aggregation is advantageously consolidated, due to the intimate relationship of the keystroke list, event list, macros (sequences of functions), and the menus which may be involved with the invocation of any of them.

In the preferred embodiment, keystroke conflict resolution occurs after the loading process, at run-time. See below, the subsection on "Run-Time Keystroke Conflict Resolution" under the description of the "Main Parsing Loop" in the "Implementation of the Preferred Embodiment" section. This is one example of how conflict resolution may be performed either at loading time, run-time, or a combination of the two, and still remain within the scope of the present invention.

Block **532** represents the process by which the batch data sources (BDS's) may be loaded and aggregated. This process will be described in greater detail below, with respect to **FIG. 5F**.

The loading and aggregation features of the present invention need not be limited to applications programs possessing those features described in **FIG. 5**, and in figures detailing the features overviewed in this discussion of **FIG. 5**. The present invention envisions the ability to load and aggregate features from a variety of applications programs, now known and hereafter developed, as long as the features from the various applications programs are desired to be loaded and aggregated (with possible conflict resolution) into an aggregate applications program. Thus, the invention should not be limited in scope by the particular features shown in **FIG. 5**, or enumerated in the related discussion, but should be limited only in accordance with the claims which follow this description of the preferred embodiment.

After the applications program and all its features are loaded and aggregated, and as many conflicts are resolved as are desired to be resolved, then the aggregate applications program is complete. The interactive user session may begin.

In the preferred embodiment, a first chart, generated at block **536** by the aggregate applications program, is presented to the user. Control is then passed to a parsing loop along path **538**. A preferred embodiment of the parsing loop is described below, with reference to **FIG. 5G**.

### 1. Loading Structures

**FIG. 5A** illustrates in greater detail the structure loading process shown as block **512** in **FIG. 5**.

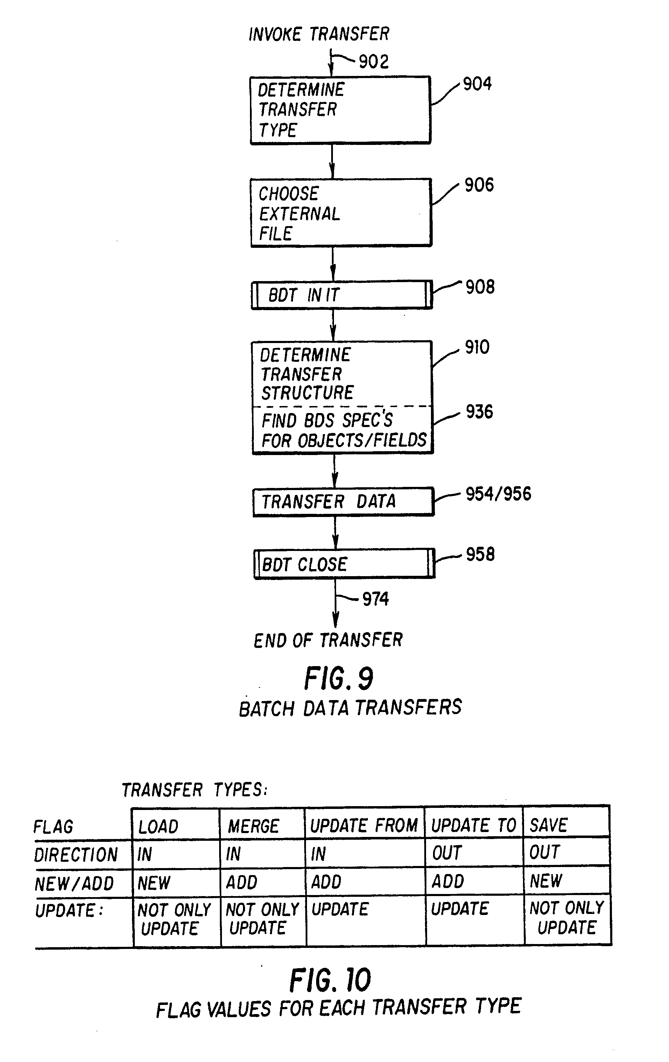

Blocks **5104, 5106** and **5108** in **FIG. 5A** illustrate the loop in which the structures (such as **FIG. 2**) of various applications programs are loaded and aggregated. A more detailed exposition of the loading and aggregation process is described in greater detail below, with special reference to **FIGS. 9, 10, 11, 11B**, and **11B1**. These figures represent, in progressively greater detail, the process by which applications programs features in general, and data structures in particular, are loaded and aggregated.

At this point it is sufficient to mention that the loading and aggregation process is carried out by software which serves a more general purpose. The more general purpose of the processes illustrated in the FIGS. **9, 10, 11, 11B**, AND **11B1** (namely, batch data transfers) is applied in block **5104** (**FIG. 5A**) to, the particular purpose of loading structures. In fact, it is one of the inventive features of the present invention that Batch Data System software can be used directly to load and aggregate structures.

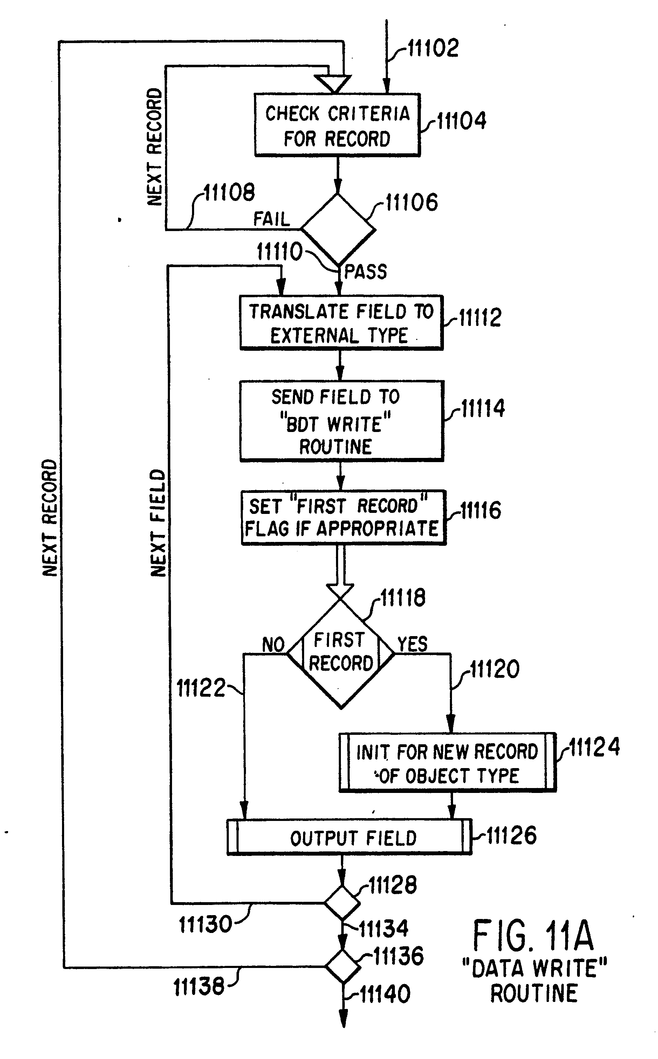

Block **5104** (**FIG. 5A**) involves the execution of a pathway in **FIG. 11** in which a "MERGE" transfer type is chosen. Briefly, in **FIG. 11** the pathway followed in the loading and aggregation process **5104** (**FIG. 5A**) may be followed in **FIG. 11** through blocks **904, 906, 908, 1110, 1116, 1134, 1136, 1138, 1142, 1154, 958, 1160, 1164, 1172,** and **1174**. After the execution of the process thus indicated in **FIG. 11**, control returns to the end of loop block indicated schematically as **5108** in **FIG. 5A**. The loop **5104, 5108,** and **5106** (**FIG. 5A**) is executed once for each applications program. In this manner, the aggregate applications program is formed by "accumulating" (very broadly speaking) the objects and fields of the structures of each applications program as they are processed in this loop.

Of course, the structure loading and aggregation process (including conflict resolution) need not be performed by software already present in the Batch Data System. However, the economy of using the same code is advantageous. The invention contemplates not simply the use of Batch Data System code for the loading and aggregation process, but any loading and aggregation process consistent with the claims which follow this description of the preferred embodiment.

Furthermore, the loop structure illustrated as elements **5104, 5108,** and 5106 (**FIG. 5A**) does not limit the invention. Other processes through which structures may be loaded and aggregated (such as processing the various applications programs in a more parallel fashion) also lie within the contemplation of the present invention.

Returning to the description of the preferred embodiment, after the last applications program has been processed by the **5104/5108** loop, the bulk of the aggregation and conflict resolution has been completed., What remains after control is passed from block **5108** to block **5110** and beyond may be considered "bookkeeping" or "clean-up" procedures which should be performed in order to allow the aggregate applications program to operate smoothly on the data structure.

First, at block **5110**, the top level object is determined in the aggregate structure. In the example of **FIG. 2**, the top level object would be object store **202**.

After the top level object is determined at block **5110**, a loop is executed once for each object in the aggregate applications program. This object loop, shown with entry point **5112** and end of loop decision block **5138**, has nested within it two loops.

In accordance with the convention adopted in the present specification, each "object" may have one or more "fields" associated with it. The fields specify information about the object. Also, one of the features of an object is the linking of that object to other objects. Thus, object specifications may include not only such information as the description of what characteristics an object has, but also includes its relation to other objects. Such relationship-indicating specifications are called "links" in accordance with the standard adopted with respect to **FIG. 2**.

Two nested loops **5114/5122** and **5126/5130** within the larger "object" loop **5114/5138** are arranged in series fashion. This series arrangement of loops is based on a preferred arrangement in a "structure file" (see Appendix A). In the preferred arrangement of a structure file, the lines of the file representing descriptive fields are placed before the lines of the file describing links. This arrangement is not necessary to all embodiments of the invention, but is preferred for its organizational simplicity. Loop **5114/5122** is executed once for each descriptive field in the object. Thereafter, loop **5126/5130** is executed once for each link in the object. The completion of the processing of fields and links in the object allows the total object's size to be calculated at **5134**.

Referring again to loop **5114/5122**, the length of each "case" field is calculated at **5114**. Briefly, a "case" is a state which the "case field" can take. Each has an external name and a corresponding internal value. The length of the case field is thus simply the maximum length of the external names for all the cases.

Then, memory space for each field must be allocated in each record. (A "record" is a particular instance of an object, and may contain particular data defining those particular instances.) Space is allocated so that, when particular data is received, enough memory has been reserved in the record to support it.

The fields are allocated memory space relative to the start of the record. The fields are advantageously placed in a predetermined order within the record. When the length of all the fields are calculated, then the total size of the record is computed so that memory allocation is enabled.

The length of each field is determined by the field type. For instance, space allocated to a single character, or to a string of characters, is determined by size of the character multiplied by the string length, plus any terminator bytes. If the field type is a referenced string, then the size of the pointer (address) determines the space to be allocated. If the field types are integers, long integers, or floating-point numbers, the size of 16-bit, 32-bit, or IEEE standard 64-bit floating-point numbers may, for example, be used to determine space allocation. In instances where the field type is "case" (a multi-state flag), then the length to be allocated is determined by the tag. If the field type is a function reference, the space to be allocated is determined by twice the size of an integer. One integer is the application number; the other is the number of the function in that application's function table.

These are but examples of the memory space allocations which should take place in block **5116** (**FIG. 5A**). Additions, modifications, and variations of the described field types and corresponding methods of memory space allocation may be made by those skilled in the art, while still remaining within the scope of the present invention.

Finally, any fields which are defined by means of the formula system (that is, the particular data content of the field is to be determined as a function of the data content of other fields) are compiled at **5118**. After these functions have been executed for each field in the object, then control passes from loop **5114/5118** along path **5124** to enter loop **5126/5130**. A loop is executed once for each link, and involves the allocation of space for each such link.

Various means of allocating links lie within the contemplation of the present invention. For instance, different objects may be linked by having the address of a first member object present in the owner link specification. The first member object may have space allocated not only for a pointer to the start of the owner object's record, but may also have a pointer to the start of a second member object's record. The second member may have the address of a third member object's record (in addition to the owner object's record), and so forth. (As shown in **FIG. 2**, object "store" **202** is an owner object with respect to member object "gondola" **204.**)

Whatever mode of linking is chosen, space is allocated for it in block **5126**. However many links are present in the object determines the amount of space allocated for specifying the links.

Finally, after all the fields and lengths in the record have been processed (and space allocated therefore) in loops **5114/5122** and **5126/5130**, then the total size of the object is calculated at **5134**. This total object size calculation is used for reserving space for the objects during the operation of the program.

When the total size of a given object is calculated, the loop **5114/5138** is repeated until all objects in the applications program have been processed. After the last object in the aggregate applications program has been processed, control passes pathway **514** (**FIG. 5**) to the other loading and aggregating procedures.

### 2. Loading Input and Output Device Drivers

**FIG. 5B** is a flow chart illustrating the process by which input and output device drivers are loaded, aggregated, and subsequently processed.

Generally, each applications program can provide one or more input or output devices with its supporting functions identified by number. After loading, the functions themselves are found based on that number. Then the default output devices for text, graphics, and reporting are decided, based on the capabilities of the candidate devices.

Referring more specifically to **FIG. 5B**, control passes along path **514** to enter a loop **5204/5206/5208**. This loop is executed once for each applications program. The function of the loop is to load and aggregate the input and output device drivers. Briefly, this is accomplished by reading one or more drivers from a driver file (XXX.DEV) of each applications program. Each output device driver is added to the output driver list, and each input device driver is added to the input driver list.

After the device drivers from all the applications programs have been loaded and aggregated, control passes from the loop at **5208** to enter block **5210**. The function of block **5210** is to find the functions which are referenced in the device drivers. At this point, these functions are to be found in the executable file of the applications program. Finding the functions allows the description information in the device lists to be connected to the actual driving functions.

Finally, a default output device is determined, as indicated at block **5214**. The means by which the default devices are determined are as follows. The resulting output device driver list is scanned to find a driver that can handle the needs of an interactive screen session, and if there are many, will choose the one with the best display (screen resolution and color depth).

Control passes along path **518** to enter block **520** (**FIG. 5**), related to the loading of the BDT's.

### 3. Loading BDT Drivers

**FIG. 5C** is a flow chart illustrating the process by which BDT drivers are loaded, aggregated, and subsequently processed.

Generally, each applications program can provide one or more Batch Data Types, with their supporting functions referenced by number. After loading, the functions themselves are found based on the number.

Referring more specifically to **FIG. 5C**, control passes along path **518** to enter a loop **5304/5306/5308**. This loop is executed once for each applications program. The function of the loop is to load and aggregate the BDT drivers. Briefly, this is accomplished by reading one or more BDT drivers from each application's BDT file (XXX.BDT). Each driver is added to the BDT driver list.

After the device drivers from all the applications programs have been loaded and aggregated, control passes from the loop at **5308** to enter block **5310**. The function of block **5310** is to find the functions which are referenced in the BDT drivers. At this point, these functions are to be found in the application's executable file. Finding the functions allows the description information in the BDT list to be connected to the actual driving functions.

Finally, control passes along path **522** to enter block **524** (**FIG. 5**), related to the loading of viewers.

### 4. Loading Viewers

**FIG. 5D** is a flow chart illustrating the process by which viewers are loaded, aggregated, and subsequently processed.

Generally, each applications program can provide one or more viewers. As they are loaded, later applications can update or change viewers already provided, as well as add new viewers.

Referring more specifically to **FIG. 5D**, control passes along path **522** to a loop **5404/5406/5408**. This loop is executed once for each applications program. The function of the loop is to load and aggregate the viewers and viewer fields from the various applications programs. Briefly, this is accomplished by reading one or more viewers and viewer fields from each application's viewer file (XXX.VIE). Each new viewer is added to the internal viewer list, with its fields. One application can modify or add to another's viewer by including the same viewer by name with different information which will then overwrite (or partly overwrite) the original according to what information is given in its viewer file.

After the viewers from all the applications programs have been loaded and aggregated, control passes from the loop at **5408** to enter block **5410**. The function of block **5410** is to find viewers which are referenced in other viewers. An occasion when one viewer references another viewer, for example, is when a viewer which describes how an object can be drawn wants to trigger the drawing of lower level objects. It does this by referring to the viewer which describes how that lower level object is drawn. Viewers which reference each other are then connected.

At subsequent block **5414**, references to functions by number are also found (draw functions). Briefly, a "draw function" is a function which given a record of that object type can draw it (as one or more blocks) based on the fields in that record.

At block **5416**, the maximum number of "pages" for each viewer is determined by finding the largest referenced page number in the viewer. A "page" is a collection of fields in a full screen viewer that fill the screen. The user can then switch between pages to see and change fields (in one record) that would fill a screen.

At block **5418**, objects, fields, and links referenced by name are found in the structure.

Finally, control passes along path **5426** to enter block **528** (**FIG. 5**), related to the loading of menus, keystroke lists, macros, and event lists.

### 5. Loading Menus, Keystroke Lists, Macros, and Event Lists

**FIG. 5E** is a flow chart illustrating the process by which menus, keystroke lists, macros, and event lists are loaded, aggregated, and subsequently processed.

Generally, each applications programs can provide one or more menus, keystrokes, macros, or events. Later applications programs can update or change menus, keystroke entries, macros, events which had already been provided, as well as add new ones. Menus, keystroke entries, macros, and events which reference each other are connected. Finally, all macros are compiled into an internal form for faster execution.

Referring more specifically to **FIG. 5E**, control passes along path **526** to enter a loop **5504/5506/5508**. This loop is executed once for each applications program. The function of the loop is to load and aggregate the menus, keystroke lists, macros, and event lists from the various applications programs. Briefly, this is accomplished by reading one or more menus, keystroke assignments, macros and events from each application's menu file (XXX.MEN). Each new menu is added to the menu list. The same process is followed for the keystroke list, macro list and event list. One application can modify or add to another's menu by including the same menu by name with different entries which will then overwrite or add to the original menu.

After the menus, keystroke lists, macros, and event lists from all the applications programs have been loaded and aggregated, control passes from the loop at **5508** to enter block **5510**. The function of block **5510** is to find the menus which are referenced by other menu entries. An example of when such a reference might occur is when a menu entry leads the user to a second level of menus.

The following blocks accomplish the interconnection of the various menus, keystrokes, macros, and event lists as it is accomplished in the preferred embodiment. It is readily apparent that the particular ordering of this interconnection, or the addition or deletion of certain of the interconnections for particular applications, lies within the ability of one skilled in the art without departing from the scope of the invention.

At block **5512**, any macros which are referenced by menu entries are found. At this point, the macros may be found in the macro list (described above).

At block **5514**, any menus which are referenced by particular keystrokes are found.

At block **5516**, any macros which are referenced by particular keystrokes are found.

A block **5518**, the macros are compiled for faster execution.

At block **5520**, macros which are referenced by particular events are found.

Finally, control passes along path **530** to enter block **532** (**FIG. 5**), related to loading of the BDS drivers.

### 6. Loading BDS Drivers

**FIG. 5F** is a flow chart illustrating the process by which BDS drivers are loaded, aggregated, and subsequently processed.

Generally, each applications program can provide one or more Batch Data Sources (BDS's). Once loaded, references to BDTs are found, as are references to objects, fields, and links in the structure, and references to viewers.

Referring more specifically to **FIG. 5F**, control passes along path **530** to enter a loop **5604/5606/5608**. This loop is executed once for each applications program. The function of the loop is to load and aggregate the BDS's from the various applications programs. Briefly, this is accomplished by reading one or more BDS's from each application's BDS file (XXX.BDS). Each BDS is added to the internal BDS list.

After the BDS's from all the applications programs have been loaded and aggregated, control passes from the loop at **5608** to enter block **5610**. The function of block **5610** is to find the BDT's which are referenced by the BDS's. At this point, the BDT's can be found in the BDT list already read in (**FIG. 5C**).

At block **5612**, any objects, fields, and links referenced in the BDS criteria (in the BDS Table, **FIG. 12**) are found. At this point, the objects, fields, and links may be found in the aggregate structure (FIG. 5A).

At block **5614**, any viewers which are referenced in the BDS's are found. At this point, the viewers may be found in the viewer list (FIG. 5D).

Finally, control passes along path **5634** to enter block **5636** (**FIG. 5**), the main parsing loop.

### 7. Main Parsing Loop

**FIG. 5G** is a flow chart illustrating the main parsing loop according to the preferred embodiment. The main parsing loop of **FIG. 5G** is entered after completion of the applications program loading process **500** (**FIG. 5**).

If the program is in chart mode, then the details of the chart are set according to user specification at block **5708**. For example, the chart is set up to start from the first record in the list, and from the leftmost field.

The "sort list" block **5712** performs the function of sorting the list of records according to details given in the current viewer.

The chart is actually drawn at block **5714**.

The parsing loop itself begins at block **5716**, in which the cursor is drawn (or redrawn). In the preferred parsing loop, several tests are performed at blocks **5718, 5728**, and **5738**. The three tests are
(1) whether a macro is presently running;
(2) whether an event is due; and
(3) whether a key (or mouse button, and so forth) has been depressed.

If any of these conditions are met, then control passes along respective branches **5720, 5730**, and **5740**. The processes found in these contingent branches are similar, in that functions (or sets of functions) are executed, such as at **5724** (macros), **5732** (events), and **5746** (keystrokes). Also, once the respective functions (or sequences of functions) have been executed, any return codes produced by the functions are processed, as shown at blocks **5726, 5736**, and **5748**.

It is possible that certain features of the aggregate applications program have conflicts resolved at run-time, rather than during the initial loading and aggregation process (**FIG. 5**). One choice of a feature which may advantageously have its conflicts resolved at run time are keystrokes. Such an exemplary run-time conflict resolution is indicated at block **5744** (**FIG. 5G**). Because this is a fairly special case, it will be described in greater detail below, in the section on Run-Time Keystroke Conflict Resolution.

### a. Return Code Processing

This subsection describes exemplary return-code settings, and describes the action to be carried out at blocks **5726, 5736**, or **5748** (**FIG. 5G**) if the given return codes are set.

In this Specification, a return code word comprises a set of bits which are returned from a function from an applications program after execution. The following is a description of return-code bits which are present in the preferred embodiment.
Ineffective: If set, this bit specifies that the function did not execute. A possible reason that the function did not execute was that, for example, the function could only execute meaningfully if the aggregate applications program was presently in "chart" mode, when it was in fact in the "model" mode. Preferably, a set "ineffective" bit causes the parsing loop to continue despite the non-execution of the function.
Check Record: If this bit is set, the "record check" routine is called. Briefly, a "record check" routine performs the function of calling a function (specified in the structure for each object) supplied by the user to make any application-specific checks.
Reset Draw/Scale/Cursor/Chart: This bit, if set, causes each of these sets of current variables to be reset to their status before the command was started. This resetting of variables ensures that the called function's manipulation of these variables does not adversely affect other routines' use of the value of the variables.
Rework Chart: This bit, if set, causes the chart information to be reorganized according to details in the current viewer.
Next Key: This bit causes postponement of chosen ones of the following redraw codes until a key is pressed:
Redraw image (meaningful in "model" mode only) causes the image to be redrawn from an internal 3-dimensional object-oriented representation of the previously drawn image.
Redraw data causes an entire image to be redrawn from the original data.
Redraw record causes only a particular record to be redrawn.
Redisp causes the screen to be redisplayed from a raster image copy.

### b. Run-Time Keystroke Conflict Resolution

In the preferred embodiment, conflict resolution of keystrokes is performed at run-time at block **5744** (**FIG. 5G**).

To eliminate ambiguity, it may be desirable in many aggregate applications programs first to translate the keystroke in the list to upper case. Then, a loop is entered in which entries in a Keystroke List are processed by comparison to the keystroke symbol.

Throughout this discussion, the word "keystroke" is used as a shorthand notation for an input device signal of any conceivable type, now known or hereafter developed. For instance, inputs from a bar code reader, button depressions on a "mouse," motion of a joystick, and so forth lie within the contemplation of the present invention. Keystrokes are the focus of this discussion, but the fact that they are often-used means of input in the preferred embodiment does not limit the scope of the inventive principle exemplified herein.

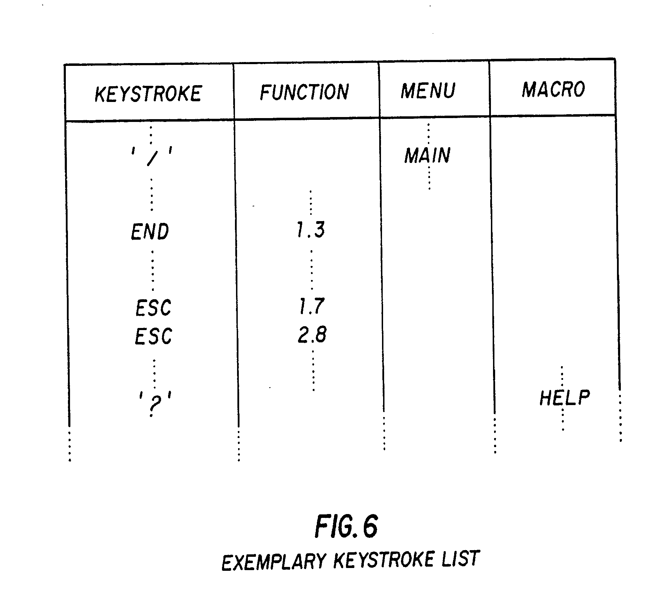

The Keystroke List according to the preferred embodiment may be conceived as a chart having four columns. An exemplary Keystroke List is shown in **FIG. 6**, and illustrates the association of keystrokes with particular functions, menus, or macros. The leftmost column is a list of keystrokes from the various individual applications programs which have been appended end-to-end. The second column is a listing of the function which is to be executed in response to the corresponding keystroke in the column. Advantageously, a number to the left of the decimal point in the function reference refers to the applications program, and the number to the right of the decimal point refers to the particular function within that applications program.

The third column in the Keystroke List is the "menu" column. If a particular keystroke is to invoke a menu, then the name of the menu appears in the menu column across from the particular keystroke entry.

Finally, the name of a macro to be executed in response to a particular keystroke depression may be found opposite the keystroke in the rightmost "macro" column.

There may be entries in none, one, or more than one of the three columns labeled "function," "menu," and "macro." This Keystroke List is merely exemplary, and represents in the abstract a preferred means of implementing and explaining a method of keystroke conflict resolution according to the preferred embodiment. For example, other keystroke lists may be formed in which keystroke lists from the different applications program are not appended end-to-end, but are otherwise sorted for particular purposes.

Keystroke conflicts arise when the same keystroke appears in different applications but have different functions, menus, or macros associated with that keystroke in the respective applications programs. One such example, illustrated in **FIG. 6**, might occur if the "escape" (ESC) character appears in both applications program number 1 and applications program number 2. In this case, ESC would appear twice in the "keystroke" column. Beside the first occurrence of the ESC character might be a function 1.7 from a first applications program. Beside the second occurrence of the ESC character might be a second function 2.8 from a second applications program.

Returning now to discussion of how keystroke conflicts are resolved at run-time, the keystroke resolution routine examines the contents of the aggregate keystroke list. In a preferred embodiment, the keystroke list is examined in a top-down fashion. However, other sequences of ordering and examination of the entries of the keystroke list lie within the contemplation of the present invention.

For example, each of the keystroke entries may be given a "priority" which is a number from 1 to about 10,000 in the preferred embodiment. The aggregate keystroke table is sorted by this priority so that the highest priority keystroke entries go to the top of the table prior to execution. This arrangement advantageously gives application writers control over how to resolve keystroke conflicts.

In the embodiment shown in FIG. 6, the entries in the three columns to the right of the keystroke are examined.

First, if there is an entry in the "menu" column, the following process is executed. If there is a pre-menu function (that is, a function and a menu entry on one row of the Keystroke List), then the function is called. If the execution of the function causes the menu to be inhibited (prevents its operation), then the menu is not executed, and the next row in the Keystroke List is examined. If the function does not inhibit the menu, then the menu is activated so that the subsequent functions or sequence of functions are called. A return code from the menu system is then processed.

This ends description of what occurs if there is a menu entry in the Keystroke List.

If a macro is present in the Keystroke List, execution of the macro is then begun. The return code from the completed macro is then processed in accordance with principles described above, in the section on "processing return codes."

If a function is present in the Keystroke List, then the processor checks to see if the function exists. If the function does not exist, then the next line in the Keystroke List is processed.

If the function does exist, then the function is called "for description only." Calling a function "for description only" function is displayed to the user (display is only in the menus), so that the user can abort its execution. A description effectively comprises an on-line user help comment, which is a self-documenting feature of the functions according to the preferred embodiment. If some automatic feature within the software chooses to abort the function prior to execution, then the function may be rendered "ineffective" even at this early point.

The function is next checked for "invalidity." Briefly, "invalidity" means the function itself returns a code meaning it is invalid in the present context (returned from a "description only" call, described above).

If the function is found invalid, the present line in the Keystroke List is skipped, and the next line in the Keystroke List is examined.

If the function exists, and has passed the above tests, then the function is called for execution. After execution, the return code is processed in accordance with the description of Processing Return Codes above. Finally, control loops back so as to check the next entry in the Keystroke List. In the preferred embodiment, this loop is executed until all entries in the Keystroke List have been examined.

The above description has been provided as representing a substantially optimum mixture of practicality, efficiency, and user-friendliness, and has been found especially suitable in applications programs involving space management. However, variations and adaptations of the preferred embodiment to other applications lie within the contemplation of the present invention, as defined by the appended claims.

If the lines of the Keystroke List were arranged differently, so that their processing would occur in a different order, for example, then the effective means of keystroke conflict resolution would be different. Given the above description, however, one skilled in the art is enabled to practice variations on the preferred embodiment.

The above description describes a process in which that function is executed which is first encountered in the Keystroke List associated with the depressed keystroke. In addition to choosing a different means of appending or interleaving the entries on the Keystroke List, such other means of resolving keystroke conflict resolution include giving each entry in the keystroke table a priority number, and executing the higher priority function first where this is a conflict.

### B. The Batch Data System

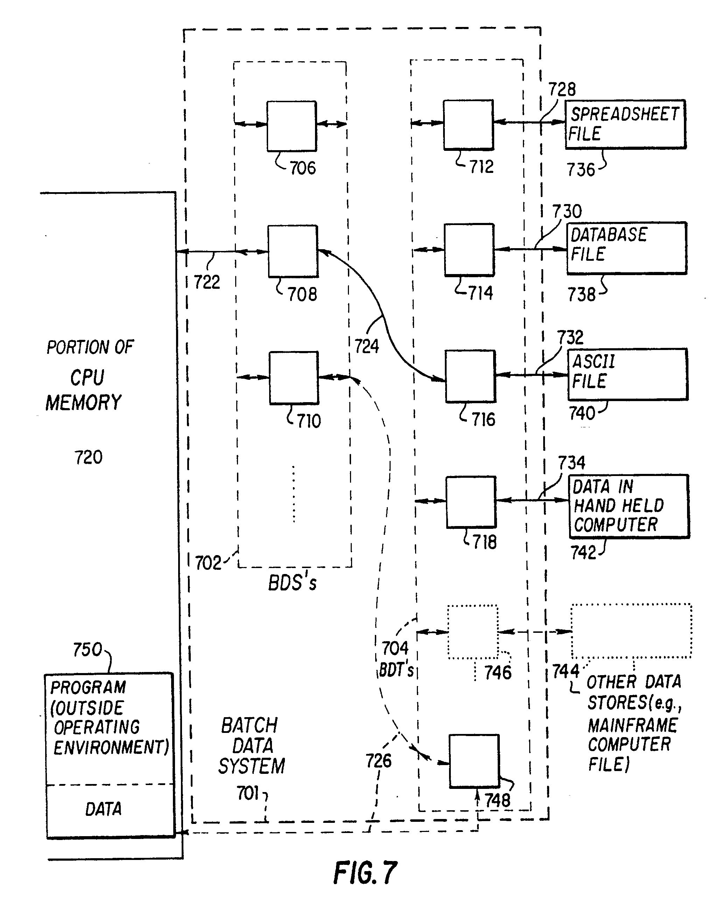

**FIG. 7** represents the relationship of the batch data system **701** to another CPU memory portion **720** and exemplary external data stores **736, 738, 740**, and **742**. **FIG. 7** also represents, in schematic form, the relationship of the BDS's **702** (Batch Data Sources) and BDT's **704** (Batch Data Types).

A Batch Data Source (BDS), such as modules **706, 708**, and **710**, is a software module of higher level than BDT's **712, 714, 716**, and **718**. BDS's specify controls over how a transfer is to be handled. BDS's may include such information as preset (or user-specified) filenames, direction flags, update or overwrite specifications, data filters (at overall, record, and field levels), as well as modifiable references to particular BDT's.

The Batch Data Type (BDT) modules **712, 714, 716**, and **718**, on the other hand, are each device-specific software modules which, in the preferred embodiment, deal much less selectively with raw data going to and from respective external data stores **736, 738, 740**, and **742**.

Generally, it is the purpose of the Batch Data System to efficiently and flexibly carry out batch data transfers. Usually, a batch data transfer occurs between CPU memory and an external data store. Such data stores often include files on a disk attached to the computer system on which is resident the Operating Environment according to the preferred embodiment. For instance, a spreadsheet file **736**, a database file **738**, or an ASCII file **740** are often-used examples of data files found in space-management applications programs. However, it is well within the contemplation of the preferred embodiment that data from a hand-held computer (illustrated as element **742** in **FIG. 7**) could constitute a data store to which the preferred Batch Data System can communicate. Furthermore, data files in external mainframe computers (not specifically shown in **FIG. 7**) are data stores with which the preferred batch data system can communicate.

Finally, the batch data system according to the preferred embodiment can transfer data from one part of CPU memory to another part of CPU memory, so long as one of the two portions of CPU memory is within the space allocated to the Operating Environment. The other portion of CPU memory, to or from which data is transferred, is considered (for the purposes of the transfer) to constitute the "data store" which corresponds to the exemplary "external" data stores **736, 738, 740**, and **742**.

### 1. Interaction of BDS's with BDT's

Referring again to **FIG. 7**, the BDS's **706, 708, 710** are shown in juxtaposition to the BDT's **712, 714, 716**, and **718** within the Batch Data System **701**.

Each of the individual BDS's within BDS block **702** may be connected with any of the individual BDT's within BDT block **704**. The particular connection shown in **FIG. 7** is one in which BDS **708** is connected to BDT **716**. This connection enables a batch transfer of data between an ASCII file **740** and CPU memory **720**.

BDS **708** could just as easily have been connected to other BDT's, such as **712, 714**, or **718**, so that data could be transferred between CPU memory **720** and spreadsheet file **736**, database file **738**, or hand-held computer **742**, respectively.

Similarly, BDT **716** could just as easily have been connected to another BDS, such as **706** or **710**.

The present invention contemplates the possibility of transferring data from the portion of CPU memory **720** allocated to the Operating System to or from another section **750** of CPU memory. This is accomplished through an interconnection indicated at pathway **726** (**FIG. 7**).

The representation of the interaction of the BDS's and BDT's is schematic in nature. The actual flow of program control in the preferred embodiment is described in greater detail below, with respect to **FIGS. 9, 10, 11, 11B**, AND **11B1**.

For the present discussion, it is important to understand that each of the BDS's comprises a high-level specification of the information which the user desires to transfer in or out of CPU memory **720** during the execution of the aggregate applications program. Such high-level specifications may include which objects, sets of objects, fields, or sets of fields which the user desires to be transferred.

Of course, the user need not consciously recognize or appreciate that he is dealing with "objects" or "fields." Rather, all he may be consciously aware of during an interactive session with the aggregate applications program is that, for example, he wants to transfer a set of wholesale prices (fields) for a predetermined set of consumer products (corresponding objects) which are on a given shelf (an object) on a given gondola (an object) in a given store (an object). Thus, although this specification has stated that the user "experiences" the BDS's, he does so in a manner which is comprehensible to him.

The user does not "experience" the functioning of the BDT's. Whichever BDS (such as **708**) is invoked and/or defined by the user effectively shields the user from dealing with any of the specifics of the BDT (such as **716**). This is one of the advantages of the invention.

A further advantage enabled by the flexible interconnectivity of BDS's and BDT's is that when a new external data store **744** is to be added to the system, all that needs to be added to the software is a new BDT **746**. Were it not for the flexible interconnectivity of the various BDS's with the various BDT's, then (assuming there were only three BDS's **706, 708**, and **710**) the prior artisan would have had to write batch data transfer software in three modules: modules which perform the tasks accomplished by **706/746**, by **708/746**, and by **710/746**.

Using the present invention, new low-level, device-specific BDT software can be added without making any changes to the BDS's. This is of great utility, inasmuch as the features of many BDS's are defined interactively by a user who is possessed of potentially limited "computer literacy."

A typical BDT (for instance, one dedicated to a spreadsheet file **736**) would have to be cognizant of the format of the spreadsheet file. For example, it would have to know the ordering of labels for columns, the nature and ordering of the entries within the spreadsheet, and of the conventions adopted for referencing other entries in the spreadsheet if a formula system were employed. The ability to effectuate a rational means of transferring data to and from such a spreadsheet file lies within the ability of one skilled in the art. The details of how to write the actual file transfer software does not need to be detailed here, inasmuch as that particular task, in and of itself, does not lie at the heart of the present invention. Rather, the flexible interconnectivity of BDS's and BDT's represents an advance in the art over known single-entity software systems in which both high-level and low-level functions must be modified and recompiled whenever a data store with a new format is to be added.

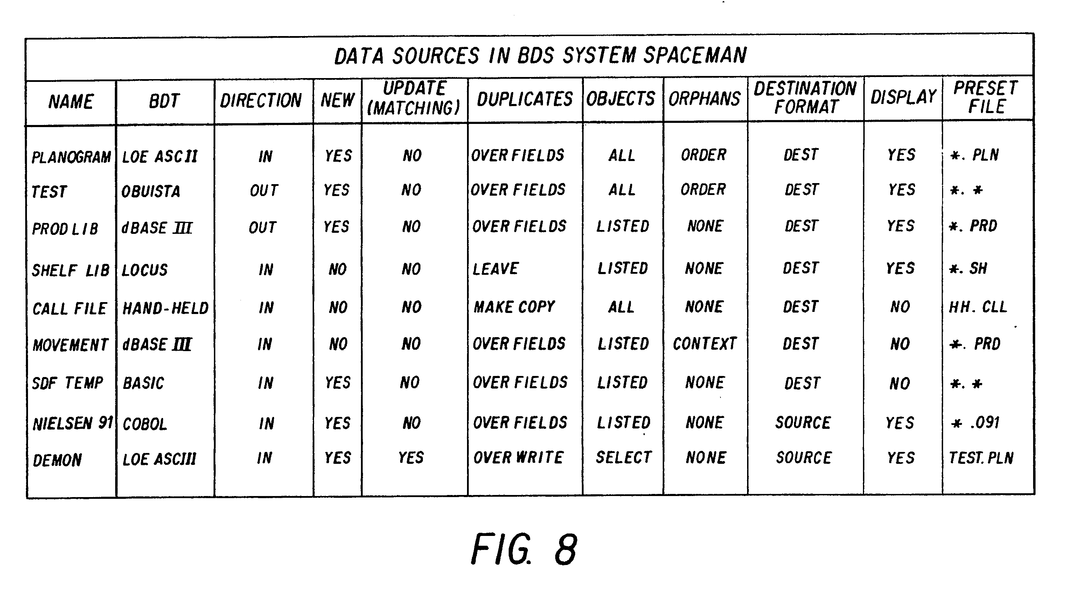

Referring to **FIG. 8**, a chart showing a typical set of BDS data modules is shown. In the leftmost column, the name of the BDS is presented. In the column immediately to the right of the BDS name is the name of the BDT which is presently connected to the corresponding BDS data module. The interconnection of BDS and BDT software modules as shown in **FIG. 7** can be changed interactively by entering information into either of the leftmost two columns in **FIG. 8**. This simple and effective means of redesigning the relationships between BDS and BDT data modules has been found effective in applications when using the preferred embodiment, but many variations thereon may be practiced by one skilled in the art without departing from the spirit of the present invention. Any means by which a BDS may be flexibly connected with a BDT software module lies within the contemplation of the present invention.

The third, fourth, and fifth columns from the left of the chart in **FIG. 8** reflect the values of three flags important in the data transfer process. The Direction, New/Add, and Update/Not Only Update flags, and their function in governing the operation of the Batch Data System transfer process are described in greater detail below in the subsection entitled "The BDS Data Transfer Process".

The sixth column in the chart of **FIG. 8** shows the user's specification of how duplicate records (that is, occurrences of the same object with duplicate "key" fields) are to be handled by the system. The seventh and rightmost column of **FIG. 8** reflect the specification of which objects are to be transferred. The meaning of the specifications in these two columns will also be described in greater detail below.

The seventh column of **FIG. 8**, entitled "objects", shows which objects are to be transferred, and whether the user should have any interactive control during the process. See discussion of FIG. 8 below, in the subsection "The BDS Data Transfer Process."

The eighth column of **FIG. 8**, entitled "orphans", shows how to handle objects which may be given with incomplete link information. (See the subsection entitled "The DATA READ Routine.")

The ninth column of **FIG. 8**, entitled "destination format", shows whether to use a structure which is already at the destination, a copy of the internal structure, or another separately specified "template" structure. (See description of block 1126 below, in the description of FIG. 11.)

The tenth column of **FIG. 8**, entitled "display", shows whether the user is to be given an on-screen display describing the transfer, and also whether errors during the transfer should be displayed or ignored.

The eleventh column of **FIG. 8**, entitled "preset file", shows the file to use for the transfer or a "wild card" specifying a set of files from which the user will choose.

The chart of **FIG. 8** is presented as a nonlimiting example of the use with which the data transfer process may be directed by the user. The content and arrangement of the exemplary chart in **FIG. 8** should not be construed as defining features which are necessary to all embodiments of the invention. Certain features may be omitted, and others not explicitly described here may be present, and still lie within the scope of the inventive concept of flexible interconnection of high-level software modules with low-level data link drivers.

### 2. The BDS Data Transfer Process

Referring again to **FIG. 7**, the process by which data is transferred between CPU memory **720** and an external data store such as ASCII file **740** will here be described. The majority of this description will concern the way that functions are allocated between a typical BDS **708** and a typical BDT **716**. **FIG. 7** is schematic in nature. Although the BDS **708** and the BDT **716** are properly indicated as separate software modules, control is passed between the two modules repeatedly throughout a typical data transfer in the preferred embodiment. This repeated passage of control will now be described.

Referring to **FIG. 9**, a basic flow chart of the BDS data transfer process is presented.

In **FIG. 9** (as well as in the figures following it), blocks such as **908** and **958** are drawn with double lines on the right and left sides of the blocks. The double lines indicate that the function is substantially performed in the BDT. A block which does not have double lines on the right and left sides of the block indicates that the function is performed substantially in the BDS itself. A block having dotted lines on the left and right sides is performed concurrently in the BDS and BDT, control being shared between the two modules.

A transfer is invoked by, for example, a user entering a command which requires additional information to be sent to or from an external data device or a "RAM disk" (or block of CPU memory, in a multitask environment). Upon this invocation of transfer, control passes along path **902** to block **904**.

At block **904**, the transfer type is determined, based on (in the preferred embodiment) three different flag bits. Referring briefly to **FIG. 10**, five transfer types which are especially useful in the preferred embodiment head columns in a chart. The flag values of three different flags defining each given transfer type are listed in the chart.

### FLAGS

The three flags have the following meanings:
DIRECTION: A Direction flag having a value of "in" means that the transfer is to be from an external data store (or "RAM disk") into CPU memory. If the Direction flag has the value "out," then the data transfer direction is out of CPU memory toward the data store.
"NEW/ADD": This flag (if "new") determines that the data existing in the destination file is erased before the transfer.
"UPDATE/NOT ONLY UPDATE": This flag (if "update") determines that only records with keys matching those of pre-existing data records update the pre-existing data records, and that incoming data records which do not have keys matching those of any pre-existing records are ignored.

### TRANSFER TYPES

Five transfer types useful to the preferred embodiment of the present invention may be described as follows:
LOAD: Causes all information presently existing in CPU memory to be erased. New data is transferred in.
MERGE: Information presently in CPU memory is left untouched, and new data is added to the existing information by the batch data transfer. The Merge transfer type is followed during the loading and aggregation of the various features of the applications programs (**FIG. 5**).
UPDATE FROM: Information presently existing in CPU memory is left untouched, and some new data is transferred in by the batch data transfer. However, data is transferred into records only if those records already exist. If data in the batch data transfer is intended for records that do not exist, this unwanted data is not written into CPU memory.
UPDATE TO: Causes a data transfer out of CPU memory. Information presently existing in the destination data store is left untouched. Any data in the batch data transfer which would not overwrite this preexisting data in the data store is allowed to be written into the data store.
SAVE: Data in the external data store is erased, and data from CPU memory is transferred to the external data store.

Referring again briefly to **FIG. 8**, in the means of handling duplicates most specified in the sixth column, for each BDS listed in the first column. The preferred embodiment features a duplicate handling system which resolves conflicts in a variety of ways.

First, the OVERWRITE option erases an existing record to make room for all fields of an incoming record. The OVERWRITE FIELDS option allows only those fields which are transferred to be updated; the other fields which are presumably not to be updated are left unaffected by the transfer.

The LEAVE option treats the existing record as having a higher priority than the incoming record's data. In this option, the only incoming data which is allowed to be written is that which will occupy previously nonexistent records.

The MAKE COPY option may be followed so that in the event of a conflict between records or fields, the descriptive identifier of the incoming record or field is modified, and the new pre-existing record or fields are inserted under the previous descriptive identifier.

These are but examples of the ways contemplated by the present invention by which duplicate conflicts may be resolved.

The column entitled "objects" in **FIG. 8** indicates three options which are among those present in the preferred embodiment for showing which objects are to be transferred.
All: The "all" option indicates that all objects are to be transferred. That is, no filter is to be performed on the transferred batch of data.
Listed: The "listed" option indicates that only those objects which are listed in a predetermined field (accessible and modifiable through the menu system, for example) are to be transferred.
Select: The "select" option indicates that the user may interactively select which objects are to be transferred immediately before the transfer itself.

Returning now to **FIG. 9**, after the transfer type has been chosen as described above with respect to the values of the flags in **FIG. 10**, the external data file is chosen at block **906**. This external file choice is determined (explicitly or implicitly) through the user's choice of information which he desires to transfer. If there is an ambiguity, the user may be prompted to choose from one of the possibilities.

At block **908**, the "BDT INIT" routine is called. This routine, resident in the BDT itself, initializes the BDT for the transfer. For example, a database BDT would need to be "opened" before any transfer could be done.

The block indicated as **910** and **936** represents the determination of the structure (as understood in **FIG. 2**) of the batch data transfer. This determination is described in greater detail with respect to **FIG. 11**, below. Briefly, the sub-block labeled **910** (**FIG. 9**) relates to more automatic features of the transfer structure determination. Conversely, sub-block **936** relates to the determination of specifications for objects and fields to be transferred which may be more data-dependent, and are therefore more user-oriented (rather than "automatic").

At block **954/956**, the actual data transfer is performed, including resolution of any conflicts.

Finally, at block **958**, the "BDT CLOSE" routine is called. This routine carries out the channel closing routine which are complementary to those of the "BDT INIT" routine **908**, described above. Briefly, the BDT CLOSE routine performs the functions of, for example, telling a disk controller that the module is done with the file, or telling a database that a transfer is over, so that no "hangup" occurs and so that any buffer areas are freed for future use.

Throughout the transfer process, if there is a serious problem with the data channel, then the BDT routine may return a failure code to the BDS. Such serious problems might include occurrences when a specified file is not found, there is physical connection failure in the data link, or a disk is full, and so forth. When the BDS receives the failure code from the BDT, the BDS may halt the process and notify the user with either a generic failure message or a specific message supplied by the particular BDT routine. After a failure such as this, the BDT CLOSE routine is called to terminate the transfer. Such events are not specifically indicated in **FIG. 9**, due to their extraordinary nature. However, it should be understood that the BDT CLOSE routine could be entered at virtually any point after the BDT INIT routine is executed.

The BDS Table. A more detailed understanding of the BDS Data Transfer Process may be facilitated if the exemplary BDS Table of **FIG. 12** is understood. Of course, variations and modifications of the exemplary BDS Table may be made by those skilled in the art, while still remaining within the scope of the present invention.

Briefly, it is the function of a BDS Table to describe the high level, storage-type-independent features of a data transfer to or from internal memory storage. FIG. 12 is a drawing of how the configuration entries in a BDS are stored internally. Most entries are "once-only" settings which apply to the whole BDS. Other entries can be set for each object listed in the BDS. The arrows describe "1-to-many" links, showing, for example, that each BDS can have many BDS OBJECTS. The meaning of significant terms in the BDS Table are described elsewhere in this Specification.

More specifically, the level of blocks labelled "BDS" specifies entries made once only for each BDS. The arrows leading from the BDS entries indicate many BDS OBJECTS that can be supplied within each BDS. The level of the BDS Table labelled "BDS Object" specifies entries made once only for each BDS OBJECT. The arrows emanating from BDS OBJECTS, going to BDS CRITERIA, indicate many BDS CRITERIA that can be supplied with each BDS OBJECT. The other arrows emanating from BDS OBJECTS, going to BDS FIELDS, indicate many BDS FIELDS that can be supplied with each BDS OBJECT. The level of the BDS Table labelled "BDS Criteria" specifies entries made once only for each BDS CRITERIA. The level of the BDS Table labelled "BDS Field" specifies entries made once only for each BDS FIELD.

With this understanding of the BDS Table, the BDS Data Transfer Process may be more easily understood.

**FIG. 11** The overview of the BDS data transfer process shown in **FIG. 9** will now be described with greater specificity, with reference to **FIG. 11**.

Referring to **FIG. 11**, blocks **904, 906** and **908** perform the functions as described above, with respect to **FIG. 9**.

Block **1110** indicates that control proceeds along one of five paths, depending on which of the five transfer types were determined in block **904**. Although block **1110** would indicate that a single branch is performed, such a centralization of branching logic is not necessary to implement the invention. For example, a single main path could have a series of individual tests which branch to such specific functions as are indicated by blocks **1124, 1126, 1132**, and **1144**. It is therefore not a necessary feature of the invention to centralize the "branch on transfer type" function, but rather is presented so as to simplify the exposition of the processes involved. Three different branch on transfer type blocks **1110, 1138**, and **1160** are present in **FIG. 11**. The five meaningful transfer types according to the preferred embodiment are arranged vertically above corresponding branches for the same transfer type so as to facilitate understanding.

Referring again to the branch on transfer type block **1110**, one of five paths **1114, 1116, 1118, 1120**, or **1122** is followed, depending on the transfer type.

If the three flags (direction, new/add, update/not only update) determine that the transfer type is "load," then path **1114** is followed. In the preferred embodiment, the user is prompted to verify that he indeed wishes to have all data presently existing in CPU memory destroyed so that new data from the external data store can be loaded in its place. (If the user does not wish existing data to be overwritten, then control follows a path which will abort the entire transfer.) Assuming the user verifies his intention to erase all data present in CPU memory, control follows a path 1125 to the "READ FORMAT" routine present in the BDT.

If the three flags determine that the transfer type is "Merge," "Update From," or "Update To," then control passes along lines **1116, 1118**, or **1120**, respectively, to the BDT "READ FORMAT" routine **1134**. This routine will be described in greater detail below.

If the three flags determine that the transfer type is Save, then control passes along path **1122** to a decision block **1126**. Based on a three-way flag called "predefined structure," control passes along one of three paths **1128, 1130**, or **1131**, depending on whether a Destination, Source, or Template structure, is to be used as the "target" external structure.

Destination means the structure should be read from the existing target file before transfer; Source means use the internal structure.

Briefly, a Template file is a data file or external source of the same type as recognized by the BDT with a structure which is used (if DEST=TEMPLATE) for the new external structure. The Template file is formed by previously saving a data file or constructing it externally. If the predefined structure is determined by the Template file, then control passes along line **1131** to the READ FORMAT routine in the BDT. The READ FORMAT routine is executed for the Template file.

If the predefined structure is determined by the Source, then the internal data structure defined by the contents of CPU memory is used. Control passes along path **1130**, avoiding the necessity of calling the READ FORMAT routine in the BDT.

If the predefined structure is found to be the Destination structure, then control passes along path **1128** to the READ FORMAT routine **1134**. The READ FORMAT routine in the BDT operates on the external file.

Briefly, the purpose of the READ FORMAT routine executed at either block **1132** or **1134** is to determine the structure which is to be expected in the transfer between the BDT and the external data store. The details of this READ FORMAT routine lie within the ability of one skilled in the art, given a knowledge of the particular type of external data store (spreadsheet file, database file, or ASCII file). One skilled in the art will recognize that the functions which the READ FORMAT routine may perform include learning what objects are available, what fields are available for each object, and the field type. The READ FORMAT routine also provides links between objects.

Regardless of whether the READ FORMAT routine in the BDT was executed at **1132** or **1134**, or whether it was bypassed along path **1130**, control eventually passes to block **1136**. Block **1136** involves the production by the BDS (possibly with the assistance of interactive commands) of further specifications for the objects, fields, and field criteria which are to filter undesired data from reaching the destination. The specifications formed in block **1136** can be thought of as higher-level supplementary filters on the data which might otherwise have been transferred if only the transfer structure determined in block **1135** were maintained.

Briefly, the BDS specifications for objects, fields, and field criteria may be resident in a BDS Table. The BDS Table is, in the preferred embodiment, interactively modifiable through user interaction.

Such a BDS Table is indicated in exemplary form in **FIG. 12**.

Typically, as specified in the BDS Table, the criteria to be applied as filtering rules comprise an object or field, followed by a relation (such as =, >, <), followed in turn by a value. One example might be "product name = dog food." If this were the only specification, then only those objects having a product name of "dog food" would be transferred. Of course, different criteria can be joined using Boolean logic, so that a variety of objects of different specifications can be transferred, for example, using an "OR" connector between the different criteria specifications.

Various options exist for choosing which objects to transfer, which fields to transfer, and field criteria (limiting which records are to be transferred).

Options for objects, records, and fields will next be described.

The ALL option allows all objects possible to be transferred (that is, all understood by source and destination formats).

The ONLY option allows to be transferred only those predetermined objects which are specified in the BDS OBJECT list.

The CHOOSE option allows the user to select (at run time) specific objects to be transferred.

### Records

For each object which is chosen, the preferred embodiment allows determination of which records are to be transferred. To this end, an actual data filter (such as "equal to" or "less than") may be used.

In the ALL option, all records for a given object may be transferred. That is, effectively no filter is employed.

The ONLY option specifies from a predetermined list (the BDS CRITERIA list) the field conditions for inclusion in the transfer.

The CHOOSE option allows the user to specify the field conditions at run time.

### Fields

The preferred embodiment also allows a similar filtering function to be performed, using the ALL, ONLY, and CHOOSE options which are analogous to those used to filter objects and records. All fields, a predetermined list of fields, or a specification of fields chosen at run time may be employed.

The duplicate handling system as described above for records is also applicable to other levels in one BDS. For example, the fields below the record level, and the objects above the record level may also be handled in the same manner as described above.

Referring again to **FIG. 11**, at block **1138** is another branch on transfer type decision. If the Direction flag has the value IN, then control passes along one of lines **1140, 1142**, or **1144**, depending on whether the particular transfer type is Load, Merge, or Update From, respectively. In any of these cases, the DATA READ routine **1154** is executed. The DATA READ routine will be described in greater detail below, with respect to **FIGS. 11B** and **11B1**.

If the Direction flag has the value OUT, then control passes along path **1148** or **1150**, depending on whether the transfer type is Update To or Save, respectively.

If the transfer type is Save (indicating data in the external data store is to be erased before it is transferred to the CPU), then the WRITE FORMAT routine is executed at **1152**.

The WRITE FORMAT routine **1152** is resident in the particular BDT. The WRITE FORMAT routine may be coded by one skilled in the art, given a knowledge of the particular external data store which is to be the destination of the Save transfer. Complementary functions are performed in the WRITE FORMAT routine **1152** as were performed in the READ FORMAT routine **1132** or **1134**. Specifically, the transfer structure occurring between the BDT and the external data store is here determined. Because any previously existing data and accompanying data structure were first erased in the external data store, then the WRITE FORMAT routine effectively forces the data structure on the destination. The WRITE FORMAT routine according to the preferred embodiment needs to know from the BDS which objects to store, which fields to store, and the type of the fields, as well as the link details between objects. This is all given to the WRITE FORMAT routine in exactly the same form as the READ FORMAT routine is expected to return it.

No such new external data structure must be set up if the transfer type is Update To, so that the WRITE FORMAT routine is bypassed in that case as control is passed along path **1148**.

Regardless of whether the Update To or Save transfer type is invoked, control passes to the DATA WRITE routine **1156**. In this block **1156**, the data is actually transferred from the CPU memory to the destination data store. The DATA WRITE routine is described in greater detail below, with reference to **FIG. 11A**.

When the data transfer has been completed (either into CPU memory by DATA READ routine **1154** or out of CPU memory by the DATA WRITE routine **1156**), control passes to the BDT CLOSE routine **958**. The BDT CLOSE routine functions as described above, with special reference to **FIG. 9**.

Although the data transfer itself is technically complete upon the termination of the BDT CLOSE routine **958**, certain tasks are advantageously performed in the event of an inward transfer to CPU memory. Block **1160** is a branch on transfer type decision block in which if the Direction flag has the value IN (indicating the transfer type must be either Load, Merge, or Update From), then control must pass along paths **1162, 1164**, or **1166**, respectively. When control passes along any of these three paths, any formula-based fields (those fields whose values are defined in terms of the values present in other fields) are calculated at block **1172** prior to further processing. After formula-based fields are calculated at **1172**, control passes out of the Batch Data System TRANSFER routine. No such formula-based field calculation is necessary if the Direction flag has the value OUT. In the Update To and Save transfers, control passes directly along respective paths **1168** and **1170** to exit from the data transfer. The user may continue his interactive session, the data transfer complete.

### a. The "DATA WRITE" Routine

Referring to **FIG. 11A**, the DATA WRITE routine is shown in flow chart format. In keeping with the standard established in previous flow charts in this specification, blocks such as **11118, 11124**, and **11126** are drawn with double vertical lines on the left and right sides to indicate those functions which are performed substantially within the BDT. Functions which are performed substantially within the BDS are shown without double lines on the left and right sides. As can be seen from **FIG. 11A**, control is passed back and forth between the BDS and BDT even internal to the "field" loop nested within the record loop.

When the DATA WRITE routine is invoked, control passes along pathway **11102** to block **11104**. At block **11104**, the criteria for a given record is checked. If any of the criteria fail, that record is ignored (not written). Control passes along path **11108** back up to the next application of block **11104** to the subsequent data record. If all criteria for the record are met, then control passes along path **11110** under a loop which operates on each field in the record. The field is translated to the "type" (such as integer, floating point, and so forth) which matches the field type of the destination fields. If no translation is necessary, no translation occurs in block **11112**, and control passes to block **14**.

At block **11114**, the data in a field belonging to a record having passed all criteria is passed to the BDT WRITE routine for the transfer.

A "first record" flag (or some other means of communicating whether this is the first pass through the field loop defined between elements **11112** and **11128**) is passed to the BDT routine. At decision block **11118**, if this is determined to be the first record in the transfer, then INIT routine for the new record is performed in the BDT at block **11124** for the new record. Briefly, the INIT routine performs the function of initializing the BDT for a transfer. (For example, a database BDT would need to be "opened" before any transfer could be performed).

After the INIT routine is complete (or if it was not necessary because it was not the first record), then control passes from block **11124** or directly along path **11122** to block **11126**. Block **11126** represents the actual transfer of the field value from the BDT to the external data store.

The loop defined by blocks **11112, 11128**, and **11130** is repeated for each field within the record. Upon completion of the field loop for the last field in the record, control passes along path **11134** to decision block **11136**. Decision block **11136** determines when the last record has been transferred. As long as there are more records to be transferred, control will return along path **11138** to record criteria check block **11104**. When the last record has been transferred, control passes along path **11140** to exit the DATA WRITE routine.

This description of the DATA WRITE routine is premised on an advantageous choice of arrangements of fields within records. This advantageous arrangement has been found efficient in the preferred embodiment, but variations thereon may be made without departing from the scope of the invention. For instance, sequential processing of fields from different records lies within the conception of the present invention, although efficiency in the development and execution of the preferred embodiment dictates nesting the field loop within the record loop.

### b. The "DATA READ" Routine

Referring to **FIG. 11B**, the DATA READ routine is illustrated in flow chart form.

Briefly, in much the same manner as the DATA WRITE routine, the present DATA READ routine comprises a field loop nested within a record loop.

The DATA READ routine is invoked at **11202**, and control passes to the beginning of the record loop to enter block **11204**. Block **11204** passes control to the BDT, where the object name for the present record is determined from the external data store. This object name is passed to the BDS.

After control is passed back to the BDS at block **11206**, the object is checked against a list in the BDS Tables of required objects. At block **11208**, control branches according to whether the object is required. If the object is not required, control passes along path **11210** and this record is ignored (not written). The next record will then be examined, after control passes along path **11260** to reenter the top of the record loop at **11204**.

If an object is required upon comparison to the BDS Tables, then control passes along path **11212** to record preprocessing block **11214**. Basically, the record preprocessing block may involve the allocation of space for the incoming record. Also, a pre-insert routine (if one is necessary for this object) is executed. Such a pre-insert routine might involve the assignment of any default values or similar bookkeeping procedures. Although not explicitly indicated in **FIG. 11B**, transfer of this record can be stopped at this point (and control returned to block **11204**) if, for example, the condition occurs that the preprocessing routines determine that no further loading of that object is allowed (for instance, in a DEMO version of a program allowing no more than a certain number of objects to be used).

Assuming the record transfer was not terminated within the record preprocessing block **11214**, control passes to the beginning of a field loop delimited by blocks **11216** and **11250**.

The field loop **11216/11250** begins by the BDT routine fetching the field value from the external data store at **11216**. At bloc+ **11220**, the field value and the type of the field (such as integer, floating point, and so forth) is determined.

t "lock **11222**, the field is checked against the criteria in the BDS Table. Field criteria might be whether the price (a field) of the particular consumer product (an object) is greater than a particular dollar value, or whether the identity field of the object equals "dog food," and so forth. If the field fails the criteria check, control passes through decision block **11224** along path **11226**, and the rest of the record is ignored. In this case, control then passes along path **11260** to reenter the top of the record loop at block **11204**.

If the field passes the criteria check, then control passes through decision block **11224** along path **11228**. Then, block **11230** determines whether the field is required internally. Briefly, a test of whether a field is required internally comprises checking the "which fields" entry for the BDS OBJECT and then finding it in the BDS FIELD list.

If the field is not required internally, then control passes through decision block **11232** along path **11234** so that the present field is ignored. Control may thereby be returned to the top of the field loop at block **11216**.

If the field is internally required, then control passes through decision block **11232** along path **11236**. Then, a translation from one type (integer, floating point and so forth) is performed at block **11238**, if necessary.

Then, at block **11240**, the actual field value is transferred from the BDT through the BDS into CPU memory.

After the actual transfer is complete, it is determined whether the field is a descriptive field or whether the field is a link. If the field is a link, then control passes through decision block **11242** along path **11246** to block **11248**. Block **11248** adds the link to the "family tree." If the field is not a link, then control passes through decision block **11242** along path **11244** to the bottom of the field loop at **11250**.

The field loop defined by block **11216** and block **11250** is processed once for each field value within the record. After the final field has been processed, then control passes from the field loop through decision block **11250** to enter the end-of-record cleanup routine **11252**. EOR cleanup routine **11252** is described in greater detail below, with respect to FIG. **11B1**.

After the EOR cleanup routine has been completed, control passes to decision block **11254**. Decision block **11254** determines whether there are any more records to be transferred. If there are more records to be transferred, then control passes along path **11258** to the top of the record loop at block **11204**. If there are no more records to be transferred, control passes along path **11262** to exit the DATA READ routine.

Briefly, a FAMILY TREE is a trace of the complex hierarchy of a record up the data structure so that it can be linked in at the correct point.

Referring now to **FIG. 11B1**, the end of record (EOR) CLEANUP routine **11252** (**FIG. 11B**) is illustrated. Although the EOR CLEANUP routine is illustrated in **FIG. 11B** as being after the decision block **11250** which ends the field loop, it is to be understood that the EOR CLEANUP routine could be placed within the field loop on a branch which tested whether the last link was being processed. The EOR CLEANUP routine is illustrated outside the loop for purposes of clarity and simplicity, inasmuch as it is executed after the final field in the record has been processed.

Control passes to the EOR CLEANUP routine along path **112102** (**FIG. 11B1**). At decision block **112104**, the record is checked to see whether all criteria have been satisfied. Although previous criteria checks may have been encountered in past during the iteration of the field loop in **FIG. 11B**, additional criteria tests may remain for this EOR CLEANUP routine. For instance, a test which depends on a function of all fields within the record cannot be performed until all fields have been transferred. For instance, an "OR" (or "AND") function may have to be applied to a series of fields to determine if any of them (or all of them) possess a certain value. Clearly, in this example, a multi-field criteria check could have been performed iteratively within the field loop **11216/11250** (**FIG. 11B**). The present criteria check **112104** (**FIG. 11B1**) is thus but one of several variations on the preferred embodiment which lie within the scope of the present invention.

If the criteria check determines that certain criteria are not satisfied, then control passes along path **112106**, and the rest of the present record is ignored. Control passes along paths **112158** and **112162** to re-enter the "record" loop whose end is marked by block **11254** (**FIG. 11B**).

If the criteria check at block **112104** (**FIG. 11B1**) determines that all the criteria are satisfied, then control passes along path **112108** to block **112110**. Block **112110** causes spaces in the family tree to be filled according to four methods prescribed in the BDS Table. Four methods of filling in spaces of the family tree have been found especially useful in applications encountered by the preferred embodiment. Those methods include the following:
CONTEXT: In this method, the present position of the user determines where, for example, the object fits in the family tree by looking at the present position of the user in the system. For example, if the user is viewing a particular gondola, and the incoming object is a shelf, the CONTEXT procedure assigns the shelf object to the gondola which the user is viewing.
ORDER: In this procedure, the most recently transferred record for the required object determines how the family tree shall be filled in with respect to the present record.
NONE: In this option, no action is taken. That is, no spaces are effectively filled in the family tree.
CATCH-ALL (always performed after one of the previous methods): If information is still missing from the family tree, then parents are artificially created with the name "AUTO" in order to connect in the record at all.

Whichever method is chosen, control passes along one of lines **112110, 112112, 112114**, or **112116** to block **112118**. At block **112118**, the spaces not filled in by the above methods are filled in by making surrogates. In this manner, the record is connected up to the internal data structure in a temporary fashion.

Next, at block **112120**, the "keys" of the record are checked to make sure that this is not a duplicate record. (As is well understood in the art, a "key" is a set of characters or other identifiers which uniquely identify an item.) If the object is a duplicate, control passes through decision block **112122** along path **112126**. If the present record is not a duplicate, then control passes through decision block **11122** along path **112124**.

If the original record is a surrogate, then control passes through decision block **112128** along path **112130**. The surrogate is then overwritten at block **112124**.

If the original record is not a surrogate, then control passes through decision block **112128** along path **112132** to duplicate handling block **112136**. Duplicate handling block **112136** functions as follows.

The means of handling a record which is a duplicate of an original record is based on a choice of a variety of duplicate handling methods specified from the BDS. Four duplicate handling specifications which have found special utility in the applications envisioned by the preferred embodiment include the following:
OVERWRITE:: A new record is copied over the old record so that even unchanged (unduplicated) fields are lost from the original record.
OVERWRITE FIELDS: In this method of duplicate handling, the transferred fields of new incoming records are copied into the old fields. This is the only choice meaningful for UPDATE FROM transfers.
LEAVE: The original record is left untouched; the new incoming record is ignored.
MAKE DUPLICATE: In this method of duplicate handling, the keys of the new record are changed so that it is no longer a duplicate of the original record.

Returning to the discussion of the common case where the incoming record is not a duplicate of a record existing in the destination, control is passed from the duplicate check decision block **112122** along path **112124**. Then, the UPDATE flag is checked. If the UPDATE flag has the value "update," this indicates that all those preexisting fields should be updated, and control passes along path **112152** so that the present record (not a duplicate of an existing record) is ignored. Control passes along paths **112152, 112158**, and **112162** to return to the end of the record loop (**FIG. 11B**) so that the next incoming record can be processed.

If the UPDATE flag is set to the value "not only update," then control passes through decision block **112150** along **112154**. In all cases when the incoming record was a duplicate of an existing record, as well as in cases in which non-duplicative incoming records were received with a "not only update" flag, control passes along respective lines **112138, 112140, 112142, 112144, 112148**, or **112154** to block **112146**.

At block **112146**, the new record is connected to the internal data structure according to information in the now complete family tree. After this new record is connected to the internal data structure at block **112146**, then control passes along path **112162** to exit the EOR CLEANUP routine to reach the end of the record loop (**FIG. 11B**).

In this manner, new incoming records are connected to the accumulating internal data structure as the transfer progresses.

### IV. Space Management System Incorporating Software Operating Environment

Referring to **FIG. 13**, there is illustrated a preferred embodiment of a space management system according to the present invention designated generally by the reference numeral **1302**. The preferred space management system **1302** includes a space management applications program **1304** and the Operating Environment **102**, as illustrated and described above with reference to **FIGS. 1-12**. The preferred space management system **1302** may be written in C language, although coding in other languages certainly lies within the scope of the present invention.

The combination of the preferred space management applications program **1304** and the Operating Environment **102** facilitates concurrent execution of additional applications programs with the preferred space management system's applications program **1304**. This results from the Operating Environment-aggregate feature disclosed in detail above.

In the preferred space management system, only the Message files are kept separate between applications programs. These are read in separately because, as independent files, they allow the applications programs to be understood in a variety of languages.

As shown in **FIG. 13**, the preferred space management applications program **1304** includes a Functions File **1308** and a set of Support Files **1306**. Support files **1306** include a structure file **1310**, a menu file **1312**, a keystroke file **1314**, a macro file **1316**, an event file **1317**, a viewer file **1318**, a batch data source file **1320**, and a message file **1322**. A second applications program **1324** including a set of support files **1326** is shown with the space management system **1302**.

The Operating Environment **102** allows the preferred space management system's space management applications program **1304** to be concurrently executed with the applications program **1324**. A structure file included in the support files 1326 of the applications program **1324** is aggregated with the structure file **1310** to form a common data structure. The formation of an aggregate structure is enabled by the Operating Environment **102**, described above.

It should be understood that a large number of other applications programs such as program **1324** may be concurrently executed with the space management system **1302**. The maximum number of applications programs varies greatly, and is determined in accordance with the size of the available memory of the computer being used, and with the size of each of the applications programs.

The preferred space management system **1302** according to the present invention provides increased flexibility by advantageously using features resident in the Operating Environment **102**. Thus,in the preferred space management system **1302**, it is the Operating Environment **102**, as compared with the preferred space management applications program **1304**, which includes many general purpose features, such as functions **124**, macro **122** and formulas **138**.

Enhanced flexibility allowed by the preferred space management system **1302** may be achieved by adaptation of functions from known applications program into either the applications programs **1304** or the Operating Environment **102**. Advantageously, the functions added to the Operating Environment **102** are not application specific, but are generally useful with various other applications programs as well.

An advantage of storing generic, utility-type functions in the Operating Environment **102** is to avoid duplications in various other applications programs and to efficiently use the Operating Environment **102**. Functions specific to space management are stored in the functions **1308** in the applications program **1304**. The preferred criteria used to determine optimum placement of a particular function is whether the function is space management specific.

For example, if a known reporting scheme permits setting up a specific field of product parameters in reports, or generating subtotals, specific internal functions are required which provide these reporting schemes. The equivalent features in the preferred space management system **1302** lie in the Viewer system **114** resident in the Operating Environment **102**. This Viewer function has much more flexibility in the preferred space management system **1302** than in the reporting functions of known systems. There are significantly more options available with the preferred space management system Viewer function. For example, the preferred space management system **1302** is not limited to reports relating to products; rather can generate reports at the store level, listing gondolas and sections; and can add user-defined fields made up by formulas; and other user-selected options.

However, the preferred space management system **1302** is advantageously arranged to be used by users of existing applications programs without being confused by its dramatically increased flexibility. In one embodiment, it is a design criteria to actually limit the outwardly apparent flexibility of the Operating Environment **102** so the user would not be overwhelmed by the number of available options. This limitation of the appearance of flexibility is best achieved by using Operating Environment features to limit available options.

The Operating Environment **102** is preferably arranged such that field names are stored in structure files and data is stored in separate data files. In known applications programs, the user normally has the ability to change data files. In contrast, in the preferred space management system **1302**, the user may change the data structure by changing and adding objects and fields in the structure file **1310**. The Operating Environment **102** keeps the structure files with the field names separate from the data. This is a distinct advantage over known systems, in which field names were stored with the data. Thus, to facilitate customization by the user of the preferred space management system, the Operating Environment allows the user to make changes to the structure files.

The preferred space management applications program **1304** includes the Function File **1308** that consists of a plurality of separate functions or function modules that may be linked together. The Support Files **1306** are read by the Operating Environment **102** in substantially the same manner as data files.

The preferred Support Files **1306** comprise several groups of files set up as follows. The structure file **1310** implements or defines a data structure such as illustrated in **FIGS. 14A** or **14B**. The Menus **1312**, Keystrokes **1314**, Macros **1316**, are stored in the same file in the preferred embodiment; however, they could be written into separate files. Macros **1316** are another way to specify executable code that is also user changeable. The Events **1317** are used for functions specific to space management functions. The Viewers **1318** control how the screens will look, including how to draw something in graphics. The Batch Data Sources **1320** are specific to the preferred space management applications program to specify the logical rules for getting data into and out of external data bases. The BDS's **1320** determine what information is desired to be accessed. The Messages **1322** are essentially short programs which provide data for various Operating Environment's **102** functions. These functions may be resident in the Operating Environment **102** when not specific to the preferred space management system **1302** or otherwise reside in the preferred space management applications program **1304**. Messages are accessed by their associated numbers to provide for work in different countries; they allow specifying certain words by number in a separate area; the names can be translated and the system will run the same way.

The Function block **1308** consists of functions specific to the preferred space management applications program. For example, "proportional fill" is a command function for filling out a shelf to keep all products on the shelf in proportion. The predetermined functions in the Function block **1308** may comprise about 75% of the preferred space management applications program **1304**, although indicated differently in **FIG. 13**.

Known space management applications programs generally may be viewed as a conglomeration of function and support blocks, intermixed so that there is no flexibility in customizing the program for end users. For example, the menu structure may not be changed by non-programmers because it is incorporated into the executable code. Virtually all modifications required individuals with the level of skill of computer programmers to modify the overall applications program code to make changes. In contrast, the preferred space management system **1302** provides several levels of customization which can be accomplished by the end user without requiring a knowledge of computer programming, described below with respect to **FIGS. 15A** and **15B**.

A significant feature is that the Operating Environment **102** allows the preferred space management system's applications program **1304** and other applications programs such as **1324** to be developed independently and then integrated by the Operating Environment **102** to run concurrently. Thus, to the end user, the new programs such as **1324** will appear as an integrated part of the preferred space management system **1302**.

**FIGS. 14A** and **14B** illustrate in schematic form (similar to **FIG. 2**) exemplary data structure files which may be employed in the structure file **1310** of the preferred space management system **1302** according to the present invention.

Different versions of space management systems may be defined which are more complex than any given marketed version. This choice of a space management system allows one to utilize the full features, flexibility and advantages of the Operating Environment. Some applications programs may have, for example, six objects (as shown in **FIG. 2**). One version of the preferred space management system has approximately **15** objects (see **FIG. 14A**), which may be too many for some users to deal with effectively.

The space management system structure may be much more complex than that shown in **FIG. 2**. However, this added complexity makes it commensurately difficult to take code from known applications programs and convert it to programs which utilize the full flexibility allowed by surrendering much of the functioning to the Operating Environment **102**. A simplified structure, such as the one shown in **FIG. 14B**, is desirable in cases where less complexity is allowable or software development budgets are limited. Such a structure includes a kernel of objects which effectively model the data structure of known applications programs having hard-coded structures so that functions of known systems may readily be incorporated into the applications program **1304** while utilizing the flexibility enhancements allowed by designing in conjunction with the Operating Environment.

A functional space management system **1302** uses the structure shown in **FIG. 14B**. (One difference between **FIG. 2** and **FIG. 14B**, however, is that the term "gondola" has been changed to "section" and "shelf" has been changed to "fixel", or "fixture element"). The latter is more representative of the current preferred space management system capabilities which have added the ability to consider shelf brackets, posts, fences (railings), and so forth.

A reason for adding objects to the structure is to give different classifications of different things. For example, multiple sections in a store are really grouped by gondolas, which in turn comprise sets of shelves on either side of an aisle; a department may be, for example, 6 aisles; multiple departments make up a store. The gondolas, shelves, departments, and so forth, are merely other ways of grouping sections. There is no need to have them as separate objects; they can be defined as fields under the "section" object.

The library (in **FIG. 14B**) is a separate object used to hold separate lists of other objects used elsewhere in the structure. Generally, the Library allows storage and selection from a collection of interrelated objects at certain levels of the structure (for example, shelves).

The Library utilizes the fact that the preferred space management system structure can be added to. The benefit for the user is to be able to have a separate list in memory of stored sets of fixture parts that may be used again. Known systems may have no external shelf data base, and no internal library to store lists of shelves, so that there was no flexibility to add or modify shelf space requirements and representations. In the preferred space management system, a BDS transfer can be made from an outside shelf library to an internal shelf library; or the fixtures in the working area can be updated from the outside library. Additionally, fixels can be copied into the shelf library.

There is an entire market for the preferred space management system among fixturing specialists. A fixturing specialist makes up the fixture by adding specific shelves and brackets; a merchandiser uses a space management applications program to add products to the fixture. Presently, in major merchandising organizations, the two departments are entirely separate and there is only limited communication between the two. In accordance with the preferred space management system, the fixturing specialist can now use the preferred space management system to add products directly based on information provided by the merchandiser. The fixturing specialist can use the same software to do both jobs; there will therefore be more interaction between departments. This is a new capability available to preferred space management system users which is not available if known systems are employed.

The operation of the preferred space management system will now be described.

On start-up, the Operating Environment **102** compiles a list file of available applications programs which includes the space management applications program. For each applications program, the Operating Environment **102** reads all the Function Files including Functions **1308** into the Operating Environment memory so it will have them immediately available to execute, in addition to functions which are resident in the Operating Environment **102**.

After the Function and Support Files have been read into the Operating Environment **102**, a first viewer is read to display the first screen which is apparent to the user. This first screen displayed is the main menu for the space management system **1302** shown below in Table III.

Functions are selected by user entries by predetermined keystrokes or menu entries. Some keys do not have functions associated with them; instead, they have menus associated with them. When this type of key is struck, the Operating Environment displays the particular menu (as stored in the Menus file in the preferred space management system's applications program). The entries to the menus can make reference to functions or to other menus. For example, the main menu contains the word "ANALYSIS", which in turn calls up the ANALYSIS menu for display. Then, the ANALYSIS menu contains the term "PROPORTIONAL FILL" with an associated function number. When any function number is activated, the system calls the particular function from memory location in the Operating Environment **102** or out of the preferred space management applications program's Function block **1308**.

After the space management applications program's function has control, it performs its necessary operations. Thus, for the "Proportional Fill" function within the preferred space management system, the preferred space management system looks at the shelf designated by the user (for example, by cursor placement) and does a number of calculations to determine how it will fill in the empty space on the shelf. When the function is completed, the preferred space management system returns control to the Operating Environment with a return code which is interpreted by the Operating Environment to cause performance of the next function. In the case of "Proportional Fill", this next function would be redrawing the screen based on new calculations.

In summary, the Operating Environment looks at the user input and correlates that input with the various functions in the preferred space management system. Functions may originate in either the Operating Environment **102** itself, or in the Functions files **1308** of the space management applications program **1304**. When the function has been completed, the Operating Environment then performs functions to display or indicate to the user a result of the performance of that completed function.

Some of the functions invoked by the user are ones performed directly by the Operating Environment **102** and never utilize the functions **1308** of the space management system's applications program **1304**. For example, a zoom in/out function is resident in the Operating Environment **102**; other such resident functions are listed below in Table I. In the same manner as with functions **1308** internal to the preferred space management system's applications program **1304**, when performance of the Operating Environment-resident function is completed, control is returned to the main part of the Operating Environment with an appropriate code (called a return code) to indicate to the user the result of the operation (for example, for the zoom function, the code would command the Operating Environment to redraw the screen).

In the preferred space management system's applications program **1304**, the support files **1306** are readable and editable ASCII files. The support files **1306** can be edited by anyone knowledgeable in the applications field. The support file editing functions in the Operating Environment **102** allow one to edit the files in the normal form in which the Operating Environment is edited.

In contrast, in known systems, virtually all the equivalents to the separate space management system files **1306** are fixed within the overall executable code. The data structure is hard coded within the executable code in the computer programming language. The structure may be incorporated into source code (for example, C programming language) files. Thus, the structure cannot be changed, except by a person with a level of skill of a computer programmer. The only way to make changes to other features such as menus requires a programmer who knows the programming language and the specific program.

Generally, it is possible to adapt code from known applications programs to be usable with the Operating Environment **102**. Users of known systems who will be upgrading to the preferred space management system will be able to use many of the same functions to which they accustomed. A major advantage of using the preferred space management system is that the preferred space management system is much more easily upgradable as new versions or functions are written.

The modularity of the preferred space management system allows it to be upgraded without eliminating current functions to which the customer has trained himself to use. For example, the "proportional fill" function can be retained, including its use via the menu. If a new or better type of proportional fill function becomes available, it can be made part of a new application program, and can be made to appear with another menu file on the ANALYSIS menu under a different name, thereby giving the user the option of two types of proportional fill functions. Thus new functions and objects can be added very easily at any time without diminishing the utility (or altering the look and feel) of the earlier version.

As described above, an advantage of the preferred space management system **1302** over known systems is the placement of features into discrete files which can be easily edited by anyone in the applications field.

The separation of features into discrete, easily modifiable units also makes it substantially easier to customize the product for individual customers and/or for use in different countries. This ease of customization allows non-programmers to make the necessary or desirable changes. Because programmers generally do not know retail marketing (or other field of concern to the user of the space management applications program), and because market knowledgeable people generally do not know how to program computers, there is often a lack of ability to communicate between the two. The preferred space management system allows market-knowledgeable, non-programmers to make the changes they feel are necessary to present the proper output to the end user or other customer.

Referring to **FIGS. 15A-15B**, the user-interactive customizing operation of the space management system **1302** will now be described with reference to the flow charts. Referring first to **FIG. 15A**, the sequential customizing operations of the system **1302** begin in response to a received user customize selection indicated at a block **1500**. The user can enter this customize selection through a submenu selection as listed in Table III below from the main menu which is first presented to the user on startup (**538** of **FIG. 5**) and is available to the user during runtime via a defined keystroke entry.

A next user entry is received indicated at a block **1502**. The next user entry is identified as one of a plurality of possible features to be customized, for example, such as, a menu edit indicated at a block **1504**, a keystroke edit indicated at a block **1506**, a macro edit indicated at a block **1508**, a viewer edit indicated at a block **1510** or a Batch Data Source edit indicated at a block **1512**. Additional features not shown in **FIG. 15A** can be customized such as input and output devices.

A corresponding list is then displayed for the identified user selection together with any desired prompt help messages indicated at a block **1514**. A next user level entry selection is received indicated at a block **1516**, and corresponds to a selected modification, such as to modify an existing feature or add a new feature.

Then the user enters the particular parameters for the modification to the existing feature or for an added new feature that is received by the system **1302** indicated at block **1518**. User help messages can be displayed at each step such as with block **1518** for receiving selected parameters for the selected feature, such as one of the exemplary menu, keystroke, macro, viewer, or Batch Data Source as indicated at blocks **1504, 1506, 1508, 1510** and **1510**.

A predetermined keystroke is then pressed indicated at a decision block **1520** to move back to the user level entry at block **1516** in order to continue customizing operations or another keystroke is pressed to return to normal system runtime operations indicated at a block **1522**. The system runtime operations are illustrated and described with reference to **FIG. 5G** above.

As an example of a customization process, when the menu edit is identified as the user selection at the block **1504**, an additional entry may be added to an existing menu by the user selecting a particular menu. Then a position in the particular selected menu displayed at block **1514** is selected. Then a predetermined keystroke is pressed by the user to add a new empty menu entry at the selected menu position at block **1516**. When the new menu entry corresponds to a function, then the corresponding function number, such as 1.219, is entered by the user at block **1518**. Otherwise, when the new menu entry corresponds to either a macro or submenu to be accessed, then the corresponding macro or submenu name, such as a label or number, is entered by the user at block **1518**. Alternatively, after the particular menu and menu position have been selected, a particular existing menu entry can be changed or deleted by using other predetermined keystrokes at block **1518**.

A new menu can be added following a corresponding new menu level selection at block **1516**. All of the desired parameter data including multiple menu entries are then received at the block **1518**.

Referring now to **FIG. 15B**, a flowchart is shown illustrating the operations of the space management system **1302** for customizing a structure file, such as the structure file **1310** of the space management applications program **1304**. The sequential operations begin indicated at a block **1530** with a predetermined start command for the space management system **1302**. A structure file selection entry by the user is received indicated at a block **1532**. The selected structure file is loaded indicated at a block **1534** and an object list for the selected structure file is displayed indicated at a block **1536**. The desired customization selection by the user, such as to add a field to an existing object or otherwise modify the selected structure file, such as to add a new object to the selected structure is received indicated at a block **1538**. A user selection to modify an existing object is identified indicated at a block **1540**. A user selection to add an existing object is identified indicated at a block **1542**.

After the selection to modify an existing object is identified at block **1540**, then the selected additions and changes within the fields for the selected object within the structure file are received indicated at a block **1544**. Similarly, after the selection to add an object is identified at block **1542**, then a description of the new object within the structure file is received indicated at a block **1546**. The description of the new object includes selected user provided information, such as a name and multiple fields and links, becomes arranged in a structure file such as that shown in the following APPENDIX A.

After the details are received at blocks **1544** and **1546**, then the resulting new file structure is saved indicated at a block **1548**. Then the system **1302** may be restarted indicated at a block **1550** in order to load and aggregate the new file structure within the system **1302**. Sequential operation continue as illustrated and described above with respect to **FIG. 5**.

During each of the sequential steps for customizing any feature or file structure, example text and general help messages can be displayed to the user.

The operation of the Batch Data System with respect to the preferred space management system **1302** will now be described.

As described above, the preferred space management system **1302** contains a plurality of data files. The preferred space management system uses the information or data from these data files and from outside data bases (for example, data base and spreadsheet files).

The Batch Data System facilitates data transfers to and from the preferred space management system **1302**. Batch Data Sources **1320** include information which is independent of the logical device (data store) involved. The BDS information relates to specifications for a data transfer. (For example, the BDS determines which objects to deal with; whether dealing with a product list or a shelf list or multiple objects; and so forth.) The BDS is configured to allow the user to select fields (for example, the object is "product" and the field of interest would be "movement") and allows dealing with duplicates. The BDS **1320** provides criteria for parameters within objects and fields (for example, products with movement greater than 100).

In summary, the BDS **1320** in the preferred space management system **1320** contains rules for the data transfer, but nothing specific to the actual type of data store being read to or written from. (This device-specific communication is handled by the BDT or "Date Type", described above.)

The BDS rules can be preset, or can be entered by the user. For each object transferred from a BDT, four elements are specified including field name, relation, value, and grouping. The field name is the name of a particular object (for example, "manufacturer"). The relation is the logical relationship (for example, =, <, >, =<, =>, etc.). Value is any fixed value (for example, "XYZ Company"). Finally, grouping connects multiple criteria (for example, "and", "or"). Thus, one item of data requested from a BDT could be XYZ Company's products costing >$10.00 and which cost ≦ $20.00.

To take into account the fact that different data bases will likely use different terms for the same field or object, a "Synonym List" or "Thesaurus Set" may be built into the BDS's. Each Synonym List is specific to a BDS. The BDS's are part of the applications program structure. If a new field is added to the structure file of the preferred space management system, it will be necessary to add the same field into each of the Synonym Lists in each BDS.

Within each BDS there are interactive switches. If the appropriate interactive switch is ON (for example, the field selection interactive switch), the user will see all the possible fields that can be selected. Advantageously, if desired, the preselected fields can be shown in one color (for example, red) and the remaining fields shown in a second color (for example, black).

The list of fields comprises all the fields available in the intersection of the fields available in the BDS and the Batch Data Type (BDT). In other words, the list of available fields comprises all the fields of the data base (in the BDT) which can be read by the preferred space management system (i.e., those fields listed in the preferred space management system Structure file). Synonyms are used so that otherwise unrecognized field names in the external source are recognized so they can be linked to a known field name via the Synonym List.

If the interactive switch is off, there is no user interaction; the field selection and transfers occur automatically based on previous set ups. Presetting of the fields is one of the numerous customizing features in the combination of the preferred space management applications program **1304** and the Operating Environment **102**. Each BDS will likely have more than one interactive switch, for selecting specific fields for each object, for making criteria selection interactive (for example, mfg = ABC Company, movement ≧ 100, or a combination of the criteria using "&").

### Table I

### Summary of Capabilities of the Preferred Space Management System

The preferred space management system may be considered as a stand-alone product, inasmuch as it appears to the user as a single executable computer program. However, as described above, the preferred space management system is actually in two parts--the applications program and the Operating Environment.

The basic operating program (that is, the Operating Environment) holds data (such as planogram data) in a database structure in memory, and allows user access to the data either through tables and entry screens or by a 3D CAD type graphics interface. The preferred applications program handles only the application-specific functions, such as allocations and proportional fill, and also specifies the data structure and other configuration information.

The Operating Environment. The following description of the Operating Environment supplements the description above, related to the Operating Environment considered as an entity separate from any particular applications program. Here, the Operating Environment is described with special reference to its use as a platform for the preferred space management system. It is to be understood that the Operating Environment is specifically designed to be a "platform" (that is, an "Operating Environment") for not only the preferred space management system, but any number of other applications programs.
1. Data structure. When started, the Operating Environment looks to a data file supplied by the applications program which describes its structure. The file describes particular OBJECTS such as GONDOLA, SHELF and PRODUCT by giving their fields (for example, ID, PRICE, WIDTH) and also how they are related (for example, GONDOLA has many SHELVES, SHELVES have many SKUS (or positions).
2. Charts. Each object and all its fields may be made visible to the user in a tabular list called a chart. For example, there is a chart in the preferred space management system for describing consumer products and the attributes which are stored in its fields. The data visible on these charts is editable. Also, a set of different formats (called viewers) for graphically presenting objects and their fields is provided. These viewers can be fixed, editable beforehand or editable during program execution. Viewers can specify on-screen totals and title information, and can also pre-sort the data by specified fields.
3. Entry screens. As well as describing formats for charts, viewers can also define entry screens. For example, where instead of one record (for example, a consumer product) taking up just one line on the screen, a record can be made to take up the whole screen with its data fields.
4. Graphics system. Any chart can also be shown graphically, and the graphical representation can be viewed from any angle. Objects can be moved freely in graphics either with the arrow keys or with a mouse, for instance.
5. Menus and commands. Input may be achieved through, for example, menus or by direct keystroke commands. For example, one keystroke starts a particular operation, where the operation may be a complex evaluation or may be simply to move the cursor. Menus and lists of command keystrokes are supplied by the applications program, and are also editable before and during the program.
6. Application programs. When started, the Operating Environment loads the data structure, menus, commands, viewers, and so forth, from the space management applications program. The Operating Environment will also load the functions of the space management applications program into memory so that they can be run as needed during program execution as quickly as if the applications program and the Operating Environment were all one program. The Operating Environment can also handle more than one applications program concurrently, so that, for example, an applications program to handle automatic pricing could run concurrently with the space management applications program. The two applications programs would thus be accessing the same data in memory with no change to the Operating Environment or the existing applications programs.
7. Reporting. The Operating Environment can report on any data using the flexibility of the VIEWER system and can show, for example, total and subtotal breaks on any field in an applications program.
8. Accessing outside data. The Operating Environment can load/merge/update to and from any outside data store with full control over which objects and fields to transfer, particular criteria that fields must satisfy, how to handle duplicates, and so forth. Connecting programs called Batch Data Type modules which do the actual reading and writing are programmed specifically for each type of external data source. However, the Operating Environment handles most of the high-level specifications of the transfer, which makes the creation of these device specific BDT modules fairly simple. BDT drivers for commonly used external data stores may be supplied, for example, by the vendor of the Operating Environment, or may be written by the user to adapt to less standard data stores. These drivers may include (in a preferred, useful embodiment) data base files, spreadsheet program worksheets, vendor-chosen data files, hand-held computer files, and the like.
9. Formulas. Each field can be assigned a formula so that its value is calculated by the formula rather than being explicitly entered. A formula can include references to fields, either within the object or in other related objects. All Lotus functions are available for use in formulas. Fields can take the value NA (not available) and ERR (error) for full compatibility with spreadsheet systems. Formulas can be entered and edited before or during the running of the program, and apply to every instance of the object for which they were entered, rather than just one "cell." Formulas are compiled internally for fast execution, and most error checking (for example, arguments wrong, unknown functions) is done when they are compiled.
10. Macros. Macros can be entered as lines of commands, where each command is executed in sequence after the macro is invoked. Macros are compiled like formulas, and follow a similar syntax for ease of learning. All commands normally available, as well as special commands and capabilities used to make "smart" macros, may be used in macros: labels and GOTO; IF statements; dynamic variables; FOR and WHILE loops with BREAK and CONTINUE; submacros; message display; prompting for values, and the like.
11. I/O Devices Such as Screens, Printers, Plotters and Mice. The Operating Environment is independent of the particular type of screen it uses, but accesses it through a connecting program known as an Output Device Driver. Similar drivers are used to connect to other respective types of output devices, like plotters, printers, and photographic devices. New drivers can therefore be easily written to cover any type of screen, printer or graphics mode which is added to the system. A similar Input Device Drive system handles any type of input device, like a keyboard, mouse, or digital caliper.

### TABLE II

### Preferred Space Management System's Use of Operating Environment Features

The preferred space management system's use of the Operating Environment's features may be summarized in this section. It is to be understood, however, that variations of the following summary within the capability of those skilled in the art lie within the contemplation. Thus, the allocation of functions between the preferred space management applications program **1304** and the Operating Environment **102** may be changed from that allocation recited in this Specification, and still lie within the scope of the present invention as defined by the appended claims and the claims of any related patents or patent applications.

### A. The Operating Environment functions which relate to objects:

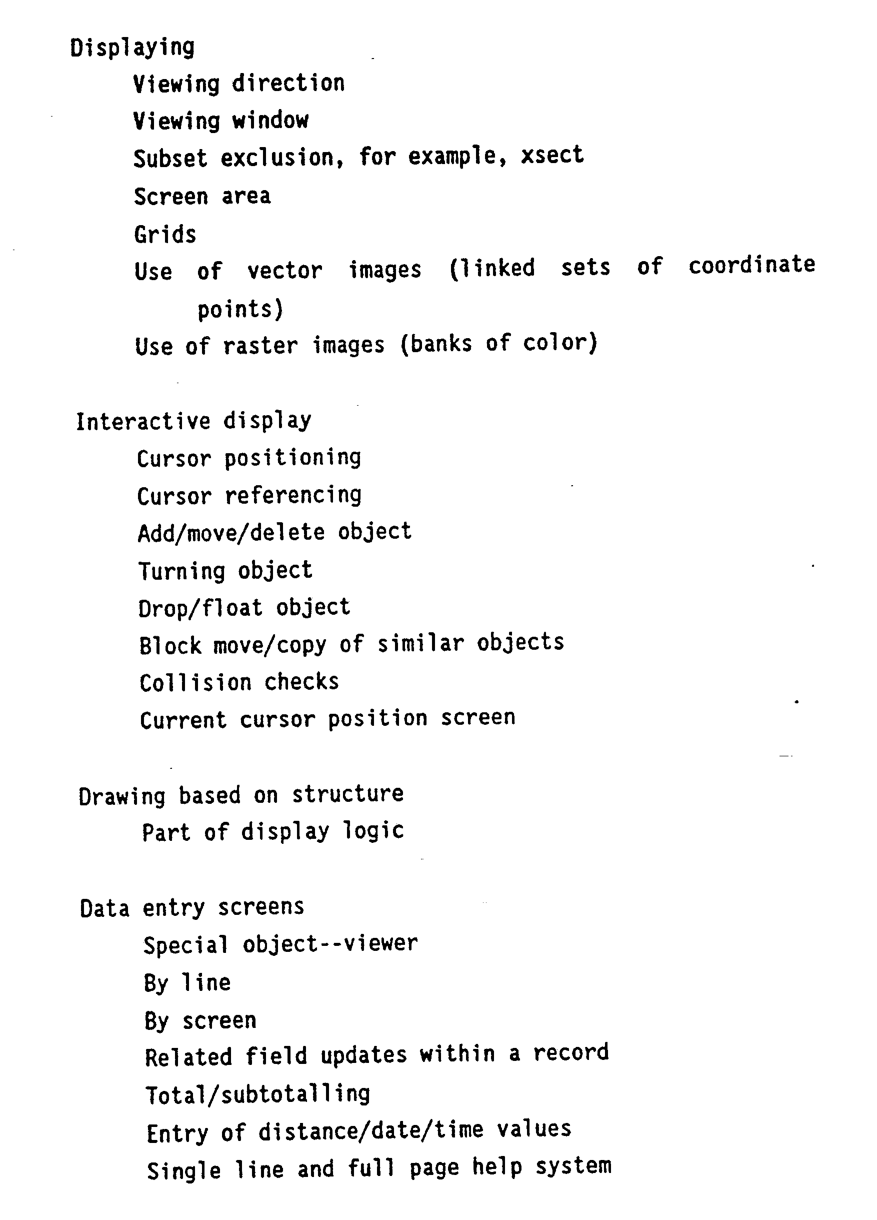

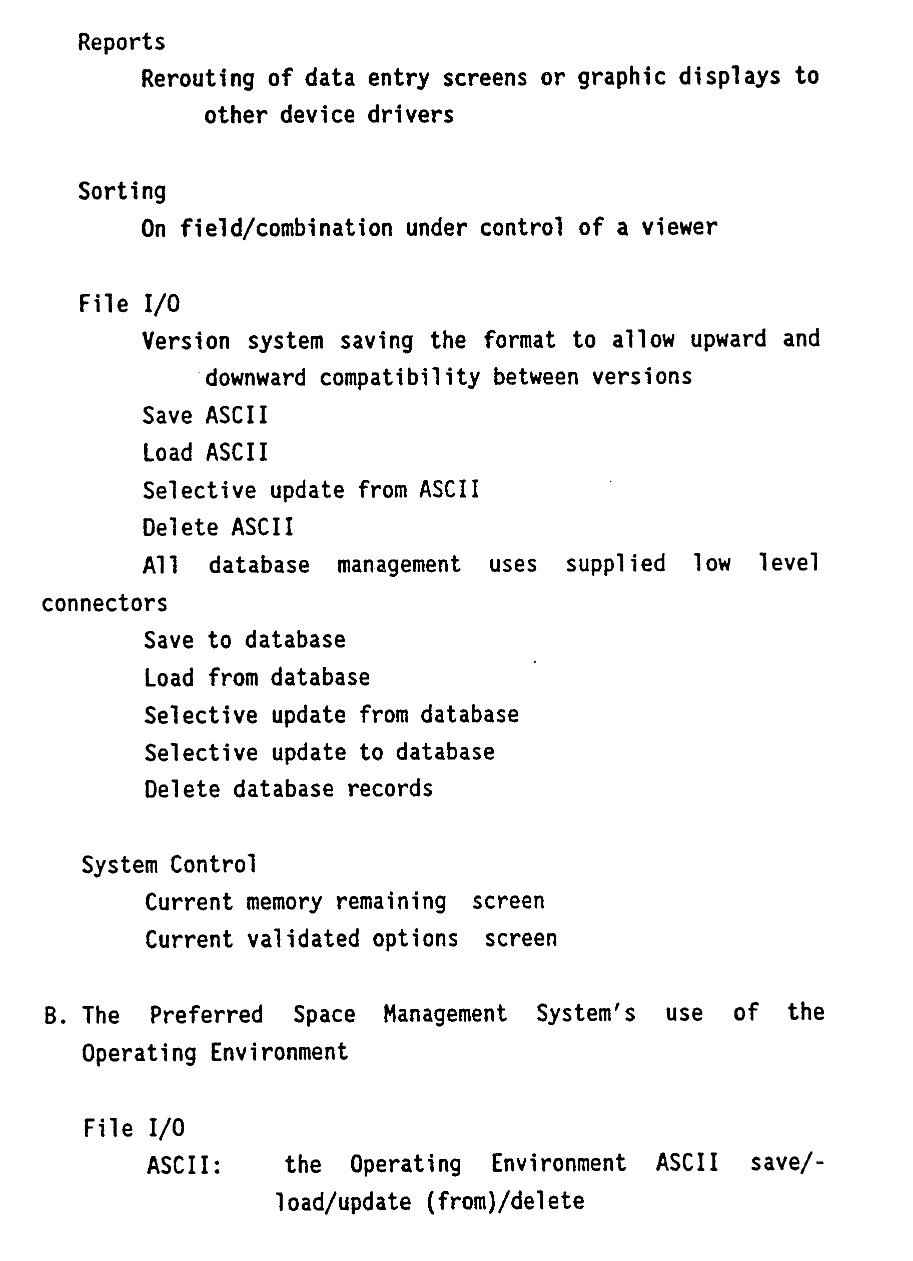

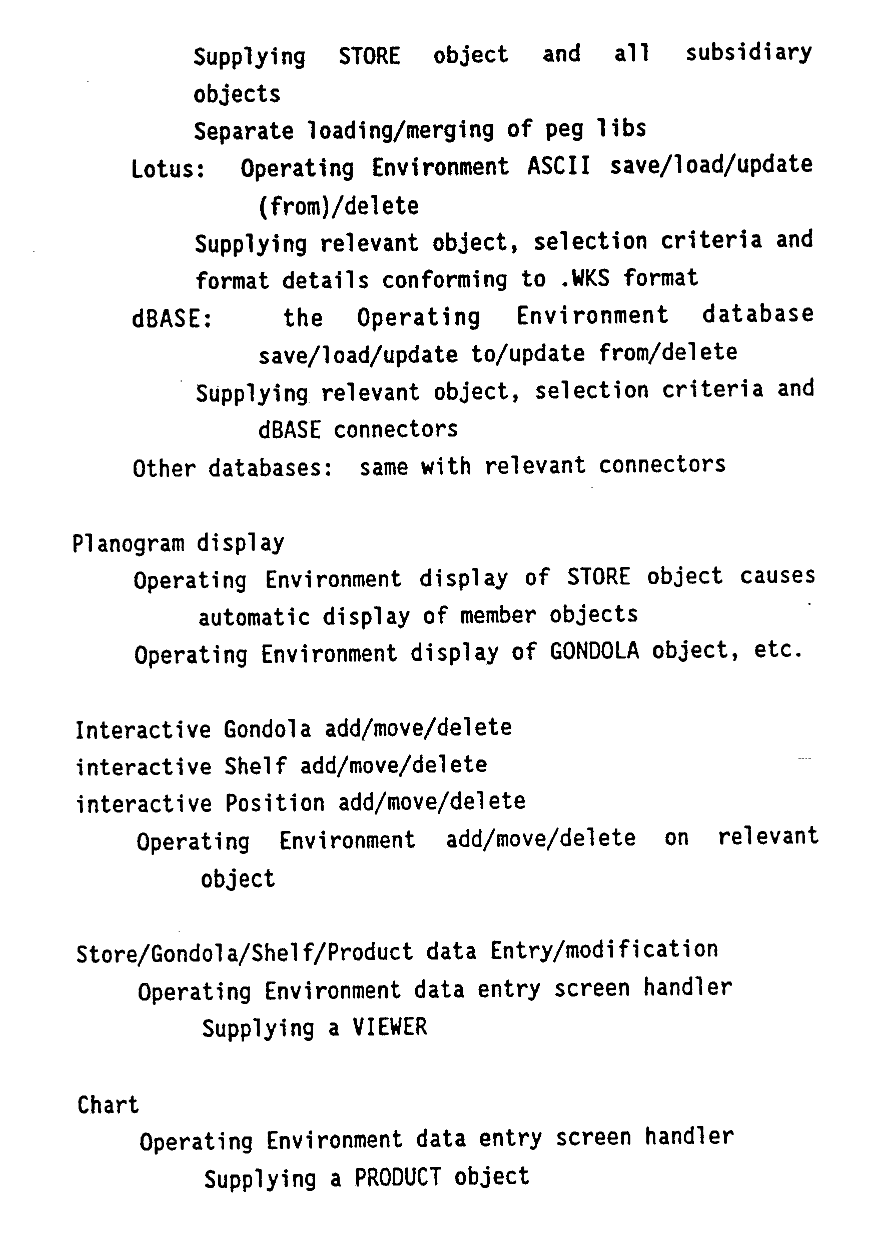

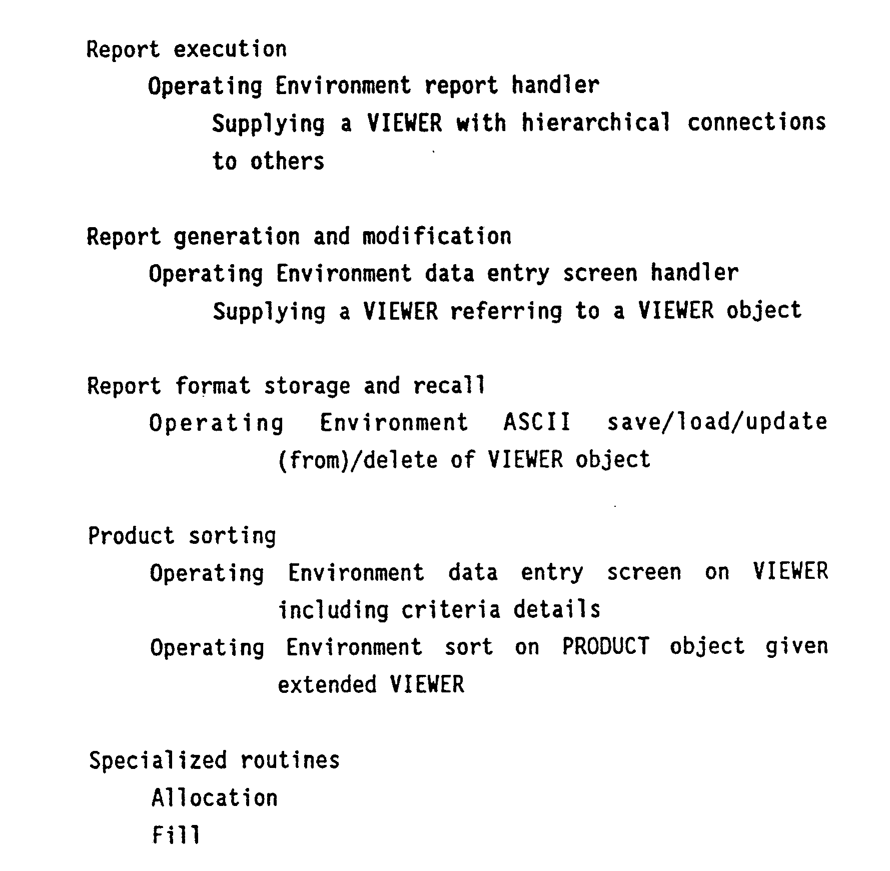

### TABLE III

### The Preferred Space Management System's Support Files 1306

### Structure 1310:

A data structure for the applications program of the preferred space management system is illustrated in **FIG. 14B**. A second, more complex data structure is illustrated in **FIG. 14A**.

The structure of **FIG. 14B** is preferred by some users because of its simplicity, and will be the focus of discussion. However, it is to be understood that many variations on the structure may be effectuated by those skilled in the art, while still remaining within the scope of the invention. The exemplary structure of **FIG. 14B** may also be represented as follows, where indentations under a certain level imply a downward link:

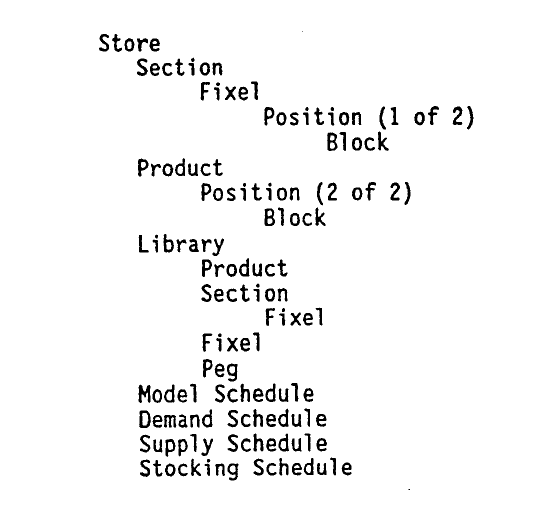

### Menus 1312:

In a preferred embodiment, a main menu is shown automatically on startup. The main menu is available almost any time during the program, and has the following entries:
File Edit Analysis Output System Misc Quit

All of these menus except for QUIT bring up other menus.

Menu options that are preferably connected directly to the Operating Environment functions are shown with an "OE" designator. Other options refer to the preferred space management system applications program functions.

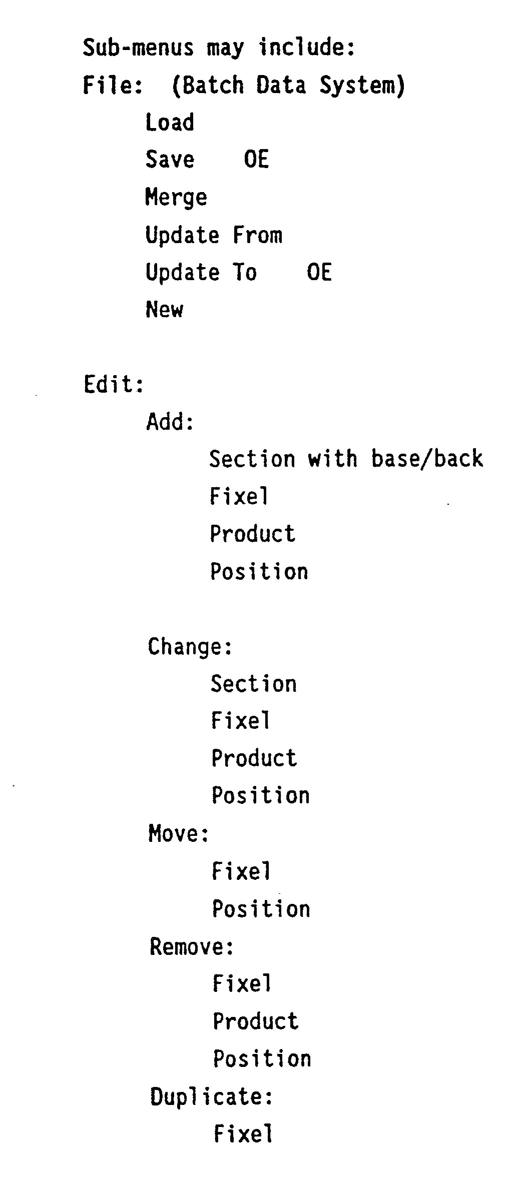

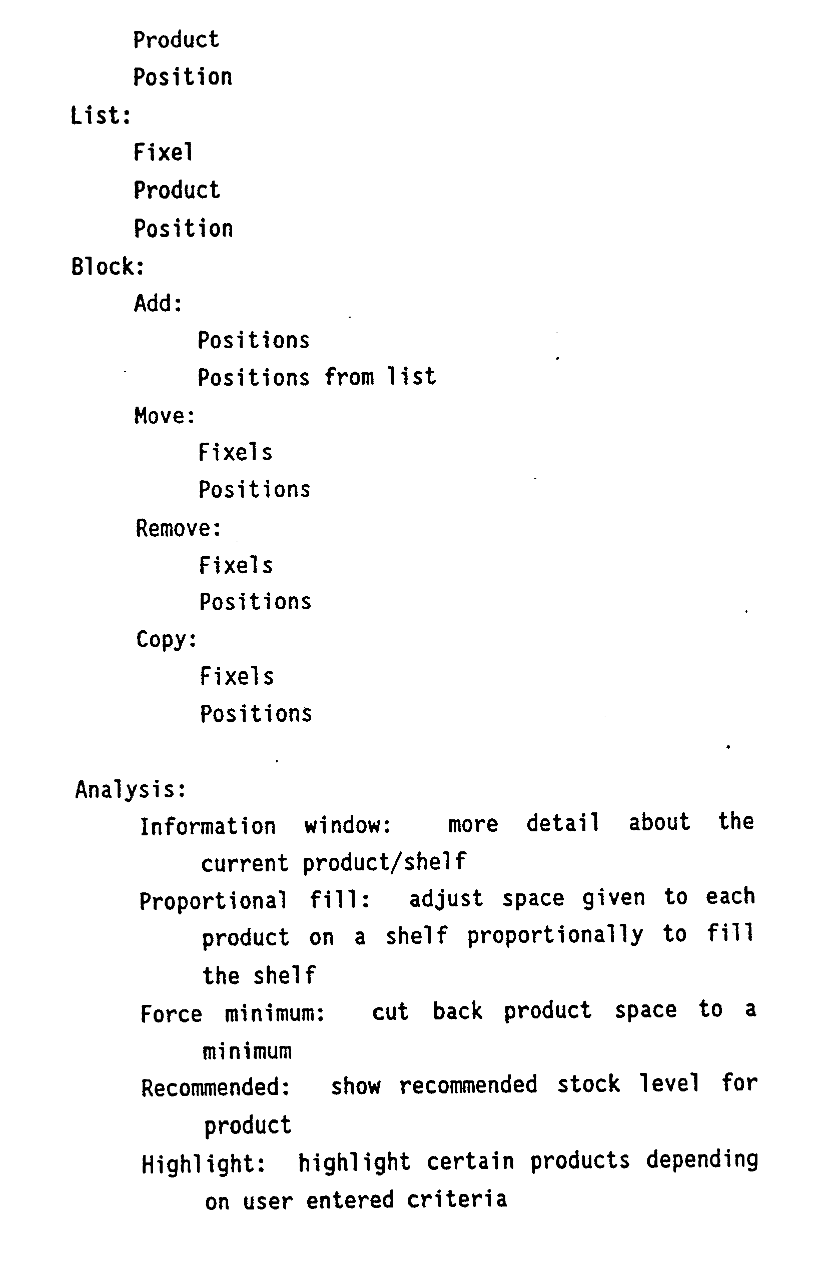

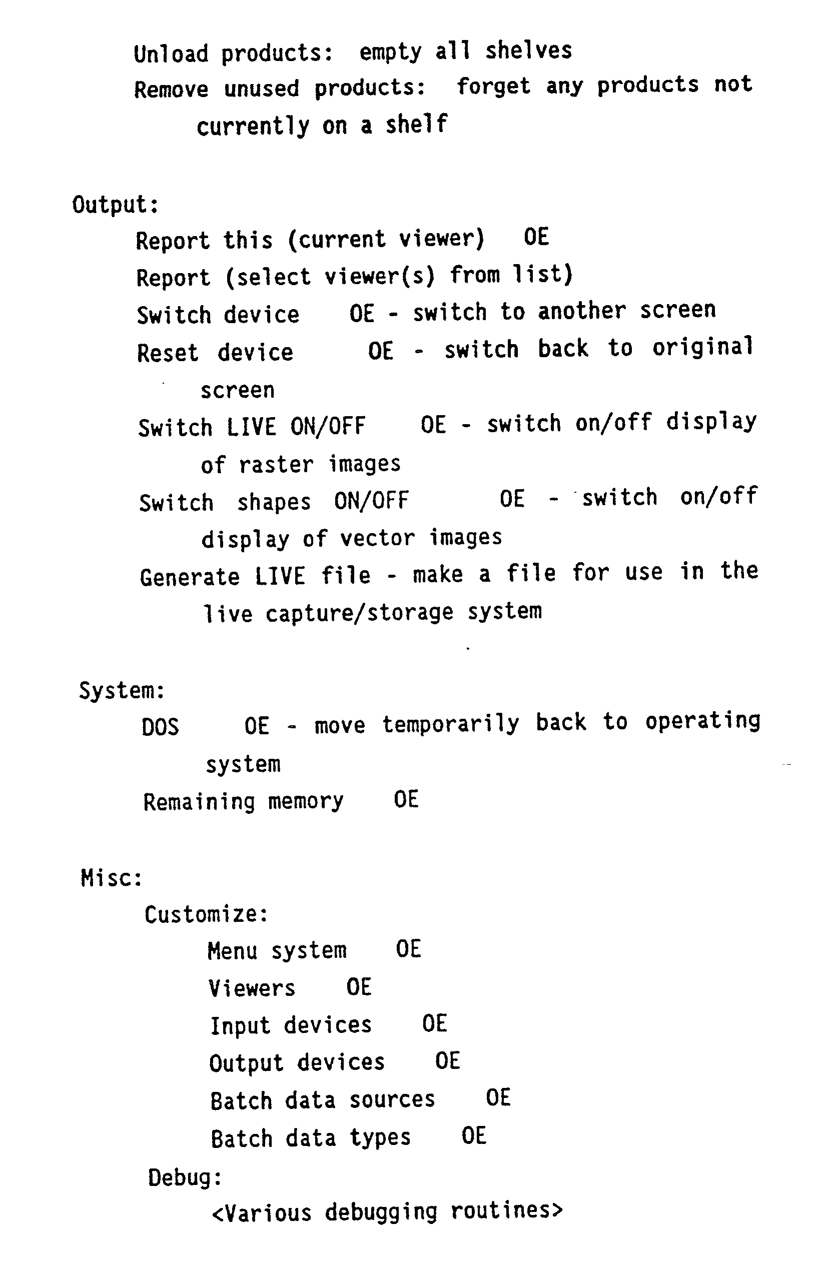

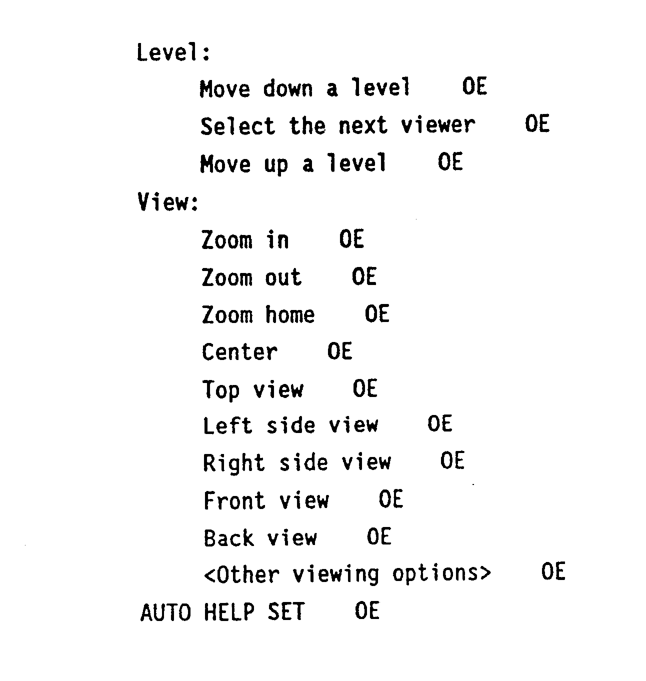

### Keystrokes 1314:

Most keystrokes trigger functions otherwise available through the menus listed above. Others trigger the main menu or other subsidiary menus directly. Others are "abort" or "finish" keys available only in certain screens.

### Macros 1316:

It has been found advantageous to use the following macros:
Copy_last: This is a small utility macro to aid in the editing of long tables of data.
Quit: This is a macro from the main menu which gets user confirmation then exits the program.
AUTOEXEC: This is a macro automatically executed by the Operating Environment when it starts up. It may be configured to automatically load a data into the peg library from a standard peg file.

### Events 1317:

An event is a function (or macro) which is timed to execute without user intervention at a specified time, and possibly repeated at evenly spaced intervals after that time.

One event which is advantageously implemented is a function called every 1-2 seconds which will automatically display a small window in the corner of screen reflecting the product at which the user is currently pointing with the cursor.

### Viewers 1318:

Viewers are screen formats, each for one particular object in the structure. Viewers come in three varieties:
1. Chart viewers: These show the data on the screen (or in a window) in a tabular format, one record per line.
2. Full screen viewers:These show each record on the whole screen (or window), placing fields preceded by their names at various points on the screen according to details in the viewer.
3. Model viewers: These extract three-dimensional drawing information from each record according to details in the viewer and display is graphically on the screen (or in a window). Model viewers can be chained together to allow multiple objects to be displayed graphically in one screen.

Viewers are selected by the preferred space management system functions by making requests to Operating Environment internal functions, which then trigger and manage the actual displays.

Preferred viewers may include:

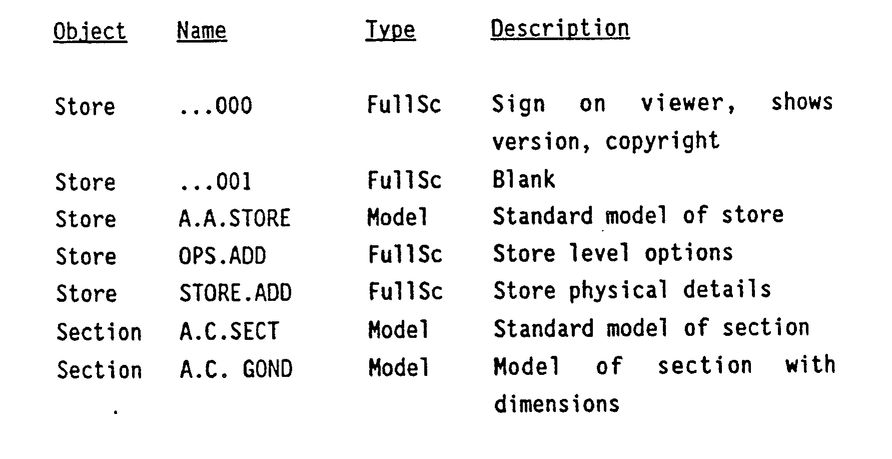

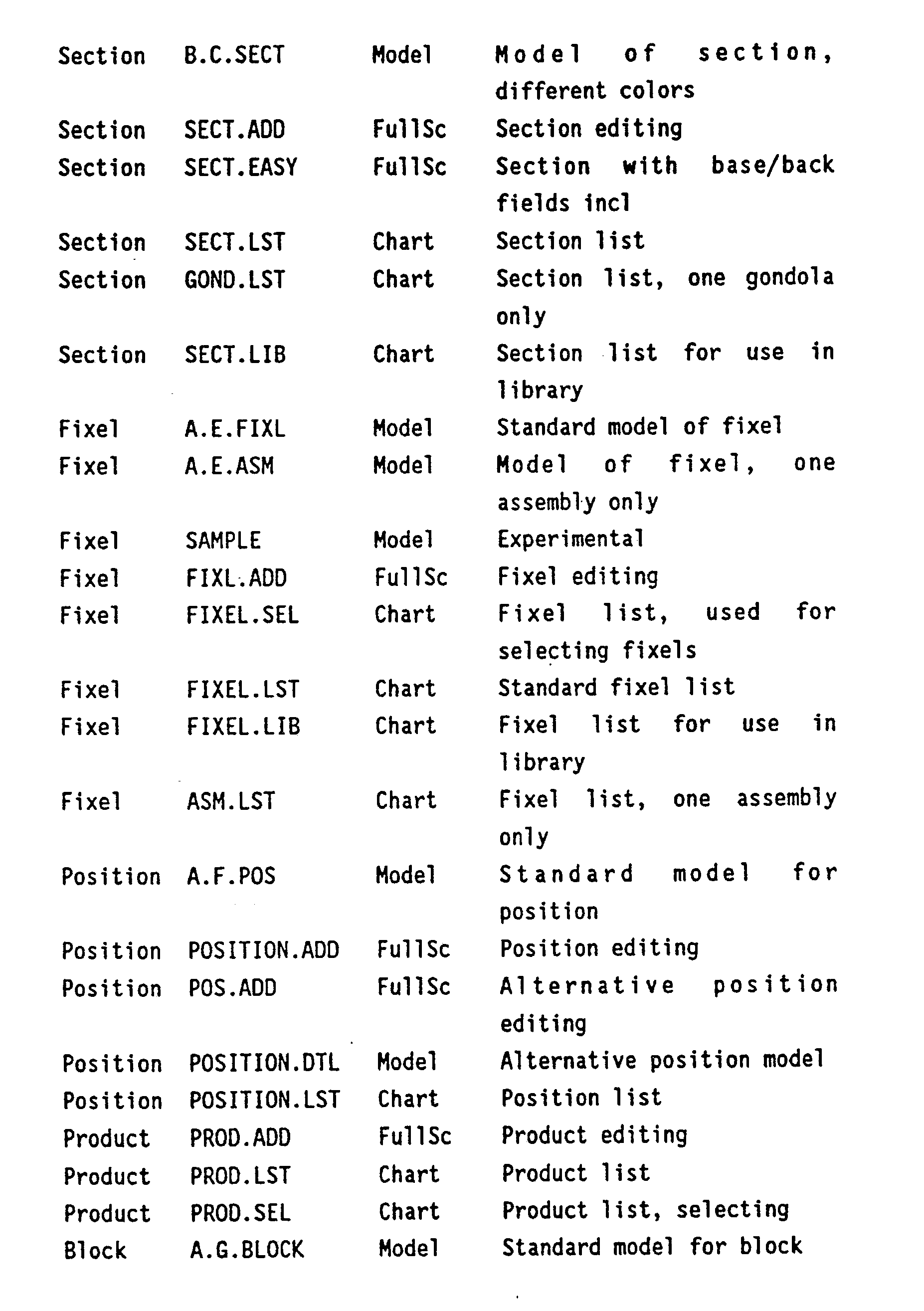

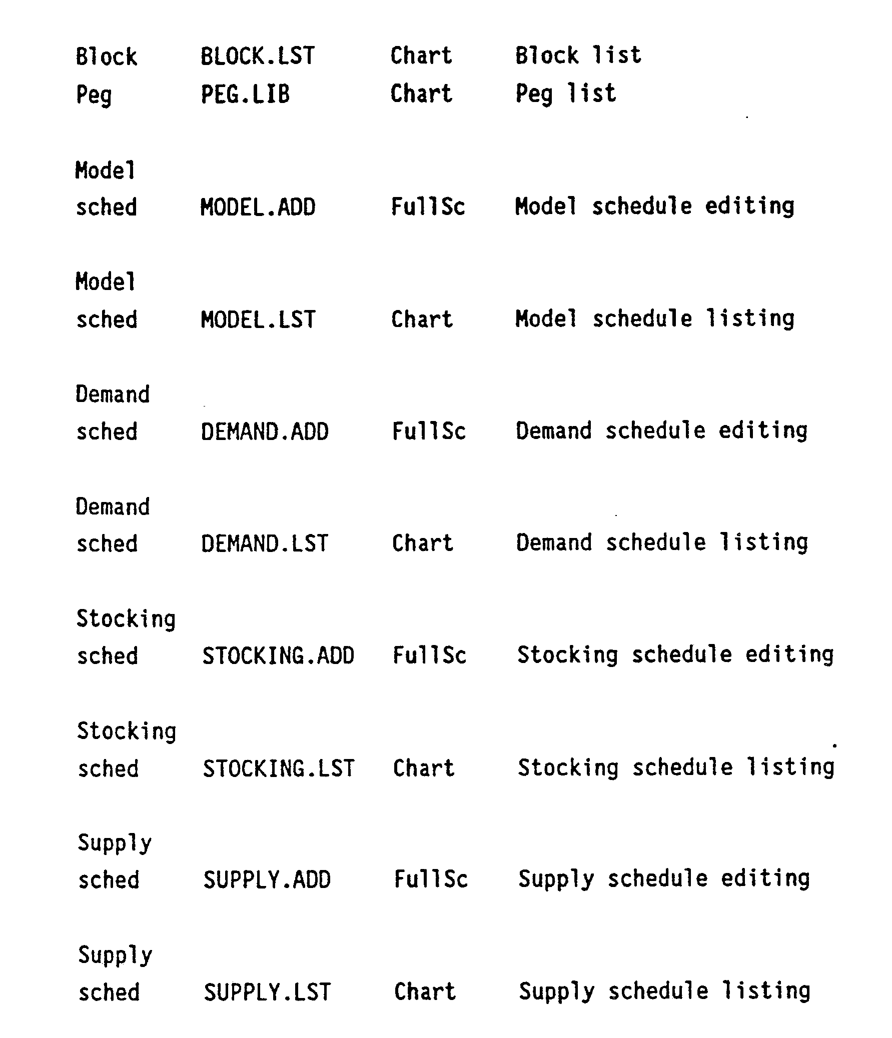

Special purpose viewers for the preferred space management system internal use:
BLOCKADD.OPTS entry of options for use during position block add
BDSFILELIST shows list of files available before BDS transfer
XYZ editing of XYZ position of cursor
PERF.OPTS entry of performance options used during proportional fill
FORCEM.OPTS entry of options used by force minimum
HILITE.OPTS entry of options used by highlighting feature
NOTCH.OPTS entry of options used during placement by notch
There may also be included other system viewers used for customizing menus, viewers, and the like.

### Batch Data Sources 1320

BDS's (sometimes referred to as "data channels") which are advantageously employed may include:

| Name | BDT | Description |
|---|---|---|
| Planograms | OE ASCII | Standard planogram files, all objects |
| Peg library | OE ASCII | Pegs only |
| Fixture library | OE ASCII | Sections/fixels under library |
| Spaceman II | SP. II ASCII | SPACEMAN II files, all objects |
| dBASE(R) products | dBASE III(R) | Product list from/to dBASE file |
| Lotus(R) worksheet | | LOTUS (R)All objects from/to Lotus spreadsheet |
| LOADPEGS | OE ASCII | Pegs only, no display during transfer |

### Messages 1322:

This is a list of all messages used by the applications program, kept separately and indexed by number from the other application files to allow easy translation between languages (that is, "human" languages such as German, French, English, and so forth).

Names, description, error messages are referred to in the preferred space management system functions and other Support Files as numbers, which correspond to real messages in the Message File.

### TABLE IV

### Preferred Space Management System Functions 1308

### System support functions:

sysinit initializes the internal the preferred space management system values
noentry connected to some fields to stop user editing
endl saves the edited record, then allows a move
end2 saves the edited record then allows a move
esc1 ignores the edited record
esc2 ignores the edited record
slash1 brings up the main menu
slash2 brings up a smaller editing menu during data entry
gotopage switches pages in a full screen viewer
enter1 selects the current item
data_new File New--removes all current internal data
end_no_move saves the edited record, no move
end_collect ends a multiple selection
flooplan_mode switches to VENICE
planogram_mode switches back to regular planogram mode
sect_lib_mode switches to section library
fixl_lib_mode switches to fixel library
peg_lib_mode switches to peg library
units_switch switches between units/block mode for position display
infopos draws information window concerning the current product
curdim shows current cursor position
curbill shows billable space for current shelf
find finds current product in list
find_from_ch finds current product in model
autowindow brings up summarized current product information

### Store level routines:

prestore initializes a store
postore checks a store after it has been edited
store_new Edit Add Store (not now used)
store_cha Edit Change Store

### Schedule routines:

premodel initializes a model schedule
postmodel checks an entered model schedule
model_list List model schedules
model_new Add model schedule
model_dup Duplicate model schedule
model_cha Change model schedule
model_remove Remove model schedule
similar for demand, stocking, supply schedules

### Section editing routines:

presect initializes a new section
sect_list Edit List Sections
sect_new Edit Add Section
sect_dup Edit Duplicate Section
sect_cha Edit Change Section
sect_remove Edit Remove Section
sect_move Edit Move Section
sect_xfr Ecti Get Section (not yet released), library transfer in
sect_put Edit Put Section (not yet released), library transfer out
Similar edit functions for fixel, product and position, and also grouped objects gondola, department and aisle.

### Extra draw functions:

dim_open_depth draws dimensions for open shelf depth
dim_fixel_height draws fixel height
dim_fixel_width draws fixel widths
draw_grille draws a grille on an open shelf
dim_grille draws dimensions on a grille
draw_traffic_arrow draws arrow showing traffic direction for a section
draw_all_pegs draws all pegs on a pegboard
draw_peg draws one peg on a product
draw_peg_on_front draws the peg hole position on the front of a product
draw_spacer draws a spacer between products on an open shelf

### Analysis functions:

locinfo cursor position
unload_all Analysis Unload products
remove_unused Analysis Remove unused products
forcem Analysis Force minimum
propdist Analysis Proportional fill
autoprice autopricing function (NYI)
reqinfo Analysis Recommended--shows recommended inventory
optiquery Evaluates inventory summary (NYI)
hilite Analysis Highlight

### LIVE (raster) related functions:

makelivefile Generates a LIVE file for the current section

### The preferred space management system specific file functions:

fiload File Load
filmerge File Merge
filupdate File update From
F_s3bds for invoking a BDS through the preferred space management system from a macro

### Built-in SPACEMAN II BDT functions:

s2bdt_init
s2bdt_read
s2bdt-fmtread
s3bdt_close

### TABLE V

### Features Advantageously Employed in the Space Management System

The features listed in this section reflect those features which may advantageously be used in the preferred space management system applications program in conjunction with the Operating Environment. This section gives those skilled in the art a listing of features which are desirable in a space management system. Those accustomed to using another space management system may make use of the transferability of a variety of features from existing applications programs, in addition to those applications programs which can be specifically designed for operation in conjunction with the Operating Environment. Those skilled in the art have the ability, based on the present description, to design and implement space management programs which are either derived from existing applications programs with desirable features or which are developed independently.

### Fixturing

### Automatic shelf placement

The placement of a shelf on the section once its details have been entered can be automated based on the placement of other previously placed shelves and the merchandising space they need.

### Shelf placement by notch number

The placement of a shelf on the section can alternatively be based vertically on a user entered notch number, the number being:
a) The number of notches from the floor
b) The number of notches below the next highest shelf

### Subsections

The section can be split up horizontally into subsections by the entry of subsection lengths in the section record. These can be used for:
a) The display of vertical subsection lines
b) The graphical display of just one subsection
c) The automatic placement of shelves (see above)

### Store walls

Construction aids to allow the easy construction of walls in a store floorplan

### Products

### Product lists

Product lists implemented as viewers showing the same fields as may have been present in known space management systems

### Find in model

A function to find and move to (in the section display) the current product in the product list

### Description redefinitions

Certain descriptive product fields (usually named DESC A to DESC J) can have their names changed on a central screen, after which any product lists or charts (or any other screens which show the names of these fields) will show the redefined field names instead. This is accomplished by a global change to all relevant viewers.

### Single product update from data base

Update all fields of a product by a user's entry of only an identifier such as a UPC number

### Positioning of products on shelves

### Drawing of shelf/position peripherals

Certain specific features of certain products/shelves not handled by the automatic drawing functions of the Operating Environment can be drawn by specific draw functions. These include the drawing of:
a) Pegs on pegboards
b) Spacers on shelves
c) Grilles on the front of shelves

### Block add

The placement of a group of products on a shelf can be done at one time by:
a) Choosing them from the list of products
b) Selecting criteria based on certain product fields

### Proportional fill

When a shelf is not full, a proportional fill algorithm can add more facings of some or all of the existing products to fill up the shelf, while still keeping them in proportion as much as possible.

### Force minimum

This function will remove facings from some or all products on a shelf, leaving only the minimum number of facings required by the inventory calculation system.

### Flip/mirror

This function will reverse the order of products on shelves, and if required reverse the horizontal placement of the shelves also.

### Unload

This function removes all products from all shelves on the section, leaving the product list intact.

### Highlighting

This function changes the labeling or color of products on the screen so as to highlight them, based on user entered criteria including:
a) Best/worst performing products
b) Over and/or understocked products
c) Products matching certain user entered fields

### Summarize product

This function will summarize all products into one or more "average" products for use in a general store level analysis.

### Units/block mode display

By using different viewers, products on shelves can be displayed as a whole or as separate units.

### Labeling

Product labeling can be controlled customized by using the Operating Environment's viewer and formula system.

### Right-justification

Products can be made to group towards the right of a partially filled shelf instead of the left as is usual.

### Automatic shelf/pos window

When pointing to a product/shelf the system can automatically display a window with details of that shelf/position in a corner of the screen whenever the cursor is not moved for a short period of time.

### Fill/no-fill/manual placement

These are overall placement options for a shelf:
a) No fill--normal but adjust all products to the right or left
b) Fill--automatically do a Proportional Fill after each placement
c) Manual--place products exactly where specified with no adjustment

### Find next product

Finds the next occurrence of the same product in the section if there is one

### Evaluation screen

Displays overall current financial statistics

### Recommended screen

Shows the recommended inventory for the current product

### Data Management

### Spaceman II file connection Implemented as a BDT

### DXF Autocad output

Output to a standard CAD system .DXF file implemented as a BDT

### Output

### Section dimensions

Peripheral drawing functions added to viewers for drawing dimension information on:
a) Shelves
b) The whole section
c) Pegs
d) Shelf grilles
e) Traffic flow direction

### LIVE file

Output of a file specifically for use in the Logistics raster image storage/printing systems

### Drivers for other screens

Output devices implemented for popular graphics screens:
a) EGA
b) EVGA
c) Targa

### V. Conclusion

While various details of the preferred embodiment of the preent invention have been described above, it is to be understood that the above detailed description has been presented by way of example, and not limitation. Thus, the breadth and scope of the present invention should not be limited by the features described above, but should be defined only in accordance with the following claims and their equivalents.

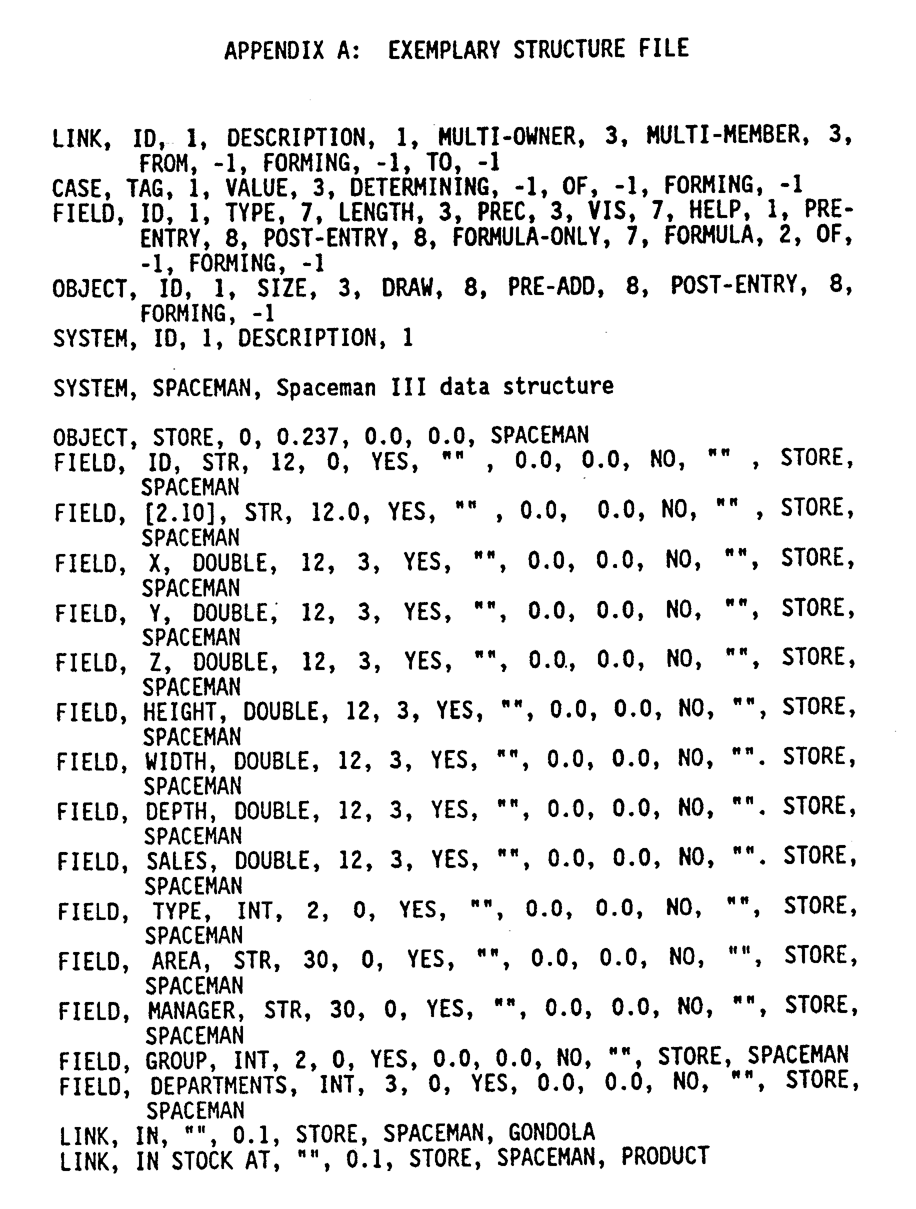

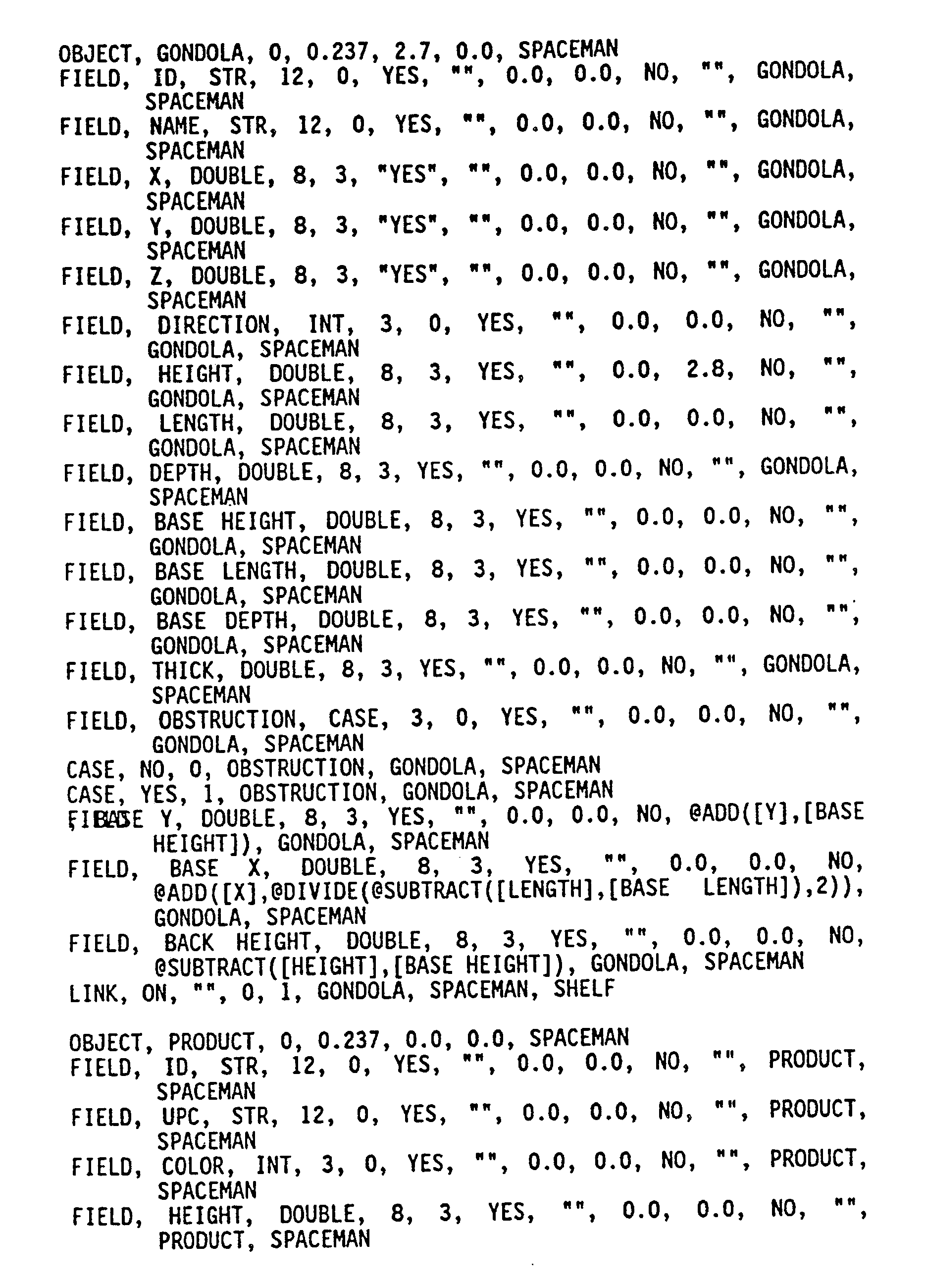

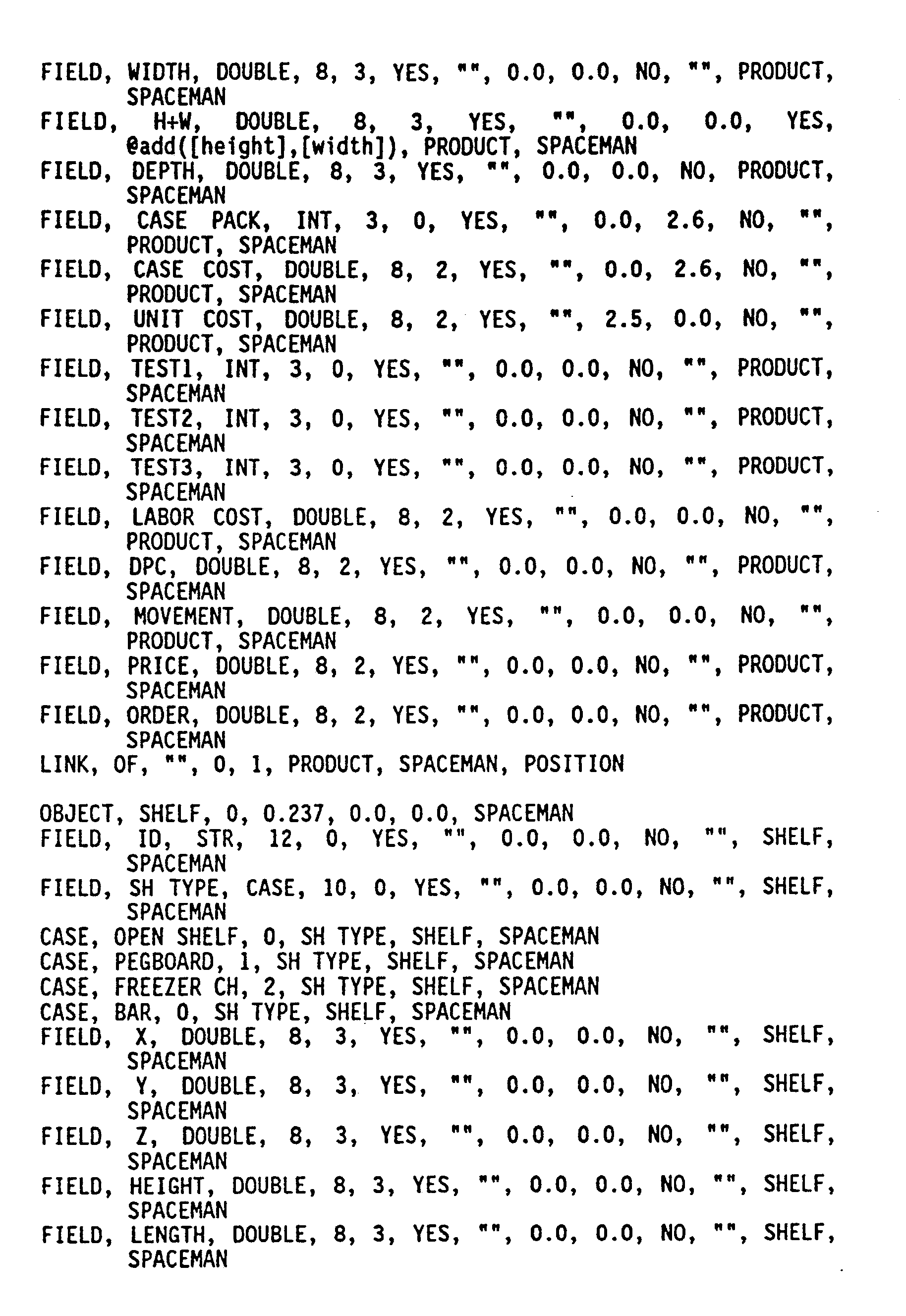

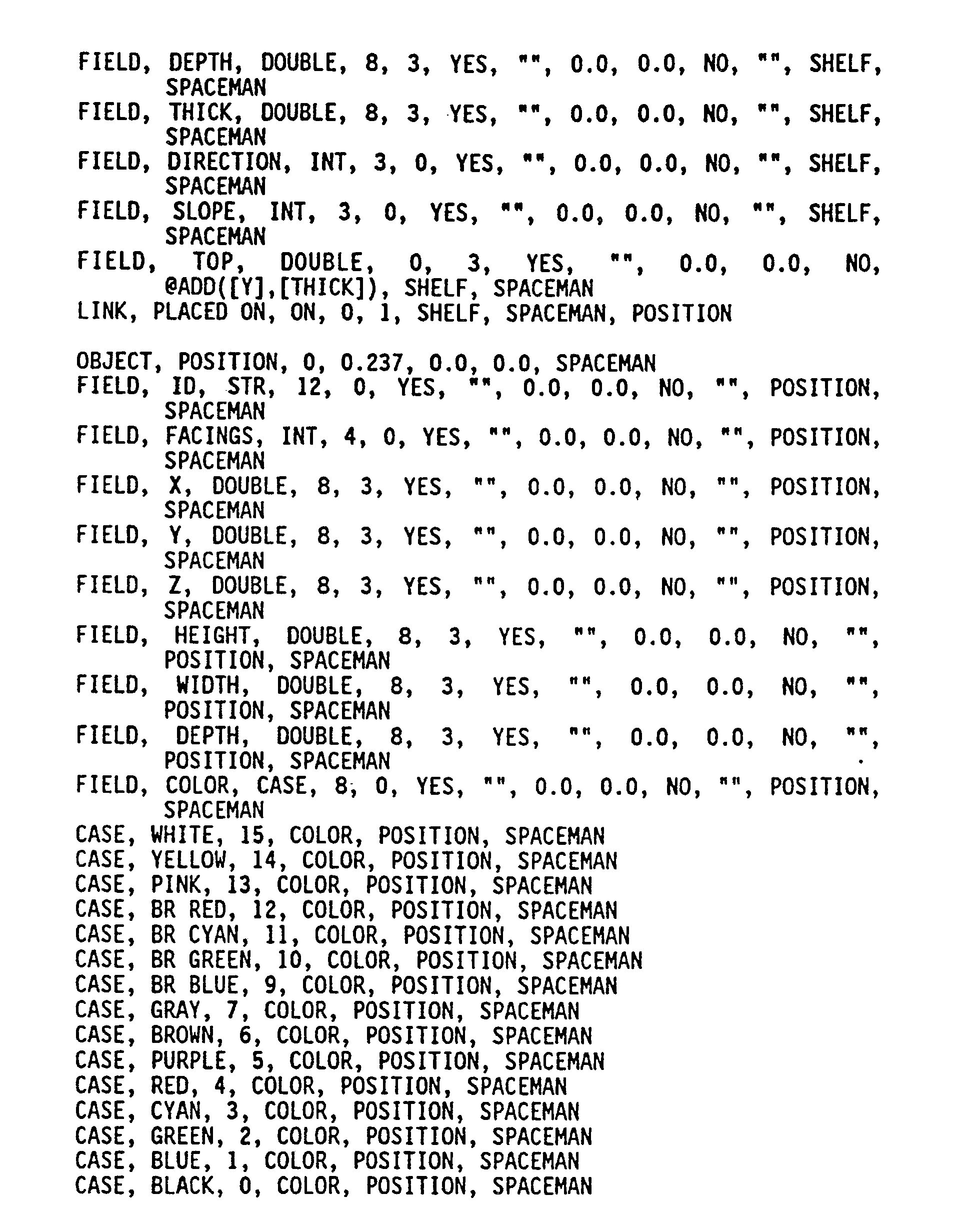

### Explanation of the Exemplary Structure File

Appendix A illustrates a typical structure file. Advantageously, the structure file may be named with a ".str" suffix on the name of the applications program. For purposes of clarity, quotation marks have been omitted from the textual specifications, except where a textual field is totally empty (""). Also, spaces have been inserted between object listings, so as to more clearly delimit the different sections of the structure file specifications.

Referring to Appendix A, a workable format for a structure file is displayed. Many variations on the structure file of Appendix A may be made, while still remaining within the scope of the present invention. However, any structure file workable with the present invention should contain a specification of object, fields contained therein, and links between the objects. Additional features, rearrangements, and improvements may be made, provided some definition of structure is present on which the applications program may operate.

This is exemplary of the structure files which are treated as ordinary data files which follow the "Merge" transfer path in the Batch Data System (**FIG. 11**) during the loading/aggregating process (**FIGS. 5** and **5A**).

Referring to the first few lines before the blank line in the structure file, the general definition of the format of links, cases, fields, objects, and the system are provided. All of the remaining portion of the remaining structure file (after the first blank line) includes the actual definition of the particular fields, links, and cases within the objects. Each of these objects, fields, links, and cases follow the general format defined in the top few lines of the file. Of course, this arrangement need not be followed in all embodiments of the invention. However, the illustrated organization of a structure file has been found effective.

To illustrate how the format of entries in the body of the structure file follow the definitions at the top of the structure file, it can be seen that in the line immediately following the first blank line, the word "system" corresponds to the word "system" immediately before the blank line. The word "Spaceman" (abbreviation for SPACE MANager applications program from Logistics Data Systems, Inc., of Irving, Texas) corresponds to the "ID" field in the definition. The number "1" means the field "ID" is of type "character string."

Finally, corresponding to the "description" field is the term "Spaceman III data structure" title.

In the preferred embodiment, each object is first specified by declaring an object and naming it with an "ID" of, for example, "store". This particular example can be seen in the line after the second blank line in the structure file.

Following declaration of the object are several field definitions. The object "store" is shown in Appendix A as having **14** fields. One line is allocated for each field of the object "store".

Following the **14** field declarations are two link definitions.

There are no "case" specifications under object "store". However, the object "gondola" does have fields which have "case" specifications. In the field whose "ID" is "obstruction", the third field is seen to be "case". (Previous fields in the object gondola had a "type" of either string ("str"), double precision ("double"), or integer ("int"). But because the field "obstruction" has a type "case", two "case" specifications follow the "obstruction" field specification. The two cases have "tags" which are either "no" or "yes".

Following is a brief description of the format presented in the first few lines of the exemplary structure file shown in Appendix A.

### LINK

ID. A unique self-explanatory character string showing the relationship between the two objects it links.
DESCRIPTION: A longer version of ID, not necessarily unique, to be displayed for the user.
MULTI-OWNER: Specifies whether or not this link has multiple owners.
MULTI-MEMBER: Specifies whether or not this link has multiple members.
FROM: Specifies the "owner" object.
FORMING: A link back to the name of the overall structure of which this is a part.
TO: Specifies the object at the "member" end of the link.

### CASE

TAG: The name corresponding to a particular value.
VALUE: Specifies a numeric value stored internally corresponding to the "tag".
DETERMINING: Specifies the field ID which has the "case" type field.
OF: Link back to the object.
FORMING: A link back to the name of the overall structure of which this is a part.

### FIELD

ID: The name of the field.
TYPE: Specifies the field type (such as string, floating point, and so forth).
LENGTH: **1**) String--length of string; 2) Numeric--how many characters to normally show in the decimal representation.
PREC: How many decimal places to normally show in the decimal representation.
VIS: Visible to the user or entirely hidden.
HELP: Reference to a help message which explains the meaning of this field.
PRE-ENTRY: Function called before editing a field.
POST-ENTRY: Function called after editing a field.
FORMULA-ONLY: Whether or not this field is stored in the record, or is simply calculated from the formula every time it is needed.
FORMULA: Formula for field (if present) based on other fields.
OF: Reference to object.
FORMING: Reference to overall structure.

### OBJECT

ID: Name of the object. objects it links.
SIZE: How big a record of this object is--calculated internally based on fields/links.
DRAW: Default drawing function for this object.
PRE-ADD: Function called before a new record of this object type is added.
POST-ENTRY: Function called after a new record of this object type has been added or changed.
FORMING: Reference to structure of which this object is a part.

### SYSTEM

Overall name of the structure.

With the above description of an exemplary preferred structure file for an applications program commonly used with the Operating Environment according to the preferred embodiment of the present invention, those skilled in the art will be able to practice the invention, including the loading, aggregation, conflict-resolution of structures from different applications programs. Also, the means by which structure files are loaded and aggregated, with conflict resolution, within the Batch Data System according to the preferred embodiment, is hereby enabled.

## Claims

1. A method for concurrently executing one or more applications programs, said applications programs having a variety of different data structures, comprising the steps of:
detecting the presence or absence of field conflicts between fields defined in data structures defined in the applications programs;
resolving said conflicts in the event of their detected presence;
aggregating the data structures defined in the various applications programs into a common data structure; and
executing an aggregate applications program comprising the plurality of applications programs, said aggregate applications program using said common data structure so that data formed within said common data structure is concurrently accessible by functions from said one or more applications programs.

2. The method of claim 1, wherein:
said executing step comprises the display of images of physical objects.

3. The method of claim 1, therein the detecting, resolving, and aggregating steps collectively comprise:
iteratively loading, and cumulatively aggregating, structures from the one or more applications programs.

4. The method of claim 3, wherein each iteration of the iteratively loading step, and each cumulative aggregation of the cumulatively aggregating step, comprise an iteration of a data transfer process comprising:
1) determing a data transfer type to be of a "merge" type, the "merge" type data transfer comprising the specification of:
a) a "direction" flag indicating the direction of the transfer is to be from an external data store into a destination file,
b) an "add" flag indicating that data existing in the destination file is not erased, and
c) a "not only update" flag indicating that incoming records update pre-existing records regardless of whether the incoming records' keys match the keys of the pre-existing data records;
2) initializing a channel to the source of a current applications program;
3) executing a "read format" routine to determine an initial expected structure for the transfer;
4) determining additional specifications by which the records of incoming data records are filtered;
5) executing a "data read" routine to transfer the records of the current applications program along the channel in accordance with the flags, and in accordance with the initial expected structure as modified by the additional specifications;
6) closing the channel to the source of the current applications program; and
7) pre-calculating any formula-based fields which may be present in records in the destination file.

5. The method of claim 4, wherein the step of determining additional specifications comprises:
interacting with a user to receive or form the additional specifications.

6. The method of claim 4, wherein:
said initializing, "read format", and closing steps comprise performing said respective initializing, "read format", and closing steps substantially within a device-specific BDT software module which is connected to one of a number of high-level BDS software modules to which the BDT module may be flexibly interconnect;
said "data read" step comprises executing the "data read" routine by iteratively transferring control between the BDT software module and the BDS software module to which it is connected; and
said step of determining additional specifications comprises determining additional specifications while maintaining program control substantially within the BdS module to which the BDT module is connected.

7. The method of claim 4, wherein the step of executing a "data read" routine comprises executing a record loop, entered for each record of an incoming file, the record loop comprising:
1) retrieving an object name for the current record;
2) checking the object against a table of required objects, and terminating the current iteration of the record loop if the current record is not required;
3) allocating space as needed for the incoming current record;
4) looping in a field loop, each iteration of the field loop comprising the steps of:
a) retrieving a field value for the current field:
b) checking the field value against criteria in a table, and terminating the current iteration of the record loop if the current field does not meet the criteria;
c) determining whether a field is required internally, and terminating this iteration of the field loop if it is not required internally;
d) translating any fields values into fields of a different type, if necessary;
e) transferring the field value along the channel;
f) if the field is a "link" field, adding the link to a tree so as to trace the placement of the record with respect to a structure which accumulates with successive iterations of the record loop; and
g) terminating the current iteration of the field loop, and returning to the top of the field loop only if there are additional fields in the record after the current field;
5) performing an end-of-record cleanup routine; and
6) terminating the current iteration of the record loop, and returning to the top of the record loop only if there are additional records after the current record.

8. The method of claim 7, wherein:
the steps of retrieving an object name and retrieving a field value comprise performing said respective retrieving steps substantially within a device-specific BDT software module which is connected to one of a number of high-level BDS software modules to which the BDT module may be flexibly interconnected.

9. The method of claim 7, wherein the step of checking the field value against criteria comprises:
comparing the field value to a predetermined value to determine whether the field value is equal to, greater than, or less than the predetermined value.

10. The method of claim 7, wherein the step of checking the field value against criteria comprises:
comparing the field value to a predetermined character string to determine whether the field value is identical to, or not identical to, the predetermined character string.

11. The method of claim 7, wherein the step of performing an end-of-record cleanup routine comprises:
1) checking final criteria after all fields have been processed, and terminating the current iteration of the record loop if the current field does not meet the final criteria;
2) filling in as many spaces in the tree as possible, based on incoming records;
3) filling in any remaining spaces with surrogates so as to tentatively connect the record to the internal data structure;
4) checking a record key to determine whether or not the present record is a duplicate record;
a) in the event of the determination that this is a duplicate record, determining whether the original record is a surrogate;
i) in the event of the determination that the original record is not a surrogate, executing a duplicate handling routine and connecting the new record to the internal data structure;
ii) in the event of the determination that the original record is a surrogate, overwriting the surrogate and connecting the new record to the internal data structure;
b) in the event of the determination that this is not a duplicate record, based on the status of the "update" flag, selectively
i) connecting the new record to the internal data structure; or
ii) ignoring the incoming record; and
5) exiting the end-of-record cleanup routine.

12. The method of claim 11, wherein the step of filling in spaces comprises:
fitting the incoming object record into the tree at the user's present location in the tree.

13. The method of claim 11, wherein the step of filling in spaces comprises:
fitting the incoming object record into the tree into the same location as the most recently transferred object record was fit.

14. The method of claim 11, wherein the execution of a duplicate handling routine comprises:
overwriting the old record with the new record, so that even unduplicated fields are overwritten.

15. The method of claim 11, wherein the execution of a duplicate handling routine comprises:
overwriting only those fields of the old record which are new, so that unduplicated fields are not overwritten.

16. The method of claim 11, wherein the execution of a duplicate handling routine comprises:
ignoring the new record, so that the old record is left unchanged.

17. The method of claim 11, wherein the execution of a duplicate handling routine comprises:
changing the key of the new record so that it is no longer a duplicate of the old record.

18. A method of transferring a block of data using an activated one of a set of high-level BDS software modules flexibly interconnected with an activated one of a set of device-specific BDT software modules for interfacing with a chosen data store, said method comprising the steps of:
determining a transfer type;
choosing which among the data stores is to be involved in the transfer;
initializing a channel between the activated BDT software module and the chosen data store, said initialization performed substantially within the activated BDT software module;
determining, based on specifications from the activated BDS software module, which objects and fields to transfer;
transferring the data between the chosen data store and CPU memory, in which control is passed iteratively between the activated BDS software module and the activated BDT software module; and
closing the data channel between said BDT software module and said data store.

19. The method of claim 18, further comprising the step of:
precalculating formula-based fields in the event of a transfer into CPU memory.

20. The method of claim 18, wherein said determining step comprises:
interacting with a user to produce additional specifications about objects, fields, and field criteria, so as to further govern the characteristics of the data transfer.

21. The method of claim 18, wherein said transferring step is a "load" transfer comprising the steps of:
erasing all pre-existing data in CPU memory; and
tranferring in new data in accordance with said specifications from the chosen data store.

22. The method of claim 18, wherein said transferring step is a "merge" transfer comprising steps of:
retaining, at least temporarily, any data preexisting in CPU memory; and
transferring data in accordance with said specifications from said chosen data store into CPU memory, said tranferring step including the transfer of records regardless of whether or not key identifiers of incoming records match those of records which preexist in CPU memory.

23. The method of claim 18, wherein said transferring step ios an "update from" transfer which comprises the steps of:
retaining, at least temporarily, any data preexisting in CPU memory; and
transferring data in accordance with said specifications from the chosen data store into CPU memory, but wherein records having key identifiers not matching those key identifiers of records in CPU memory are ignored.

24. The method of claim 18, wherein said transferring step is an "update to" transfer which comprises the steps of:
retaining, at least temporarily, any data preexisting in the chosen data store; and
transferring data in accordance with said specifications from CPU memory into the chosen data store, but wherein records having key identifiers not matching those key identifiers of records in the chosen data store are ignored.

25. The method of claim 18, wherein said transferring step is a "save" transfer which comprises the steps of:
erasing any pre-existing data in a destination file at the chosen data store; and
transferring data in accordance with said specifications from CPU memory to said data store.

26. The method of claim 18, wherein the determining, choosing, initializing, determining, transferring, and closing steps collectively comprise:
iteratively loading, and cumulatively aggregating, structures from the block of data.

27. The method of claim 26, wherein each iteration of the iteratively loading step, and each cumulative aggregation of the cumulatively aggregating step, comprise an iteration of a data transfer process comprising:
1) determining a data transfer type to be of a "merge" type, the "merge" type data transfer comprising the specification of:
a) a "direction" flag indicating the direction of the transfer is to be from an external data store into a destination file,
b) an "add" flag indicating that data existing in the destination file is not erased, and
c) a "not only update" flag indicating that incoming records update pre-existing records regardless of whether the incoming records' keys match the keys of the pre-existing data records;
2) initializing a channel to the source of the block of data;
3) executing a "read format" routine to determine an initial expected structure for the transfer;
4) determining additional specifications by which the records of incoming data records are filtered;
5) executing a "data read" routine to transfer the records of the block of data along the channel in accordance with the flags, and in accordance with the initial expected structure as modified by the additional specifications;
6) closing the channel to the source of the block of data; and
7) pre-calculating any formula-based fields which may be present in records in the destination file.

28. The method of claim 18, wherein said transferring step comprises a "data write" routine comprising the following steps:
1) looping in an inner record loop to determine if criteria for records are met, returning to the top of the record loop if the record does not meet the criteria, and exiting the record loop if the record meets the criteria;
2) looping in a field loop, each iteration of which comprises:
a) translating a field value of the current field to a type required by the chosen data store;
b) passing the value of the field to a device-specific BDT data transfer module;
c) initializing the BDT data transfer module in the event that this is the first record to pass through the field loop;
d) outputting the field to the external data store; and
e) returning to the beginning of the field loop only if there are more fields in the record to be transferred; and
3) returning to the inner record loop only if there are more records to be transferred.

29. The method of claim 28, wherein:
the initializing and outputting steps comprise performing the initializing and outputting steps substantially within the activated BDT software module.

30. A method of loading a structure file defining objects, fields and links, using an activated one of a set of high-level BDS software modules flexibly interconnected with an activated one of a set of device-specific BDT software modules for interfacing with a chosen data store, said method comprising the steps of:
initializing a channel between the activated BDT software module and the chosen data store, said initialization performed substantially within the activated BDT software module;
transferring the structure file from the chosen data store and CPU memory, in which control is passed iteratively between the activated BDS software module and the activated BDT software module; and
closing the data channel between said BDT software module and said data store.

31. A system for concurrently executing one or more applications programs, said applications programs having a variety of different data structures, comprising:
a detector for detecting the presence or absence of field conflicts between fields defined in data structures defined in the applications programs;
a resolver for resolving said conflicts in the event of their detected presence;
an aggregator for aggregating the data structures defined in the various applications programs into a common data structure; and
a processor for executing an aggregate applications program comprising the plurality of applications programs, said aggregate applications program using said common data structure so that data formed within said common data structure is concurrently accessible by functions from said one or more applications programs.

32. The system of claim 31, further comprising:
a display for displaying images of physical objects.

33. The system of claim 31, wherein the detector, resolver, and aggregator collectively comprise:
means for iteratively loading, and cumulatively aggregating, structures from the one or more applications programs.

34. The system of claim 33, wherein the means for iteratively loading and cumulatively aggregating comprise a means for data transfer comprising:
1) means for determining a data transfer type to be of a "merge" type, the "merge" type data transfer comprising the specification of:
a) a "direction" flag indicating the direction of the transfer is to be from an external data store into a destination file,
b) an "add" flag indicating that data existing in the destination file is not erased, and
c) a "not only update" flag indicating that incoming records update pre-existing records regardless of whether the incoming records' keys match the keys of the pre-existing data records;
2) means for initializing a channel to the source of a current applications program;
3) a "read format" routine to determine an initial expected structure for the transfer;
4) means for determining additional specifications by which the records of incoming data records are filtered;
5) a "data read" routine to transfer the records of the current applications program along the channel in accordance with the flags, and in accordance with the initial expected structure as modified by the additional specifications;
6) means for closing the channel to the source of the current applications program; and
7) means for pre-calculating any formula-based fields which may be present in records in the destination file.

35. The system of claim 34, wherein the means for determining additional specifications comprises:
means for interacting with a user to receive or form the additional specifications.

36. The system of claim 34, wherein the "data read" routine comprises a record loop, executed for each record of an incoming file, the record loop comprising:
1) means for retrieving an object name for the current record;
2) means for checking the object against a table of required objects, and for terminating the current iteration of the record loop if the current record is not required;
3) means for allocating space as needed for the incoming current record;
4) a field loop, comprising:
a) means for retrieving a field value for the current field;
b) means for checking the field value against criteria in a table, and for terminating the current iteration of the record loop if the current field does not meet the criteria;
c) means for determining whether a field is required internally, and for terminating this iteration of the field loop if it is not required internally;
d) means for translating any fields values into fields of a different type, if necessary;
e) means for transferring the field value along the channel;
f) means, if the field is a "link" field, for adding the link to a tree so as to trace the placement of the record with respect to a structure which accumulates with successive iterations of the record loop; and
g) means for terminating the current iteration of the field loop, and for returning to the top of the field loop only if there are additional fields in the record after the current field;
5) an end-of-record cleanup routine; and
6) means for terminating the current iteration of the record loop, and for returning to the top of the record loop only if there are additional records after the current record.

37. The system of claim 36, wherein the means for checking the field value against criteria comprises:
means for comparing the field value to a predetermined value to determine whether the field value is equal to, greater than, or less than the predetermined value.

38. The system of claim 36, wherein the means for checking the field value against criteria comprises:
means for comparing the field value to a predetermined character string to determine whether the field value is identical to, or not identical to, the predetermined character string.

39. The system of claim 36, wherein the means for performing an end-of-record cleanup routine comprises:
1) means for checking final criteria after all fields have been processed, and for terminating the current iteration of the record loop if the current field does not meet the final criteria;
2) means for filling in as many spaces in the tree as possible, based on incoming records;
3) means for filling in any remaining spaces with surrogates so as to tentatively connect the record to the internal data structure;
4) means for checking a record key to determine whether or not the present record is a duplicate record;
a) means, in the event of the determination that this is a duplicate record, for determining whether the original record is a surrogate;
i) means, in the event of the determination that the original record is not a surrogate, for executing a duplicate handling routine and connecting the new record to the internal data structure;
ii) means, in the event of the determination that the original record is a surrogate, for overwriting the surrogate and connecting the new record to the internal data structure;
b) means, in the even of the determination that this is not a duplicate record, based on the status of the "update" flag, for selectivity
i) connecting the new record to the internal data structure; or
ii) ignoring the incoming record; and
5) means for exiting the end-of-record cleanup routine.

40. The system of claim 39, wherein the means for filling in spaces comprises;
means for fitting the incoming object record into the tree at the user's present location in the tree.

41. The system of claim 39, wherein the means for filling in spaces comprises:
means for fitting the incoming object record into the tree into the same location as the most recently transferred object record was fit.

42. The system of claim 39, wherein the duplicate handling routine comprises:
means for overwriting the old record with the new record, so that even unduplicated fields are overwritten.

43. The system of claim 39, wherein the duplicate handling routine comprises:
means for overwriting only those fields of the old record which are new, so that unduplicated fields are not overwritten.

44. The system of claim 39, wherein the duplicate handling routine comprises:
means for ignoring the new record, so that the old record is left unchanged.

45. The system of claim 39, wherein the duplicate handling routine comprises:
means for changing the key of the new record so that it is no longer a duplicate of the old record.

46. A system for transferring blocks of information to and from a variety of data stores of varying structure, the system comprising:
one or more high-level BDS software modules for specifying transfer characteristics; and
one or more device-specific BDT software modules, each flexibly interconnectible with any of said BDS software modules, for interfacing to respective ones of the data stores.

47. The system of claim 46, wherein an activated BDS software module and an activated BDT software module are connected so as to transfer data between one portion of CPU memory and another portion of CPU memory.

48. The system of claim 31, wherein the system including the BDS software modules and the BDT software modules further comprises:
means for iteratively loading, and cumulatively aggregating, structures from the one or more applications programs.

49. The system of claim 48, wherein the means for iteratively loading and cumulatively aggregating comprise a means for transferring the block of data, comprising:
1) means for determining a data transfer type to be of a "merge" type, the "merge" type data transfer comprising the specification of:
a) a "direction" flag indicating the direction of the transfer is to be from an external data store into a destination file,
b) an "add" flag indicating that data existing in the destination file is not erased, and
c) a "not only update" flag indicating that incoming records update pre-existing records regardless of whether the incoming records' keys match the keys of the pre-existing data records;
2) means for initializing a channel to the source of a current applications program;
3) a "read format" routine to determine an initial expected structure for the transfer;
4) means for determining additional specifications by which the records for incoming data records are filtered;
5) a "data read" routine to transfer the records of the block of data along the channel in accordance with the flags, and in accordance with the initial expected structure as modified by the additional specifications;
6) means for closing the channel to the source of the block of data; and
7) means for pre-calculating any formula-based fields which may be present in records in the destination file.

50. The system of claim 31, wherein:
said BDS software modules each comprise:
1) an inner record loop comprising means for determining if criteria for records are met, returning to the top of the record loop if the record does not meet the criteria, and exiting the record loop if the record meets the criteria;
2) in a field loop, the following means:
a) means for translating a field value of the current field to a type required by the chosen data store;
b) means for passing the value of the field to a device-specific BDT data transfer module; and
c) means for returning to the beginning of the field loop only if there are more fields in the record to be transferred; and
3) means for returning to the beginning of the record loop to process a new record only if there are more records to be transferred; and
said BDT softwasre modules each comprise:
1) means for initializing the BDT data transfer module in the event that this is the first record to pass through the field loop; and
2) means for outputting the field to the external data store.

51. A system for loading a structure file from a data store defining objects, fields and links, comprising:
an activated one of a set of high-level BDS software modules flexibly interconnected with
an activated one of a set of device-specific BDT software modules for interfacing with a chosen data store;
an initializing module located substantially within the activated BDT software module for initializing a channel between the activated BDT software module and the chosen data store; transferring modules for transferring the structure file from the chosen data store and CPU memory, in which control is passed iteratively between the activated BDS software module and the activated BDT software module; and
a closing module for closing the data channel between said BDT software module and said data store.
